# EUROPÄISCHE PATENTSCHRIFT

(11) **EP 3 431 328 B1**
(45) Veröffentlichungstag und Bekanntmachung des Hinweises auf die Patenterteilung: **16.09.2020**
(21) Anmeldenummer: 18182394.9
(22) Anmeldetag: 09.07.2018
(51) Int. Cl.: H02J 7/00, B60L 53/14, B60L 53/60

(54) **LADEVERFAHREN UND -SYSTEM FÜR ELEKTROFAHRZEUG-DEPOTS**
CHARGING METHOD AND SYSTEM FOR ELECTRIC VEHICLE DEPOTS
PROCÉDÉ ET SYSTÈME DE CHARGEMENT POUR UN DÉPÔT POUR VÉHICULES ÉLECTRIQUES

(30) Priorität: 21.07.2017 DE 102017006856; 20.10.2017 DE 102017009774; 10.11.2017 DE 102017010418; 15.11.2017 DE 102017126806
(43) Veröffentlichungstag der Anmeldung: 23.01.2019
(73) Patentinhaber: EEBC European Electrical Bus Company GmbH, 60549 Frankfurt am Main (DE)
(72) Erfinder: Balensiefen, Tobias, 45529 Hattingen (DE)
(74) Vertreter: Von Rohr Patentanwälte Partnerschaft mbB

(56) Entgegenhaltungen:
- EP-A1- 2 110 923
- EP-A1- 2 751 902
- EP-A1- 3 184 353
- WO-A2-2012/005573
- CN-A- 106 564 399
- Hidde P F Van Heijst ET AL: "Valet Charging: Influence on Load Shifting, Charging Station Utilization and Prioritizing Queues", , 13 June 2016 (2016-06-13), XP055605836, Retrieved from the Internet: URL:https://www.rsm.nl/fileadmin/Images_NE W/ECFEB/Valet_Charging_Influence_on_Load_S hifting__Charging_Station_Utilization_and_ Prioritizing_Queues.pdf [retrieved on 2019-07-16]

## Beschreibung

Die vorliegende Erfindung betrifft das Laden von Akkumulatoren elektrisch antreibbarer Fahrzeuge. Insbesondere betrifft die vorliegende Erfindung das Laden von Akkumulatoren von Fahrzeugflotten wie Omnibusflotten, wie sie im öffentlichen Nahverkehr vorkommen, Zustellfahrzeug-Flotten, wie sie bei Paketdiensten und Kurierdienstleistern vorkommen und sonstigen Fahrzeugflotten wie die eines Carsharing-Services oder eines Autovermieters. Insbesondere betrifft die vorliegende Erfindung ein Verfahren und ein System zum Laden von Akkumulatoren elektrisch antreibbarer Fahrzeuge sowie eine diesbezügliche Verwendung, insbesondere für Depots mit zahlreichen Ladepunkten.

Elektrisch antreibbare Fahrzeuge im Sinne der vorliegenden Erfindung - im Folgenden auch kurz Elektrofahrzeuge genannt - sind solche, die mit einem Elektromotor bewegt, also angetrieben werden können. Hierzu weisen elektrisch antreibbare Fahrzeuge Akkumulatoren, also Energiespeicher zum Zwischenspeichern und späteren Abgeben elektrischer Energie auf.

Elektrisch antreibbare Fahrzeuge sind insbesondere reine Elektrofahrzeuge wie Elektroautos, Elektrobusse, Elektromotorräder, Elektroroller oder Elektrofahrräder oder auch sogenannte Plug-In-Hybridfahrzeuge, die neben einem Akkumulator und einen Elektroantrieb wie einem Elektromotor zusätzlich dazu eingerichtet sind, einen anderen Energiespeicher zu nutzen, beispielsweise Kraftstoff in Kombination mit einem Verbrennungsmotor zum direkten Antrieb oder zum Erzeugen elektrischer Energie, Wasserstoff in Kombination mit einer Brennstoffzelle o. dgl.

Den Elektrofahrzeugen im Sinne der vorliegenden Erfindung ist gemein, dass deren Akkumulatoren durch eine vom Elektrofahrzeug getrennte Einrichtung geladen werden können. Verwendet wird hierzu regelmäßig ein externes Ladegerät mit einem Verbindungskabel, das mit dem jeweiligen Elektrofahrzeug verwendet werden kann, um eine elektrische Verbindung zu erzeugen und über diese elektrische Verbindung den Akkumulator mit elektrischer Energie zu versorgen, sodass dieser geladen wird. Grundsätzlich kann ein Ladegerät, wie ein Laderegler oder aufweisend einen Laderegler, auch im Elektrofahrzeug vorgesehen sein oder teilweise im Elektrofahrzeug vorgesehen sein. Ein Ort, an dem ein Ladegerät mit einem Akkumulator verbindbar ist, wird auch Ladepunkt genannt.

Die WO 2013/023701 A1 betrifft in diesem Zusammenhang die Bereitstellung elektrischer Energie für Elektrofahrzeuge, wobei zumindest ein Teil einer für eine Sitzung bereitgestellten elektrischen Energie, der nicht abgerufen wurde, mindestens einer anderen Sitzung bereitgestellt wird, wobei es sich bei der Sitzung beispielsweise um einen Ladevorgang für ein Elektrofahrzeug handelt. Mit anderen Worten wird Ladeleistung von einem Ladegerät an ein anderes Ladegerät transferiert, um den Ladevorgang mit dem anderen Ladegerät zu beschleunigen. Die damit einhergehende Umverteilung von Ladeleistung hat sich zwar als grundsätzlich zweckdienlicher Ansatz gezeigt, mit Zunahme der Anzahl in einem System zur Verfügung stehender Ladegeräte entsteht jedoch schnell eine Komplexität, die schwer handhabbar ist. Dies gilt insbesondere für den Fall, bei dem von zahlreichen Fahrzeugen bzw. deren Akkumulatoren Ladezustände und/oder Reichweiten berücksichtigt werden sollen.

Die EP 3 184 353 A1 betrifft ein Ladesystem für Elektrofahrzeuge, bei dem verschiedene Ladegeräte zusammengeschaltet werden können, so dass Ladeleistung von einem Ladegerät an ein anderes Ladegerät weitergeleitet werden kann. In Abhängigkeit einer "shortfall power" und eines "rank value" wird bestimmt, welche Ladegeräte zur Weiterleitung von Ladeleistung miteinander verschaltet werden.

Die vorliegende Erfindung berücksichtigt Besonderheiten von Systemen mit zahlreichen Ladegeräten zum Laden von Akkumulatoren entsprechend zahlreicher Elektrofahrzeuge. Beispielsweise kann es sich hierbei um eine Anzahl von mehr als neun Ladegeräten, besonders bevorzugt von mindestens 15 oder 20 Ladegeräten handeln. In diesem Zusammenhang entsteht schnell eine Komplexität, die zu unvorhergesehenen Systemzuständen führen kann und damit die Handhabbarkeit, die Höhe der Gestehungskosten und die Zuverlässigkeit beeinträchtigen kann.

Vor diesem Hintergrund ist es Aufgabe der vorliegenden Erfindung, ein Verfahren und ein System zum Laden von Akkumulatoren elektrisch antreibbarer Fahrzeuge sowie eine diesbezügliche Verwendung anzugeben, wodurch ein zuverlässiges Laden von elektrisch antreibbaren Fahrzeugen auch größerer Fahrzeugflotten ermöglicht wird.

Diese Aufgabe wird durch ein Verfahren gemäß Patentanspruch 1, ein System gemäß Patentanspruch 8 oder eine Verwendung gemäß Patentanspruch 11 gelöst. Vorteilhafte Weiterbildungen sind Gegenstand der Unteransprüche.

Ein erster Aspekt der vorliegenden Erfindung betrifft ein Verfahren zum Laden von Akkumulatoren elektrisch antreibbarer Fahrzeuge durch mehrere Ladegeräte. Diese Ladegeräte sind innerhalb einer Gruppe untereinander zur Weitergabe von Ladeleistung koppelbar. Ferner weisen die Ladegeräte jeweils einen Anschluss zum Laden eines der Akkumulatoren - umgangssprachlich Laden eines der Fahrzeuge genannt - auf.

Die Ladegeräte sind jeweils dazu ausgebildet, mindestens einen Akkumulator mit elektrischer Energie zu versorgen, sodass der Akkumulator die elektrische Energie speichert und zum späteren Antrieb, beispielsweise an einen Elektromotor, abgeben kann.

Die Ladegeräte sind unter einander beispielsweise durch elektrische Koppeleinrichtungen koppelbar, wobei koppeln vorzugsweise so zu verstehen ist, dass eine elektrische, insbesondere galvanische, Verbindung hergestellt wird, über die ein elektrischer Strom fließen kann, sodass elektrische Energie transferiert wird. Üblicherweise wird dies durch Schalter und/oder elektrische Leitungen wie Kabel realisiert.

Die Kopplung führt vorzugsweise dazu, dass die Ladeleistung, also ein von einem Ladegerät zum Zwecke des Ladens eines Akkumulators abgegebene elektrische Energie über jedenfalls eine gewisse Zeitspanne transferiert wird. Hierbei wird ein Stromfluss von einem zu einem anderen Ladegerät erzeugt, wobei das andere Ladegerät aufgrund der empfangenen elektrischen Energie den hiermit verbundenen Akkumulator schneller, also in kürzerer Zeit auf einen entsprechenden Ladezustand bringen kann.

Ein Ladegerät wird im Folgenden als "belegtes Ladegerät" bezeichnet, wenn ihm ein nicht vollständig geladener Akkumulator zum Laden zugeordnet, insbesondere hieran angeschlossen ist. Dies bedeutet, ein belegtes Ladegerät befindet sich vorzugsweise in einem Zustand, in dem es elektrische Energie in einen Akkumulator speist, um diesen Akkumulator für eine zukünftige Abgabe elektrischer Energie an den Antrieb des Fahrzeugs vorzubereiten.

Weiter wird im Folgenden ein Ladegerät als "freies Ladegerät" bezeichnet, das zum gegenwärtigen Zeitpunkt nicht unmittelbar einen Akkumulator lädt bzw. mit dessen Anschluss zum Laden eines der Akkumulatoren kein Akkumulator verbunden ist oder dem kein Akkumulator zugeordnet ist. Alternativ ist der mit dem freien Ladegerät verbundene Akkumulator vollständig geladen oder wird aus sonstigen Gründen derzeit nicht geladen. Ein freies Ladegerät ist mit anderen Worten in der Lage, Ladeleistung an andere Ladegeräte abzugeben, insbesondere dadurch, dass lokal am freien Ladegerät keine Ladeleistung oder nicht die vollständige, durch das Ladegerät zur Verfügung gestellte Leistung abgerufen wird.

In dem ersten Aspekt der vorliegenden Erfindung ist den Ladegeräten jeweils eine Priorität zugeordnet. Die Prioritäten sind jeweils in ihrer Höhe unterschiedlich und einmalig. Auf diese Weise können die Ladegeräte einerseits voneinander unterschieden werden, andererseits kann anhand der jeweils unterschiedlichen Prioritäten der Ladegeräte ein Lademanagement der Gruppe oder mehrerer Gruppen von Ladegeräten erfolgen, wie im Folgenden erläutert.

Die jeweiligen Akkumulatoren der Elektrofahrzeuge werden anhand der Prioritäten bestimmten Ladegeräten zugeordnet. Hierbei ist vorgesehen, dass den jeweiligen Akkumulatoren - zeitlich aufeinander folgend - jeweils das freie Ladegerät zugeordnet wird, das unter den freien Ladegeräten die höchste Priorität aufweist. Hierdurch wird das vormals freie Ladegerät zum belegten Ladegerät. Weiter ist Voraussetzung zur Zuordnung der freien Ladegeräte, dass das freie Ladegerät mit der höchsten Priorität zugeordnet wird, das einen verfügbaren Anschluss hat, also zuvor noch nicht zugeordnet worden ist.

Es wird also der Akkumulator eines Elektrofahrzeugs dem Ladegerät mit der höchsten Priorität zugeordnet. Diese Priorität ist eindeutig bestimmbar dadurch, dass alle Prioritäten unterschiedlich und einmalig sind. Der Akkumulator wird vorzugsweise mit dem zugeordneten Ladegerät geladen. Hierzu kann der Akkumulator über den Anschluss des zugeordneten Ladegeräts mit elektrischer Energie versorgt werden.

Die Zuordnung erfolgt (automatisch) insbesondere bei oder durch Eintreffen eines Elektrofahrzeugs bzw. Akkumulators an dem System bzw. in dem Depot für die Elektrofahrzeuge. In einer nicht beanspruchten Variante ist es auch möglich, dass das Ladegerät eine Priorität durch Anschluss des Elektrofahrzeugs erhält. Bevorzugt ist, dass die Ladegeräte bestimmte, vordefinierte und bevorzugt unveränderliche Prioritäten haben. Diese Prioritäten haben durch die Zuordnung auch die zu dem jeweiligen Ladegerät zugeordneten Akkumulatoren bzw. Elektrofahrzeuge.

Wenn bereits Ladegeräte belegt sind, wird automatisch ermittelt, welches Ladegerät ein freies Ladegerät ist, dessen Anschluss zur Verfügung steht, also insbesondere nicht mit einem Elektrofahrzeug bzw. Akkumulator verbunden ist. Ein freies Ladegerät mit verfügbarem Anschluss ist insofern ein Ladegerät, mit dem kein Elektrofahrzeug oder Akkumulator aktuell verbunden ist oder in Kürze verbunden wird bzw. mit dem ein Akkumulator bzw. Elektrofahrzeug verbunden werden kann.

Vorschlagsgemäß wird ferner mindestens ein freies Ladegerät automatisch mit demjenigen der belegten Ladegeräte gekoppelt, dem - innerhalb der belegten Ladegeräte - die höchste Priorität zugeordnet ist. Auf diese Weise stellt das mindestens eine freie Ladegerät seine Ladeleistung (vollständig oder teilweise) dem belegten Ladegerät der höchsten Priorität zur Verfügung. Dieses belegte Ladegerät der höchsten Priorität kann den angeschlossenen Akkumulator bzw. zugeordneten Akkumulator mit der Summe seiner eigenen und der Ladeleistung des mindestens einen freien Ladegeräts laden.

Dadurch, dass das belegte Ladegerät der höchsten Priorität einen Ladevorgang des ihm zugeordneten Akkumulators mit einer folglich vergrößerten Ladeleistung ausführt, kann die Ladezeit verringert werden und das Elektrofahrzeug, dessen Ackumulator mit dem belegten Ladegerät der höchsten Priorität geladen wird, steht möglichst zeitnah bzw. als erster der zu ladenden Akkumulatoren wieder vollständig geladen zur Verfügung.

Das vorschlagsgemäße Verfahren bietet den Vorteil, dass auch bei Systemen zum gleichzeitigen Laden einer Vielzahl von Elektrofahrzeugen einer Fahrzeugflotte die Ladevorgänge mit einem überschaubaren Aufwand und einer gut handhabbaren Komplexität derart erfolgen können, dass die Elektrofahrzeuge schnell wieder vollständig nutzbar sind. Durch die Priorisierung in Kombination mit der Kopplung mehrerer Ladegeräte ist es hierbei in vorteilhafter Weise möglich, zuerst in ein Depot zurückkehrende Elektrofahrzeuge einer Flotte vorrangig zu laden, also mit einer Ladeleistung zu versorgen, die bevorzugt einem mehrfachen der maximalen Ladeleistung des Ladegeräts entspricht, mit dem der Akkumulator des Elektrofahrzeugs verbunden ist. Vermieden wird auch, eine sehr hohe Ladeleistung bzw. entsprechende Hardware in jedem der Ladegeräte zur Verfügung zu stellen, was den Einsatz weniger aufwendiger und kostenintensiver Ladegeräte ermöglicht.

Das vorschlagsgemäße Verfahren verzichtet vorzugsweise auf die Ermittlung eines Akku-Ladezustands und/oder einer zukünftigen Tour für das jeweilige Elektrofahrzeug, da diese Informationen für die Durchführung des vorschlagsgemäßen Verfahrens nicht zwingend benötigt werden. Grundsätzlich ist es jedoch auch nicht ausgeschlossen, solche Informationen zu verwerten und ergänzend zu berücksichtigen. Dennoch ist es ein Vorteil für das vorschlagsgemäße Verfahren, dass dies ohne Berücksichtigung des Akkuladezustands und/oder der Tour für das Elektrofahrzeug zur Bestimmung der Gesamtladeleistung für den jeweiligen Akkumulator bzw. das jeweilige Elektrofahrzeug erfolgt oder erfolgen kann. So hat sich gezeigt, dass es grundsätzlich nicht notwendig ist, den Ladezustand des jeweiligen Akkumulators vorab zu ermitteln, beispielsweise aus dem Fahrzeug auszulesen. Ein entsprechender Auslesevorgang hat sich als aufwendig erwiesen und erfordert Datenschnittstellen, die wiederum fehleranfällig sein können.

Entsprechendes gilt für Tourinformationen einer einem Elektrofahrzeug zugewiesenen Route oder Tour, bei denen sich gezeigt hat, dass diese sich im Regelbetrieb oftmals nachträglich ändern. Ein Beispiel ist hier der Einsatz von Elektrobussen als Schienenersatzverkehr. Unter Berücksichtigung zukünftiger Touren ist ein flexibler Einsatz, beispielsweise zum Schienenersatzverkehr, nicht ohne weiteres möglich, da hiermit ein Ladesystem, wie es zuvor anderweitig vorgeschlagen worden ist, aus dem Tritt geraten kann. Anders sieht das bei dem vorschlagsgemäßen Verfahren aus, denn hier stehen Elektrofahrzeuge prioritätsabhängig bereits frühzeitig vollständig einsatzbereit zur Verfügung und können auch für unvorhergesehene Einsätze problemlos verwendet werden.

Eine Besonderheit des Verfahrens ist es, dass die Steuerung der Ladeleistung ausschließlich auf der Ein- und Ausfahrtsreihenfolge der Elektrofahrzeuge basieren kann. Informationen aus dem laufenden Betrieb sind für das System nicht zwingend erforderlich, können aber als zusätzliche Information zur Verbesserung der Systemperformance optional eingebunden werden.

Das Verfahren wird vorzugsweise mit einem System koppelbarer Ladegeräte durchgeführt, wobei jedenfalls ein Teil der Gesamtzahl der Ladegeräte die Gruppe bilden.

Vorzugsweise weisen die Ladegeräte der Gruppe innerhalb dieser Gruppe jeweils genau zwei benachbarte Ladegeräte auf. Als "benachbarte Ladegeräte" werden diesbezüglich solche Ladegeräte bezeichnet, die untereinander unmittelbar koppelbar sind, um Ladeleistung zu transferieren. Insbesondere bilden die Ladegeräte der Gruppe eine Kette, in der jedes Glied (Ladegerät) der Kette seine Ladeleistung nur entweder selbst verwenden oder innerhalb der Gruppe nur an eines der beiden benachbarten Ladegeräte transferieren kann. Es ist jedoch auch möglich, dass eine bereits transferierte Ladeleistung weitergereicht wird, so dass die Ladeleistung von mehr als drei Ladegeräten in einem der belegten Ladegeräte konzentriert werden kann, um zusammengenommen den angeschlossenen Akkumulator in kürzerer Zeit zu laden.

Es ist bevorzugt, dass die Ladegeräte innerhalb der Gruppe nur mit einem oder beiden benachbarten Ladegeräten gekoppelt werden, derart, dass die Ladeleistung eines freien Ladegeräts einem der benachbarten Ladegeräte oder über eines der benachbarten Ladegeräte einem belegten Ladegerät der Gruppe zur Verfügung gestellt wird oder werden kann.

Mit anderen Worten bilden die Ladegeräte eine Kette und die Ladeleistung eines freien Ladegeräts kann jeweils (nur) über benachbarte Ladegeräte/Kettenglieder - besonders bevorzugt nur eines - weitergegeben werden zu einem belegten Ladegerät, insbesondere dem der höchsten Priorität. Vorzugsweise ist jedoch kein komplexes Netz vorgesehen, bei dem alle Ladegeräte der Gruppe untereinander direkt koppelbar sind. Es hat sich nämlich gezeigt, dass bei einer erhöhten Komplexität aufgrund zahlreicher Ladegeräte der Aufwand den Nutzen einer solchen direkten Koppelbarkeit aller Ladegeräte bei weitem übersteigt. Das vorschlagsgemäße Verfahren bietet hier die Möglichkeit, eine derart hohe Komplexität zu vermeiden und stattdessen mit einer Gruppe kettenartig koppelbarer Ladegeräte zu arbeiten, was auf den ersten Blick die Flexibilität bezüglich der Ladeenergie-Verteilung einzuschränken scheint, in der Praxis jedoch überraschenderweise kaum einen Einfluss auf die Gesamteffizienz hat. Folglich überwiegen hier die Vorteile einer überschaubaren Lösung mit einer geringen Anzahl Komponenten (Kopplungsgliedern und Schnittstellen), was im Ergebnis zu einer sehr robusten Lösung führt.

Wenn in der Gruppe mehrere Ladegeräte belegt sind, ist bevorzugt, dass freie Ladegeräte jeweils derart gekoppelt werden, dass demjenigen der belegten Ladegeräte die Ladeleistung des freien Ladegeräts zur Verfügung gestellt wird, das die höchste Priorität unter den belegten Ladegeräten der Gruppe aufweist und (gleichzeitig) entweder unmittelbar benachbart zu dem freien Ladegerät vorgesehen ist oder ausschließlich durch weitere freie Ladegeräte von dem freien Ladegerät getrennt ist.

Mit anderen Worten ist vorgesehen, dass freie Ladegeräte ihre Ladeleistung an einen Nachbarn weiterleiten oder weiterreichen können, der entsprechend ebenfalls seine und die ihm zur Verfügung gestellte Ladeleistung weiterleiten bzw. weiterreichen kann, jedoch nur bis zum nächstgelegenen belegten Ladegerät in der durch die Gruppe gebildeten Kette.

Ein belegtes Ladegerät wiederum lädt vorzugsweise den Akkumulator, der mit diesem verbunden ist. Wenn dem belegten Ladegerät weitere Ladeleistung zur Verfügung gestellt wird, wird diese Ladeleistung ergänzend zum Laden verwendet.

Die Frage, in welche Richtung innerhalb der Gruppe bzw. Kette die Ladeleistung eines freien Ladegeräts weitergeleitet oder weitergereicht wird, wird hierbei vorzugsweise automatisch anhand der Prioritäten der belegten Ladegeräte entschieden. Auf diese Weise kann erreicht werden, dass das Ladegerät der höchsten Priorität innerhalb der Gruppe seinen, also den mit ihm verbundenen Akkumulator schnell lädt und das Elektrofahrzeug, das mit dem Akkumulator betrieben wird, frühzeitig wieder vollständig zur Verfügung steht.

Wenn die Gruppe mehr als zwei belegte Ladegeräte aufweist, ist es folglich bevorzugt, dass zusätzliche Ladeleistung von freien Ladegeräten zu dem belegten Ladegerät weitergeleitet wird, das die höchste Priorität aufweist. Wenn ein drittes belegtes Ladegerät mangels Weiterleitung von Ladeleistung die unmittelbare oder mittelbare Kopplung eines freien Ladegeräts mit demjenigen Ladegerät der Gruppe mit der höchsten Priorität verhindert, wird die Ladeleistung vorzugsweise (auch) an das belegte Ladegerät mit der zweithöchsten Priorität weitergeleitet.

Mit anderen Worten werden innerhalb der Gruppe vorzugsweise alle freien Ladegeräte jeweils mit demjenigen belegten Ladegerät gekoppelt, das unter denjenigen belegten Ladegeräten, die unmittelbar benachbart/koppelbar oder nur durch freie Ladegeräte von dem belegten Ladegerät getrennt ist, die höchste Priorität aufweist.

In einem weiteren Aspekt der vorliegenden Erfindung ist bevorzugt, dass mindestens zwei oder mehr Gruppen von jeweils untereinander zur Weitergabe von Ladeleistung koppelbaren Ladegeräten vorgesehen sind. Diese Gruppen haben vorzugsweise eine oder mehrere der zuvor beschriebenen Eigenschaften bzw. es wird ein Verfahren wie zuvor beschrieben mit den jeweiligen Gruppen durchgeführt.

Ein Ladegerät jeder Gruppe korrespondiert vorzugsweise zu (genau) einem Ladegerät einer/jeder anderen Gruppe. Auf diese Weise weisen die unterschiedlichen Gruppen vorzugsweise jeweils ein Ladegerät auf, das zu genau einem Ladegerät jeder anderen Gruppe korrespondiert. Dabei ist es nicht zwingend, dass alle Ladgeräte einer Gruppe zu einem Ladegerät einer anderen Gruppe korrespondieren. Insbesondere können in jeder Gruppe einzelne Ladegeräte vorgesehen sein, als zusätzliche "Booster" verwendet werden und keinen Anschluss haben und/oder nicht mit Ladegeräten einer anderen Gruppe koppelbar sind. Diese Booster werden vorzugsweise ausschließlich zur Weiterleitung ihrer Ladeleitung verwendet.

Ferner ist bevorzugt, dass nur unter der Voraussetzung, dass die Ladegeräte zueinander korrespondieren, diese derart miteinander gekoppelt werden oder koppelbar sind, dass die Ladeleistung von mindestens einem der zueinander korrespondierenden Ladegeräte einem anderen oder über ein anderes der zueinander korrespondierenden Ladegeräte zur Verfügung gestellt wird. In diesem Fall ist vorzugsweise jedes Ladegerät mit (genau) 4 Ladegeräten koppelbar, nämlich mit (genau) zwei bzw. den benachbarten Ladegeräten innerhalb derselben Gruppe und mit (genau) zwei korrespondierenden Ladegeräten.

So ist es möglich, dass ein Ladegerät der zueinander korrespondierenden Ladegeräte belegt ist und die hierzu korrespondierenden Ladegeräte anderer Gruppen (teilweise) freie Ladegeräte sind, die dann mit dem belegten der korrespondierenden Ladegeräte gekoppelt werden, so dass die Ladeleistung des einen oder der mehreren freien Ladegeräte an das belegte Ladegerät weitergeleitet oder weitergereicht wird.

Auf diese Weise kann eine gedachte matrixartige Struktur erzeugt werden. Hierbei können einerseits die Ladegeräte derselben Gruppe innerhalb dieser Gruppe lediglich mit den unmittelbar benachbarten Ladegeräten koppelbar sein, gleichzeitig können diese Ladegeräte jedoch auch zwischen korrespondierenden, bevorzugt unmittelbar benachbarten, Ladegeräten der jeweiligen Gruppen koppelbar sein, so dass eine Kopplung innerhalb der Gruppen und innerhalb der korrespondierenden Ladegeräte, im Folgenden Korrespondenzgruppe genannt, möglich ist.

Unter den zueinander korrespondierenden Ladegeräten weist jedes Ladegerät vorzugsweise (ebenfalls) genau zwei benachbarte Ladegeräte auf und ist unter den korrespondierenden Ladegeräten nur genau mit diesen zwei benachbarten Ladegeräten (unmittelbar) koppelbar. Alternativ oder zusätzlich ist vorgesehen, dass ein, mehrere oder alle unter den zueinander korrespondierenden Ladegeräten befindlichen freie Ladegeräte mit demjenigen der belegten Ladegeräte der zueinander korrespondierenden Ladegeräte gekoppelt wird, das die höchste Priorität aufweist.

Mit anderen Worten können also auch die zueinander korrespondierenden Ladegeräte aufgrund der bevorzugten Tatsache, dass innerhalb der Korrespondenzgruppe jeweils nur zwei benachbarte Ladegeräte mit dem jeweiligen Ladegerät koppelbar sind, eine Kette bilden, insbesondere wie bereits im Zusammenhang mit den Gruppen beschrieben.

Auch in diesen Ketten korrespondierender Ladegeräte wird Ladeleistung freier Ladegeräte vorzugsweise zu dem belegten Ladegerät weitergeleitet oder weitergereicht, das die höchste Priorität aufweist.

Ferner ist auch hier bevorzugt, dass die Weiterleitung an das Ladegerät erfolgt, das die höchste Priorität derjenigen belegten Ladegeräte aufweist, die entweder direkt benachbart/koppelbar sind oder durch Weiterleitung mittels benachbarter/koppelbarer freier Ladegeräte unmittelbar erreichbar ist. Eine Weiterleitung über belegte korrespondierende Ladegeräte ist also vorzugsweise nicht vorgesehen oder nicht möglich.

Durch die Kombination der Gruppen mit den jeweils zueinander korrespondierenden Ladegeräten kann also eine gedachte Matrix-Struktur erzeugt werden, die trotz ihrer im Vergleich zu Verbindungen aller Ladegeräte miteinander (Kopplungseinrichtungen zwischen allen Ladegeräten) eine wesentlich geringere Komplexität aufweist, insbesondere bei einer höheren Anzahl von Ladegeräten. Gleichzeitig bietet die Lösung eine ausreichende Flexibilität hinsichtlich der Weiterleitung und Zusammenfassung von Ladeleistungen. Auf diese Weise lassen sich also insbesondere Flotten bzw. Fuhrparks elektrisch antreibbarer Fahrzeuge in sehr robuster und zuverlässiger Weise effektiv und effizient laden.

Vorzugsweise wird die verfügbare Ladeleistung eines freien Ladegeräts automatisch zu dem belegten Ladegerät der höchsten Priorität transferiert. Hierzu kann dasjenige belegte Ladegerät identifiziert werden, was unter den belegten Ladegeräten derselben Gruppe und den belegten Ladegeräten der zu dem freien Ladegerät korrespondierenden Ladegeräte (also derselben Korrespondenzgruppe) die höchste Priorität hat und entweder innerhalb der Gruppe oder innerhalb der zueinander korrespondierenden Ladegeräte (Korrespondenzgruppe) unmittelbar benachbart/koppelbar zu dem freien Ladegerät ist oder nur über weitere freie Ladegeräte - insbesondere derselben Gruppe oder Korrespondenzgruppe - von dem belegten Ladegerät getrennt ist.

Mit anderen Worten kann, bezugnehmend auf die Matrix-Struktur, innerhalb einer als Zeile gedachten Gruppe und einer als Spalte gedachten Korrespondenzgruppe bzw. Menge korrespondierender Ladegeräte, wobei sich die Zeile und die Spalte in einem bestimmten freien Ladegerät treffen, dasjenige belegte Ladegerät identifiziert werden, das die höchste Priorität aufweist und direkt oder über freie benachbarte Ladegeräte mit dem bestimmten freien Ladegerät koppelbar ist, oder gekoppelt wird, sodass die Ladeleistung des freien Ladegeräts dem Ladegerät mit der höchsten Priorität zugeleitet wird.

Ein weiterer, auch unabhängig realisierbarer Aspekt der vorliegenden Erfindung betrifft ein System zum Laden von Akkumulatoren elektrisch antreibbarer Fahrzeuge. Das System weist mehrere, innerhalb einer Gruppe untereinander zur Weitergabe von Ladeleistung koppelbare Ladegeräte auf. Weiter weisen die koppelbaren Ladegeräte jeweils einen Anschluss zum Laden eines der Akkumulatoren auf. Das System ist vorzugsweise zur Durchführung des zuvor erläuterten Verfahrens ausgebildet oder wird hierzu verwendet.

Es ist vorgesehen, dass den Ladegeräten jeweils eine Priorität zugeordnet ist, wobei die Prioritäten jeweils in ihrer Höhe unterschiedlich und einmalig sind.

Ferner ist das System dazu ausgebildet bzw. konfiguriert ist, den Akkumulatoren zeitlich aufeinander folgend jeweils das freie Ladegerät zuzuordnen, das unter den freien Ladegeräten die höchste Priorität aufweist und dessen Anschluss zum Anschließen eines Akkumulators verfügbar ist. Hierdurch wird das vormals freie Ladegerät zum belegten Ladegerät. Die Zuordnung erfolgt in der zeitlichen Folge des Eintreffens der Akkumulatoren bzw. korrespondierender Elektrofahrzeuge, insbesondere in einem vorschlagsgemäßen Depot mit dem vorschlagsgemäßen System. Insbesondere kann das System eine Steuerung/Steuervorrichtung aufweisen, die dazu ausgebildet bzw. konfiguriert ist, den Akkumulatoren zeitlich aufeinander folgend jeweils das freie Ladegerät zuzuordnen, das unter den freien Ladegeräten die höchste Priorität aufweist und dessen Anschluss zum Anschließen eines Akkumulators verfügbar ist

Weiter ist das System bzw. die Steuerung dazu ausgebildet, mindestens ein freies Ladegerät automatisch mit demjenigen der belegten Ladegeräte zu koppeln, dem unter den belegten Ladegeräten der Gruppe die höchste Priorität zugeordnet ist, so dass die Ladeleistung des mindestens einen freien Ladegeräts an das belegte Ladegerät der höchsten Priorität weitergegeben wird. Auf diese Weise wird der an das belegte Ladegerät der höchsten Priorität angeschlossene Akkumulator mit der Summe der Ladeleistungen des belegten Ladegeräts der höchsten Priorität und des mindestens einen freien Ladegeräts geladen bzw. das System/die Steuerung ist/sind hierzu ausgebildet.

Weiter ist bevorzugt, dass die Ladegeräte dieser Gruppe jeweils genau zwei benachbarte Ladegeräte aufweisen und innerhalb der Gruppe nur mit den benachbarten Ladegeräten derart koppelbar sind, dass die Ladeleistung des freien Ladegeräts einem der benachbarten Ladegeräte oder über eines der benachbarten Ladegeräte zur Verfügung gestellt wird oder werden kann.

Weiter ist bevorzugt, dass das System mindestens zwei der Gruppen jeweils untereinander zur Weitergabe von Ladeleistung koppelbarer Ladegeräte aufweist. Hierbei korrespondieren jeweils - insbesondere genau - ein Ladegerät jeder der Gruppen zueinander. Ferner ist bevorzugt, dass Ladegeräte unterschiedlicher Gruppen nur unter der Voraussetzung miteinander koppelbar sind oder gekoppelt werden, dass sie zueinander korrespondieren. Dies kann dadurch erreicht werden, dass entsprechende Einrichtungen zur Herstellung der Kopplung (Kopplungseinrichtungen) unter den Gruppen (Korrespondenzgruppen genannt) lediglich zwischen korrespondierenden Ladegeräten vorgesehen sind. Auf diese Weise kann die Ladeleistung von mindestens einem der zueinander korrespondierenden Ladegeräte einem anderen oder über ein anders der zueinander korrespondierenden Ladegeräte zur Verfügung gestellt werden.

Vorzugsweise ist jedes Ladegerät des Systems genau einer Gruppe zugeordnet bzw. dieser zugehörig. Alternativ oder zusätzlich ist jedes Ladegerät des Systems vorzugsweise genau zu einem Ladegerät einer anderen Gruppe korrespondierend. Im Ergebnis ist also bevorzugt, dass jedes Ladegerät des Systems genau einer Gruppe zugehörig ist, es jedoch mehrere Gruppen gibt und jedes Ladegerät in jeder weiteren Gruppe genau ein korrespondierendes Ladegerät hat. Hierdurch wird die Korrespondenzgruppe gebildet und jedes Ladegerät gehört genau einer Gruppe und genau einer Korrespondenzgruppe an.

Ferner ist bevorzugt, dass eine matrixartige Struktur dadurch gebildet ist, dass die zu einem Ladegerät benachbarten Ladegeräte derselben Gruppe jeweils zu Ladegeräten anderer Gruppen korrespondieren, die benachbart zu dem Ladegerät sind, das zu dem erstgenannten Ladegerät korrespondiert. Betrachtet man also ein Ladegerät und ein hierzu benachbartes Ladegerät, dann sind die zu diesen Ladegeräten korrespondierenden Ladegeräte einer anderen Gruppe ebenfalls benachbart.

Auf diese Weise kann eine netzartige bzw. matrixartige Struktur gebildet werden, insbesondere ein zweidimensionales Netz, bei dem Knoten Ladegeräte und Kopplungseinrichtungen Kanten bilden, wobei die Maschen bevorzugt vier Knoten und vier Kanten aufweisen. Insbesondere im Zusammenhang mit dem vorschlagsgemäßen Verfahren wird so eine überschaubare, strukturierte und gleichfalls effektive Verteilung der Ladeleistung aller im System zur Verfügung stehenden Ladegeräte ermöglicht.

Ein weiterer, auch unabhängig realisierbarer Aspekt der vorliegenden Erfindung betrifft die Verwendung des vorschlagsgemäßen Systems zur Durchführung des vorschlagsgemäßen Verfahrens im Zusammenhang oder in einem Depot bzw. Betriebshof für einen Fuhrpark. Die Verwendung umfasst das Laden von Akkumulatoren elektrisch antreibbarer Fahrzeuge in Abhängigkeit von der Reihenfolge der Ankunft dieser Fahrzeuge im Betriebshof, wobei den Akkumulatoren ankommender Fahrzeuge in der zeitlichen Folge der Ankunft jeweils das freie Ladegerät der höchsten Priorität zugeordnet wird, wodurch es zu einem neu belegten Ladegerät wird.

Bei der vorschlagsgemäßen Verwendung ist bevorzugt, dass das System derart gesteuert wird, dass das neu belegte Ladegerät zum Laden des zugeordneten Ackumulators verwendet wird und dass ein oder mehrere freie Ladegeräte derselben Gruppe automatisch mit dem neu belegten Ladegerät der Gruppe gekoppelt wird/werden.

Alternativ oder zusätzlich umfasst die vorschlagsgemäße Verwendung die automatische Kopplung eines oder mehrerer freier Ladegeräte, die zueinander korrespondieren und unterschiedlichen Gruppen angehören, mit dem neu belegten Ladegerät.

Besonders bevorzugt ist, wie bereits zuvor erläutert, auch bei der Verwendung im Zusammenhang mit dem Depot bzw. Betriebshof, die Kombination der vorgenannten Aspekte.

Weitere Aspekte, Vorteile und Eigenschaften der vorliegenden Erfindung ergeben sich aus den Ansprüchen und der nachfolgenden Beschreibung bevorzugter Ausführungsbeispiele anhand der Zeichnung. Es zeigt:
- Fig. 1: einen Betriebshof mit einem vorschlagsgemäßen System;
- Fig. 2: eine vereinfachte schematische Ansicht des vorschlagsgemäßen Systems mit mehreren Gruppen;
- Fig. 3: eine vereinfachte schematische Ansicht des vorschlagsgemäßen Systems in einem ersten Zustand;
- Fig. 4: eine vereinfachte schematische Ansicht des vorschlagsgemäßen Systems in einem zweiten Zustand;
- Fig. 5: eine vereinfachte schematische Ansicht des vorschlagsgemäßen Systems in einem dritten Zustand;
- Fig. 6: eine vereinfachte schematische Ansicht des vorschlagsgemäßen Systems in einem vierten Zustand;
- Fig. 7: eine vereinfachte schematische Ansicht des vorschlagsgemäßen Systems in einem fünften Zustand;
- Fig. 8: eine vereinfachte schematische Ansicht des vorschlagsgemäßen Systems in einem sechsten Zustand;
- Fig. 9: eine vereinfachte schematische Ansicht des vorschlagsgemäßen Systems in einem siebten Zustand;
- Fig. 10: eine vereinfachte schematische Ansicht des vorschlagsgemäßen Systems in einem achten Zustand;
- Fig. 11: eine vereinfachte schematische Ansicht des vorschlagsgemäßen Systems in einem neunten Zustand;
- Fig. 12: eine vereinfachte schematische Ansicht des vorschlagsgemäßen Systems in einem zehnten Zustand;
- Fig. 13: eine vereinfachte schematische Ansicht des vorschlagsgemäßen Systems in einem elften Zustand;
- Fig. 14: eine schematische Darstellung eines Gesamtsystems mit mehreren vorschlagsgemäßen Systemen;
- Fig. 15: eine schematische Ansicht zur Steuerung des Systems gemäß Fig. 14; und
- Fig. 16: eine schematische Ansicht zur alternativen Steuerung des Systems gemäß Fig. 14.

In der nachfolgenden Beschreibung bevorzugter Ausführungsbeispiele anhand der Zeichnungen werden für dieselben oder ähnliche Teile dieselben oder ähnliche Bezugszeichen verwendet, wobei entsprechende Eigenschaften und Vorteile erreicht werden können, auch wenn von einer wiederholten Beschreibung abgesehen wird.

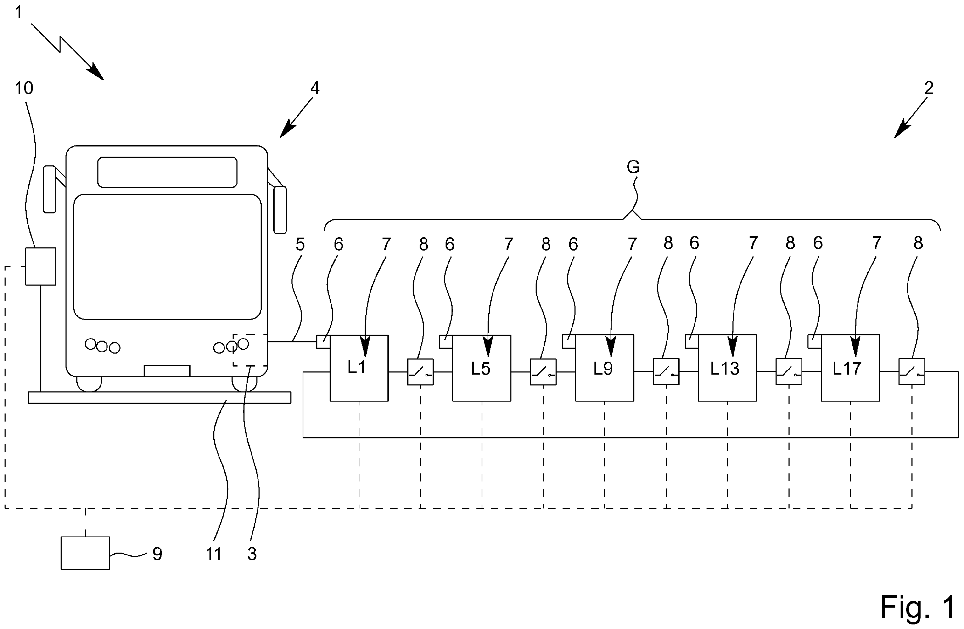

Fig. 1 zeigt in einer sehr vereinfachten, schematischen Ansicht ein Depot 1 mit einem System 2 zum Laden von Akkumulatoren 3 elektrisch antreibbarer Fahrzeuge 4 - auch Elektrofahrzeuge 4 genannt.

Es ist ein grundsätzliches Ziel der vorliegenden Erfindung, ein sogenanntes First-In-First-Out-Prinzip (FIFO-Prinzip) zu realisieren. Darunter wird eine Betriebsweise eines Systems 2 oder Depots 1 verstanden, bei der die zuerst in dem Depot 1 eintreffenden Fahrzeuge 4 dieses auch zuerst wieder verlassen, möglichst mit vollständig geladenem Akkumulator 3.

Die Akkumulatoren 3 der Elektrofahrzeuge 4 können mittels einer Leitung 5 o. dgl. elektrisch mit einem der Ladegeräte L gekoppelt werden. Hierzu ist oder wird der Akkumulator 3 des Elektrofahrzeugs 4 - einem Elektro-Omnibus zum Beispiel - mit einer Leitung 5 über einen Anschluss 6 oder eine sonstige Kopplungseinrichtung eines Ladegeräts L elektrisch gekoppelt, sodass Ladeleistung von dem Ladegerät L an den Akkumulator 3 übertragen und der Akkumulator 3 auf diese Weise geladen wird. Der Anschluss 6 bzw. die Kopplungseinrichtung kann ein Stecker, ein Kabel, ein Konnektor und/oder ein Pantograph sein oder oder aufweisen.

Zumindest einige der Ladegeräte L, vorzugsweise alle Ladegeräte L, weisen vorzugsweise eine Priorität 7 auf, bzw. den Ladegeräten L ist jeweils eine Priorität 7 zugeordnet oder zuordenbar. Die Prioritäten 7 der unterschiedlichen Ladegeräte L sind besonders bevorzugt in der Höhe unterschiedlich und einmalig innerhalb des Systems 2 und/oder einer Gruppe G von Ladegeräten L.

Vorzugsweise weist eine Gruppe G mindestens zwei, besonders bevorzugt drei oder mehr als drei Ladegeräte L, auf. In den Darstellungsbeispielen weist eine Gruppe G jeweils fünf Ladegeräte L auf. Es kann jedoch auch bevorzugt sein, dass eine Gruppe G mindestens sieben Ladegeräte L, zehn Ladegeräte L oder noch mehr Ladegeräte L aufweist. Insbesondere bietet das vorschlagsgemäße Verfahren bzw. System 2 größere Vorteile, je höher die Anzahl von Ladegeräten L des Depots 1, des Systems 2 und/oder der Gruppe(n) G ist.

Die Priorität 7 entspricht vorzugsweise einer Belegungsreihenfolge der Ladegeräte L bei der Ankunft von Elektrofahrzeugen 4 und/oder legt eine Belegungsreihenfolge der Ladegeräte L bei der Ankunft von Elektrofahrzeugen 4 fest.

Zur Erläuterungszwecken sind die Prioritäten 7 im Folgenden durch Ziffern repräsentiert, wobei die Ziffer 1 der höchsten Priorität entspricht und mit steigendem Wert der Ziffer die Priorität 7 sinkt. Darüber hinaus wird die, die Priorität 7 repräsentierende Ziffer im Folgenden auch zur Identifikation des jeweiligen Ladegeräts L zum Zwecke der Beschreibung verwendet. Dies ist lediglich der Übersichtlichkeit geschuldet.

Im Darstellungsbeispiel ist mit dem Akkumulator 3 das Ladegerät L1 der höchsten Priorität 7 mit dem Wert "1" verbunden. Weiter weist die Gruppe G von Ladegeräten L im Ausführungsbeispiel gemäß Fig. 1 das Ladegerät L5 mit der Priorität 7 der Wertigkeit "5" auf. Das Ladegerät L5 hat eine geringere Priorität 7 als das Ladegerät L1 im Ausführungsbeispiel gemäß Fig. 1. Das Ladegerät L5 hat jedoch wiederum eine höhere Priorität 7 als das Ladegerät L9 (Wertigkeit "9"), welches wiederum eine höhere Priorität 7 hat als das Ladegerät L13 (Wertigkeit "13"), dessen Priorität 7 wiederum höher ist als die des Ladegeräts L17 (Wertigkeit "1") aus dem Ausführungsbeispiel gemäß Fig. 1.

Die Ladegeräte L der Gruppe G sind untereinander zur Weitervergabe von Ladeleistung koppelbar. Hierzu sind im Darstellungsbeispiel Kopplungseinrichtungen 8 zwischen den Ladegeräten L vorgesehen. Bei den Kopplungseinrichtungen 8 handelt es sich vorzugsweise um Schalter, die ein Verbinden und Trennen von Ladegeräten L ermöglichen. Diese Schalter können als elektrisch steuerbare Schalter wie Schütze oder Relais ausgebildet sein oder solche aufweisen. Hier sind jedoch auch andere Lösungen möglich.

Die Kopplungseinrichtungen 8 sind vorzugsweise dazu steuerbar, eine elektrische Kopplung zwischen zwei Ladegeräten L zu erzeugen, sodass Ladeleistung von einem der Ladegeräte L zum anderen der Ladegeräte L transferiert werden kann oder umgekehrt. Es ist also auch möglich, dass Ladeleistung ausgetauscht wird, obwohl ein Transfer von Ladeleistung lediglich in eine Richtung bevorzugt ist.

Eine Weitergabe oder Weiterleitung von Ladeleistung zwischen den Ladegeräten L bzw. mittels der Kopplungseinrichtungen 8 erfolgt technisch vorzugsweise durch eine Parallelschaltung der Ladegeräte L.

In den Darstellungsbeispielen ist jeweils eine maximale Ladeleistung festgelegt, die einem Ladegerät L durch Kopplung mit weiteren Ladegeräten L zur Verfügung gestellt wird bzw. werden kann. Eine solche Begrenzung auf eine maximale Ladeleistung ist jedoch nicht zwingend. In den Beispielen beträgt die maximale Ladeleistung jeweils 200 kW, entsprechend der Summe der Ladeleistungen aller Ladegeräte L einer Gruppe G. Selbstverständlich sind hier jedoch auch andere Werte für die maximale Ladeleistung möglich, sofern diese vorgesehen ist.

Es ist vorgesehen, dass das vorschlagsgemäße System 2 ein oder mehrere belegte Ladegeräte L aufweist, die dadurch charakterisiert sind, dass einem belegten Ladegerät L ein nicht vollständig geladener Akkumulator 3 zum Laden zugeordnet ist. Insbesondere ist ein nicht vollständig geladener Akkumulator 3 zum Laden an ein belegtes Ladegerät L angeschlossen. Vorzugsweise weisen zumindest die belegten Ladegeräte L jeweils eine Priorität 7 auf bzw. ist zumindest den belegten Ladegeräten L jeweils eine Priorität 7 zugeordnet.

Ein Beispiel für ein belegtes Ladegerät ist das Ladegerät L1 im Darstellungsbeispiel gemäß Fig. 1, das über den Anschluss 6 bzw. die Leitung 5 mit dem leeren oder nur unvollständig geladenen Akkumulator 3 verbunden ist. Das belegte Ladegerät L transferiert hierbei Ladeleistung zum Akkumulator 3, um den Akkumulator 3 zu laden.

Grundsätzlich ist es jedoch auch denkbar, dass ein derartiger Ladevorgang nur vorgesehen oder geplant ist, dem belegten Ladegerät L1 also zwar bereits ein Elektrofahrzug 4 bzw. Akkumulator 3 zugeordnet ist, die Verbindung mit dem Anschluss 6 des belegten Ladegeräts L1 jedoch noch nicht oder nicht vollständig hergestellt ist oder der Ladeprozess trotz hergestellter Verbindung noch nicht begonnen hat. Demnach ist ein belegtes Ladegerät L jedenfalls dafür vorgesehen, einen zugeordneten Akkumulator 3 zu laden.

Eine entsprechende Zuordnung kann beispielsweise durch oder bei Eintreffen eines Elektrofahrzeugs 4 im Depot 1 (automatisch) erfolgen. Eine solche Zuordnung kann jedoch alternativ oder zusätzlich auch durch Herstellung der Verbindung zwischen Akkumulator 3 und Ladegerät L erfolgen, beispielsweise durch Überwachung des Zustands des jeweiligen Anschlusses 6 des jeweiligen Ladegeräts L. Eine solche Überwachung des Anschlusses 6 bzw. der Verbindung zu einem Akkumulator 3 kann mechanisch, elektronisch oder auf sonstige Weise erfolgen.

Ferner weist das vorschlagsgemäße System 2 bzw. weist die Gruppe G vorzugsweise ein oder mehrere Ladegeräte L auf, die im Folgenden "freies Ladegerät" bezeichnet werden. Solche "freien Ladegräte" sind dazu geeignet bzw. befinden sich in einem Zustand, in dem Ladegerätleistung an ein anderes Ladegerät L weiter gegeben werden kann. Hierzu ist bevorzugt, dass dem freien Ladegerät L kein Akkumulator 3 zugeordnet ist oder ein zugeordneter Akkumulator 3 entweder vollständig geladen oder aus anderen Gründen nicht oder nicht mit der vollen, durch das zugeordnete Ladegerät L zur Verfügung gestellten Ladeleistung geladen wird.

Im einfachsten Fall ist ein freies Ladegerät L also ein solches, dessen Anschluss 6 frei ist bzw. mit keinem Akkumulator 3 verbunden ist. Es ist jedoch auch möglich, dass ein verbundener Akkumulator 3 vollständig geladen ist, sodass das jeweilige Ladegerät L keine Ladeleistung an den Akkumulator 3 abgibt. Ein freies Ladegerät L liegt vorzugsweise auch dann vor, wenn aus sonstigen Gründen ein Akkumulator 3 nicht geladen wird, beispielsweise durch Defekt des Akkumulators o. dgl.

Ein freies Ladegerät L ist insbesondere ein solches Ladegerät L, dem kein Akkumulator 3 zugeordnet ist oder der angeschlossene Akku voll geladen ist. Dies kann der Fall sein, wenn ein Akkumulator 3 eines Elektrofahrzeugs 4 abgekoppelt wurde, der Anschluss 6 also zur freien Verfügung steht, um mittels des Anschlusses 6 einen (anderen) Akkumulator 3 mit dem freien Ladegerät L zu verbinden.

Im Darstellungsbeispiel gemäß Fig. 1 sind die Ladegerät L 5, L9, L13 und L 17 freie Ladegeräte, während das Ladegerät L1 ein belegtes Ladegerät L ist.

Die freien Ladegeräte L werden im Folgenden des Weiteren unterschieden in gekoppelte und nicht gekoppelte (koppelbare) freie Ladegeräte L. Insbesondere wird ein Ladegerät L, das bereits mit einem belegten Ladegerät L (unmittelbar oder mittelbar über weitere freie Ladegeräte L) gekoppelt ist, ebenfalls als freies Ladegerät L bezeichnet. Jedoch ist es vorzugsweise möglich, ein bereits gekoppeltes Ladegerät L mit einem Akkumulator 3 zu verbinden oder diesem zuzuordnen, da ein gekoppeltes Ladegerät einen verfügbaren Anschluss 6 aufweist und somit ein freies Ladegerät L ist. Durch das Verbinden oder Zuordnen des Akkumulators 3 wird das freie Ladegerät L zum belegten Ladegerät L. Vorzugsweise kann ein gekoppeltes Ladegerät L nicht mit einem weiteren belegten Ladegerät L gekoppelt werden. Jedes freie Ladegerät L ist also vorzugsweise nur mit einem belegten Ladegerät L koppelbar.

Vorzugsweise werden den jeweiligen Akkumulatoren 3 zeitlich aufeinander folgend jeweils das freie Ladegerät L zugeordnet, dass unter den freien Ladegeräten L mit verfügbaren Anschluss 6 die höchste Priorität 7 aufweist, wodurch das vormals freie Ladegerät L zu belegtem Ladegerät L wird.

Im Darstellungsbeispiel ist das vormals freie Ladegerät L1 durch Zuordnung des Akkumulators 3 des Elektrofahrzeugs 4 zum belegten Ladegerät L geworden und das belegte Ladegerät L1 lädt den Akkumulator 3 in dem in Fig. 1 dargestellten Zustand. In einem Zustand des Systems 2, in dem zuvor alle Ladegeräte L frei gewesen sind, wurde also der Akkumulator 3 aufgrund der höchsten Priorität 7 des Ladegeräts L1 diesem zugeordnet, an dieses angeschlossen und wird durch dieses geladen.

Ein weiterer, zweiter Akkumulator 3 (nicht dargestellt) kann im Anschluss dem Ladegerät L der zweithöchsten Priorität 7, also dem freien Ladegerät L5 der höchsten Priorität 7 der dann freien Ladegeräte L zugeordnet werden. Sobald ein weiteres Elektrofahrzeug 4 bzw. Akkumulator 3 das Depot 1 erreicht, wird also wiederum das freie Ladegerät L zugeordnet, das unter den freien Ladegeräten L mit verfügbarem Anschluss 6 die höchste Priorität 7 aufweist. Der nächste Akkumulator 3 wird folglich im Darstellungsbeispiel dem Ladegerät L5 zugeordnet, da dies unter den freien Ladegeräten L5, L9, L13 und L17 die höchste Priorität 7, nämlich "5" aufweist.

In entsprechender Weise werden weitere Akkumulatoren 3 zeitlich aufeinander folgend jeweils demjenigen freien Ladegerät L zugeordnet, das unter den freien Ladegeräten L mit verfügbarem Anschluss 6 die (nächst)höchste Priorität 7 aufweist. Wenn also dem Ladegerät L5 ein weiterer Akkumulator 3 zugeordnet worden ist und ein weiterer, dritter Akkumulator 3 zugeordnet werden soll oder zuzuordnen ist, erfolgt die Zuordnung mit dem Ladegerät L9, da dieses unter den verbleibenden freien Ladegeräten L9, L13 und L 17 die höchste Priorität 7, nämlich "9" aufweist.

Weiter ist vorgesehen, dass mindestens ein freies Ladegerät L automatisch mit demjenigen der belegten Ladegeräte L gekoppelt wird, dem unter den belegten Ladegeräten L die höchste Priorität 7 zugeordnet ist. Durch die Kopplung wird die Ladeleistung des mindestens einen freien Ladegeräts L dem belegten Ladegerät L der höchsten Priorität 7 zur Verfügung gestellt. Das belegte Ladegerät L der höchsten Priorität 7 kann den angeschlossenen Akkumulator 3 dann mit der Summe der Ladeleistungen des belegten Ladegeräts L der höchsten Priorität und des mindestens einen freien Ladegeräts L laden.

Vorzugsweise werden freie Ladegeräte L, wenn mehrere Ladegeräte L belegt sind, derart gekoppelt, dass demjenigen der belegten Ladegeräte L die Ladeleistung des freien Ladegeräts L zur Verfügung gestellt wird, das die höchste Priorität 7 unter den belegten Ladegeräten L der Gruppe G aufweist und entweder unmittelbar benachbart zu dem freien Ladegerät L vorgesehen oder nur durch weitere freie Ladegeräte L von dem freien Ladegerät L getrennt ist. Mit anderen Worten erfolgt vorzugsweise ein Entscheidungsprozess für das jeweilige freie Ladegerät L anhand der Prioritäten 7 von belegten Ladegeräten L.

Ein freies Ladegerät L leitet hierbei vorzugsweise seine Ladeleistung zu demjenigen belegten Ladegerät L der höchsten Priorität 7, wobei Ladeleistung jedoch nicht durch belegte Ladegeräte L weitergegeben wird, sodass die Ladeleistung an das unmittelbar oder über weitere freie Ladegeräte L mittelbar benachbarte belegte Ladegerät L weitergegeben wird, das die höhere Priorität 7 aufweist.

Im Darstellungsbeispiel sind die Ladegeräte L5, L9, L13 und L17 freie Ladegeräte L. Entsprechend wird das Ladegerät L5 mittels der Kopplungseinrichtung 8 mit dem Ladegerät L1 gekoppelt, sodass die Ladeleistung des Ladegeräts L5 an das Ladegerät L1 übermittelt wird und das Ladegerät L1 den Akkumulator 3 mit der gesamten zur Verfügung stehenden Ladeleistung der Ladegeräte L1 und L5 laden kann. Weiter ist das Ladegerät L9 ein freies Ladegerät L, das folglich durch die Kopplungseinrichtung 8 mit dem ebenfalls freien Ladegerät L5 gekoppelt werden kann, das wiederum mit dem belegten Ladegerät L1 gekoppelt ist, wodurch die Ladeleistung des freien Ladegeräts L9 über das freie Ladegerät L5 an das belegte Ladegerät L1 weitergegeben werden kann. Entsprechendes kann auch für die weiteren freien Ladegeräte L13 und L17 erfolgen.

Im Endeffekt kann in der dargestellten Konstellation, in der lediglich ein belegtes Ladegerät L1 vorgesehen ist, die Ladeleistung aller weiteren, freien Ladegeräte L der Gruppe G an das einzig belegte Ladegerät L1 weitergegeben werden und der Akkumulator 3 kann mit der Summe der Ladeleistungen geladen werden.

Die Ladegeräte L weisen vorzugsweise dieselbe verfügbare Ladeleistung - Nennleistung - auf. Demnach kann also das belegte Ladegerät L1 durch Weiterleitung der Ladeleistung der vier freien Ladegeräte L insgesamt die fünffache seiner Ladeleistung zum Laden des Akkumulators 3 verwenden, beispielsweise jeweils 10 bis 100 kW, insbesondere 40 kW, und/oder insgesamt das Mehrfache, hier Fünffache, also 50 bis 500 kW, insbesondere 200 kW.

Unter der Annahme, die Ladegeräte L1 und L5 wären belegt, bestünde für das Ladegerät L9 die Möglichkeit der Kopplung mit dem Ladegerät L5 (direkt) oder über die Ladegeräte L13 und L17 mit dem Ladegerät L1. Da hier das Ladegerät L1 die höhere Priorität als das Ladegerät L5 genießt, wird die Kopplung mittelbar mit dem Ladegerät L1 erfolgen und die Ladeleistung wird an das Ladegerät L1 transferiert.

Wenn das Ladegerät L5 mit der zweithöchsten Priorität 7, nämlich "5" im Darstellungsbeispiel nun zum belegten Ladegerät L wird, werden die Ladeleistungen der noch übrigen freien Ladegeräte L9, L13 und L17 nach Möglichkeit dennoch an dasjenige Ladegerät L weitergeleitet, das belegt ist und die höchste Priorität aufweist, also das Ladegerät L1. Im Darstellungsbeispiel wird also das Ladegerät L17 in diesem Fall unmittelbar mit dem Ladegerät L1 gekoppelt und die Ladegeräte L13 und L9 jeweils über das Ladegerät L17 bzw. die Ladegeräte L13 und L17 mit dem Ladegerät L1. Hierdurch steht diesem noch die insgesamt vierfache Menge an Ladeleistung zum Laden des Akkumulators 3 zur Verfügung. Das Ladegerät L5 gibt in diesem Fall seine Ladeleistung nicht weiter, sondern verwendet es zum Laden des ihm dann zugeordneten Akkumulators 3.

Vorzugsweise sind die Ladegeräte L innerhalb der Gruppe G jeweils mit (genau) einem Ladegerät L höherer Priorität 7 und mit (genau) einem Ladegerät L niedrigerer Priorität 7 koppelbar. Mit anderen Worten sind die Ladegeräte L jeweils mit einem Ladegerät L höherer Priorität 7 benachbart bzw. über eine Kopplungseinrichtung 8 verbindbar und mit einem Ladegerät L niedrigerer Priorität 7 benachbart bzw. über eine Kopplungseinrichtung 8 verbindbar sind. Insbesondere sind die Ladegeräte L innerhalb der Gruppe G in der Reihenfolge ihrer Priorität 7 sortiert bzw. angeordnet. Hier sind jedoch auch andere Lösungen möglich. Es ist beispielsweise möglich, die Ladegeräte L derart anzuordnen oder die Prioritäten 7 derart zuzuordnen, dass die belegten Ladegeräte L jeweils einen möglichst großen Abstand zu dem Ladegerät L nächsthöherer Priorität 7 haben, also möglichst viele Ladegeräte L mit dazwischen angeordnet sind. Dabei kann es bevorzugt sein, dass das Ladegerät L mit der höchsten Priorität 7 und das Ladegerät L mit der zweithöchsten Priorität 7 den größten Abstand zueinander haben, dass das Ladegerät L mit der zweithöchsten Priorität 7 und das Ladegerät L mit der dritthöchsten Priorität 7 den zweitgrößten Abstand zueinander haben, usw. Der Abstand zwischen zwei Ladegeräten L ist dabei definiert als die Anzahl der zwischen den zwei Ladegeräten L liegenden Ladegeräten L. Dies kann beispielsweise bei einer ringartigen Verkopplung bzw. Verkettung der Fall sein. Beispielsweise könnten (zumindest in einer schematischen Darstellung eines Systems) 12 Ladegeräte L entlang einer Kreislinie angeordnet sein, und zwar auf der "1-Uhr-Postion", der "2-Uhr-Position" usw. bis zur "12-Uhr-Position". In diesem Fall wäre es möglich, das erste ankommende Elektrofahrzeug 4 dem Ladegerät L auf der 12-Uhr-Position zuzuordnen und das nächste ankommende Elektrofahrzeug 4 dem Ladegerät L mit dem größten Abstand, nämlich dem Ladegerät L auf der 6-Uhr-Position. Anschließend wurden dann die Ladegeräte auf der 3-Uhr-Position und der 9-Uhr-Position zugeordnet oder umgekehrt. So wird ebenfalls erreicht, dass die belegten Ladegeräte L jeweils mit möglichst vielen freien Ladegeräten L koppelbar sind.

Zur Steuerung der Ladegeräte L und/oder der Kopplungseinrichtungen 8 ist vorzugweise eine Steuerung 9 vorgesehen. Mit der Steuerung 9 kann auch eine Zuordnung von Akkumulatoren 3 zu Ladegeräten L erfolgen. Alternativ kann die Zuordnung an die Steuerung 9 übermittelt und durch diese verwendet werden. Es ist jedoch auch möglich, dass zur Zuordnung der Akkumulatoren 3 zu freien Ladegeräten L keine Steuerung 9 notwendig oder vorgesehen ist. Beispielsweise kann die in den Figuren dargestellte matrixartige Realisierung auch einer tatsächlichen Realisierung des Systems 2 insofern entsprechen, dass Parkplätze bzw. Ladestationen oder Ladegeräte L tatsächlich matrixartig angeordnet sind. Die dargestellten Ladegeräte L entsprächen dann in einer Realisierung Parkplätzen für die Fahrzeuge 4, wobei die Parkplätze in der Reihenfolge der Priorität 7 nummeriert und /oder angeordnet sind, wie dargestellt, und die Nummern der Parkplätze den Prioritäten 7 entsprechen. In diesem Fall ist keine Steuerung 9 notwendig, sondern es ist möglich, dass die Fahrer der Fahrzeuge 4, beispielsweise mittels aufgestellter Schilder oder durch eine vorherige Einweisung, die Anweisung bekommen, ihr Fahrzeug 4 jeweils auf dem freien Parkplatz der höchsten (bzw. niedrigsten) Nummer abzustellen. Im einfachsten Fall geschieht dies dadurch, dass ankommende Fahrzeuge 4 nacheinander die in den Figuren dargestellten Spalten sukzessive von oben nach unten füllen. Es kann also eine feste Zuordnung der Fahrzeuge 4 zu Ladegeräten L bzw. Parkplätzen nach einer festen Reihenfolge erfolgen.

Die Steuerung 9 steuert die Kopplungseinrichtungen 8 vorzugsweise derart, dass das vorschlagsgemäße Verfahren durchgeführt wird, also freie Ladegeräte L in der beabsichtigen Art und Weise mit belegten Ladegeräten L gekoppelt werden. Alternativ oder zusätzlich steuert die Steuerung 9 ein oder mehrere der Ladegeräte L zur Abgabe oder Weitergabe von Ladeleistung. Die Steuerung 9 kann alternativ oder zusätzlich auch eine Signaleinrichtung 10 zum Signalisieren einer Zuordnung steuern. Beispielsweise wird ein Akkumulator 3 einem vormals freien Ladegerät L zugeordnet, woraufhin die Steuerung 9 mit der Signaleinrichtung 10 signalisieren kann, welches das nunmehr belegte Ladegerät L ist und/oder das nächste zu belegende freie Ladegerät L ist.

In einem Depot 1 kann die Signaleinrichtung 10 einem Stellplatz 11 zugeordnet sein und die Signaleinrichtung 10 kann durch die Steuerung 9 gesteuert werden, sodass der Stellplatz 11 dem Elektrofahrzeug 4 signalisiert wird. Das Elektrofahrzeug 4 kann daraufhin den Stellplatz 11, der signalisiert worden ist, anfahren und dessen Akkumulator 3 kann dann mit dem zugeordneten, also belegten Ladegerät L zum Zwecke des Ladens des Akkumulators 3 verbunden werden.

Die Signaleinrichtung 10 kann hierbei eine optische Signaleinrichtung wie eine Ampel, oder mehrere Führeinrichtungen zum Führen eines Fahrers des Elektrofahrzeugs 4 zu einem bestimmten Stellplatz 11, ein Fahrerinformationssystem im Elektrofahrzeug 4, das den Weg zum Stellplatz 11 weist und/oder eine zentrale Anzeige zur Identifikation des Stellplatzes 11 des zugeordneten bzw. belegten Ladegeräts L sein oder aufweisen. Es ist also bevorzugt, dass dem jeweiligen Ladegerät L ein Stellplatz 11 und/oder eine Signaleinrichtung 10 zugeordnet ist. Hier sind jedoch auch andere Lösungen möglich.

Vorzugsweise weist ein oder jedes Ladegerät L der Gruppe G jeweils genau zwei benachbarte Ladegeräte L auf. Ladegeräte L sind hierbei vorzugsweise dann benachbarte Ladegeräte L, wenn sie unmittelbar miteinander koppelbar sind, also unmittelbar durch eine Kopplungseinrichtung 8 miteinander derart verbunden werden können, dass Ladeleistung zwischen diesen Ladegeräten L transferiert werden kann. Es ist jedoch nicht zwingend, dass benachbarte Ladegeräte L auch örtlich bzw. geografisch zueinander benachbart sein müssen, obwohl dies in der Praxis bevorzugt ist.

Innerhalb der Gruppe G sind benachbarte Ladegeräte L vorzugsweise derart koppelbar oder werden derart gekoppelt, dass die Ladeleistung eines freien Ladegeräts L mit einem der benachbarten Ladegeräte L oder über eines der benachbarten Ladegräte L einem belegten Ladegerät L der Gruppe G zur Verfügung gestellt wird oder werden kann. Wie bereits zuvor erläutert, kann im konkreten Beispiel also die Ladeleistung des Ladegeräts L5, das unmittelbar benachbart zu dem Ladegerät L1 ist, durch entsprechende Kopplung an das Ladegerät L1 weitergegeben werden. Die Ladeleistung des Ladegerätes L9 kann ebenfalls an das Ladegerät L1 weitergegeben werden, hierbei jedoch über das freie Ladegerät L5, das in diesem Fall eine Durchverbindung herstellt oder auf sonstige Weise die Ladeleistung des Ladegeräts L9 zunächst erhält, jedoch nicht selbst verwendet, sondern an das Ladegerät L1 durchreicht.

Aufgrund der konkreten Konstruktion bilden die Ladegeräte L der Gruppe G vorzugsweise eine Kette, bei der jedes der Ladegeräte L nur mit zwei anderen Ladegeräten L der Gruppe G durch Kopplungseinrichtungen 8 koppelbar ist. Insgesamt ergibt sich vorzugsweise eine Kette von Ladegeräten L innerhalb der Gruppe G, die jeweils durch die Kopplungseinrichtung 8 untereinander koppelbar sind. Weiter ist bevorzugt, dass die Kette von Ladegeräten L eine geschlossene Kette bzw. einen geschlossenen Kreis oder Ring bildet. Hierbei sind genauso viele Koppeleinrichtungen 8 wie Ladegeräte L vorgesehen. Innerhalb dieser Kette kann die Ladeleistung eines freien Ladegeräts L entweder in die eine oder in die andere Richtung, also zu einem ersten oder zweiten Nachbar-Ladegerät L gekoppelt oder weitergegeben werden. Dies hat sich als vorteilhaft hinsichtlich einer überschaubaren Komplexität erwiesen.

Vorzugsweise erfolgt eine bevorzugt vollständige Neuzuteilung der freien Ladegeräte L zu den belegten Ladengeräten L bzw. eine neue Kopplung der freien Ladegeräte L mit den belegten Ladegeräten L, wenn ein (zuvor belegtes) Ladegerät L zu einem freien Ladegerät L wird, beispielsweise dadurch, dass der an das belegte Ladegerät L angeschlossene Akkumulator 3 vollständig geladen ist, und/oder wenn ein (zuvor freies) Ladegerät L zu einem belegten Ladegerät L wird. Auf diese Weise kann ein optimales Laden ermöglicht werden. Es ist jedoch auch möglich, dass keine vollständige Neuzuteilung erfolgt, wenn ein belegtes (freies) Ladegerät L zu einem freien (belegten) Ladegerät L wird.

Im Darstellungsbeispiel wird, sobald der Akkumulator 3, der an das Ladegerät L1 angeschlossen ist, vollständig geladen ist, das Ladegerät L1 zum freien Ladegerät und die Ladeleistung der freien Ladegeräte wird, gesetzt den Fall, dass das Ladegerät L5 ein belegtes Ladegerät ist, vorzugsweise zu diesem weitergeleitet.

Vorzugsweise werden also in der Gruppe G alle freien Ladegeräte L jeweils mit demjenigen belegten Ladegerät L gekoppelt, das unter denjenigen belegten Ladegeräten L, die unmittelbar benachbart oder nur durch freie Ladegeräte L von dem belegten Ladegeräten L getrennt ist, die höchste Priorität 7 aufweist.

Die Steuerung 9 ist vorzugsweise mit dem jeweiligen Ladegerät L datentechnisch derart verbunden, dass ein Status von dem jeweiligen Ladegerät L abgerufen und/oder an die Steuerung übermittelt werden kann. Insbesondere ist vorgesehen und das System 2 dazu ausgebildet, dass das jeweilige Ladegerät L Statusdaten bezüglich der Zuordnung an die Steuerung 9 sendet, woraufhin die Steuerung 9 dem vorschlagsgemäßen Verfahren entsprechend die Kopplungseinrichtungen 8 und/oder die Signaleinrichtungen 10 steuern oder regeln kann.

Insbesondere ist vorgesehen, dass das jeweilige Ladegerät L den Anschluss 6 überwacht und einen Statuswechsel, also insbesondere einen unverbundenen zu einem mit einem Akkumulator 3 verbundenen Zustand oder umgekehrt, detektieren kann und diesen an die Steuerung 9 übermittelt. Hierzu kann das jeweilige Ladegerät L einen Statuswechsel aktiv an die Steuerung 9 senden oder die Steuerung 9 kann den Statuswechsel bzw. eine entsprechende Information bedarfsweise oder regelmäßig von dem jeweiligen Ladegerät L abrufen. Der übermittelbare bzw. abrufbare Status kann hierbei der Information entsprechen oder hierzu korrespondieren, ob ein Ladegerät L ein belegtes Ladegerät L oder ein freies Ladegerät L ist, wobei vorzugsweise die freien Ladegeräte L noch weiter differenziert werden können zwischen freien Ladegeräten L mit freiem Anschluss 6 und solchen mit belegtem Anschluss 6, insbesondere wobei an dem Anschluss 6 ein Akkumulator 3 angeschlossen ist, jedoch nicht oder jedenfalls nicht mit der vollen Ladeleistung, die das jeweilige Ladegerät L zur Verfügung stellt, geladen wird.

Die Steuerung 9 kann einen Speicher aufweisen, um den Status des jeweiligen Ladegeräts L zu speichern. Auf diese Weise ist es möglich, dass die Steuerung 9 erfasst, wenn ein Ladegerät L zugeordnet wird, woraufhin die Steuerung 9 in dem Speicher den Status dieses Ladegeräts als "belegt" speichert. Entsprechend kann die Steuerung 9 vorzugsweise auch andere Informationen zu den jeweiligen Ladegeräten L speichern, beispielsweise den Status "frei" bzw. "frei mit verfügbarem Anschluss 6" oder "frei mit belegtem Anschluss 6". In Abhängigkeit von diesem Status steuert die Steuerung 9 dann vorzugsweise die Kopplungseinrichtungen 8 und/oder die Signaleinrichtung 10 und/oder zukünftige Zuordnungen.

Die Ladegeräte L einer Gruppe G sind, wie bereits zuvor erwähnt, vorzugsweise kettenartig miteinander koppelbar, wobei ein Ladegerät L jeweils nur mit zwei anderen Ladegeräten L der Gruppe G koppelbar ist, wodurch eine Kette gebildet ist. Eine solche Gruppe G bzw. Kette wird im Folgenden auch als Zeile bezeichnet, in Anlehnung an die in Fig. 1 dargestellte Struktur. Dies bedeutet nicht, dass die Ladegeräte L körperlich auch zeilenartig angeordnet sein müssen. Hier ist es also beispielsweise möglich, dass Ladegeräte L über ein Depot 1 verteilt sind und eine solche Kette bzw. Zeile nur im schaltungstechnischen Sinne bilden, also derart verschaltbar sind, wie im Zusammenhang mit Fig. 1 erläutert.

Besonders bevorzugt weist das System 2 mehrere Gruppen G bzw. Zeilen auf, was im Folgenden anhand der weiteren Figuren im Detail erläutert wird, wobei die in diesen Figuren enthaltenen, vereinfacht schematisch dargestellten Ladegeräte L grundsätzlich vorzugsweise jeweils die Eigenschaften der in Zusammenhang mit Fig. 1 beschriebenen Ladegeräte L haben. Die Steuerung 9 kann hierbei alle oder einzelne Gruppen G bzw. deren Kopplungseinrichtungen 8 steuern.

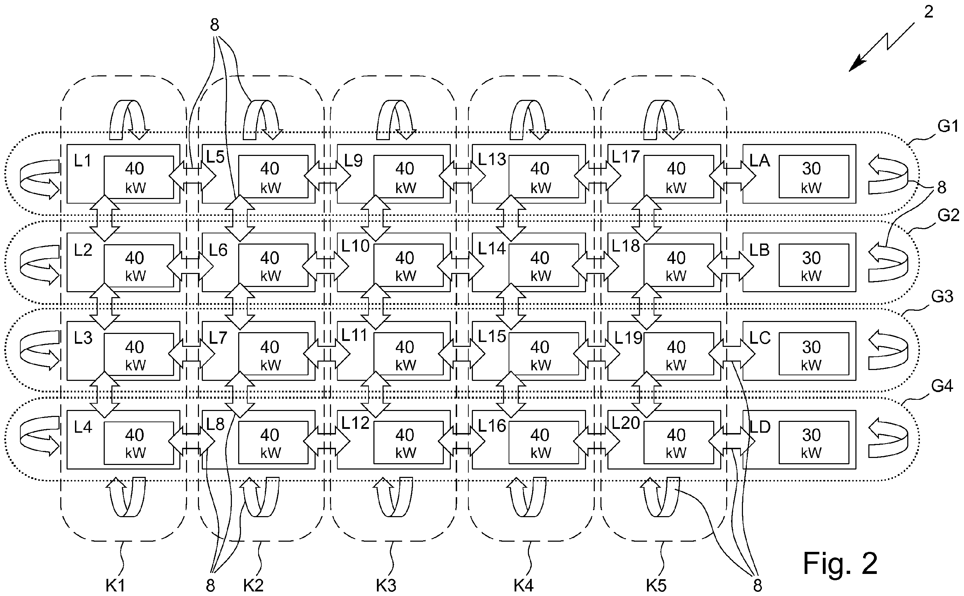

In Fig. 2 ist ein solches System 2 mit mehreren, im Darstellungsbeispiel insgesamt vier Gruppen G gezeigt. Die Ladegeräte L1, L5, L9, L13 und L17 der ersten Gruppe G1 entsprechen in ihrer Funktion und ihren Eigenschaften vorzugsweise zumindest im Wesentlichen den in Zusammenhang mit Fig. 1 erläuterten Ladegeräten L. Insofern wird auf die vorangehende Beschreibung verwiesen.

Mit Doppelpfeilen sind hier mögliche Kopplungen zwischen Ladegeräten L schematisch angedeutet, die durch Kopplungseinrichtungen 8 realisiert werden können. Jede mit einem Doppelpfeil in Fig. 2 angedeutete Verbindung kann also in der Praxis durch eine Kopplungseinrichtung 8 realisiert werden. Als Doppelpfeil gilt hierbei auch die Kombination der randseitigen halbkreisförmigen Pfeile, die andeuten sollen, dass eine entsprechende Kopplung zwischen dem jeweils ersten und letzten Ladegerät möglich ist, bzw. eine Kopplungseinrichtung 8 zwischen dem ersten und letzten Ladegerät L - beispielsweise einer Zeile - vorgesehen ist, wie im Darstellungsbeispiel aus Fig. 1 zwischen dem Ladegerät L17 und dem Ladegerät L1. Auch im Darstellungsbeispiel gemäß Fig. 2 bildet also die Gruppe G1 eine kettenartige Aneinanderreihung von Ladegeräten L mittels Kopplungseinrichtungen 8, vorzugsweise wobei eine einreihige und/oder geschlossene Kette gebildet wird. Entsprechendes gilt vorzugsweise auch für weitere Gruppen G.

Ergänzend zu den Ladegeräten L, wie sie bereits in Fig. 1 erläutert worden sind, ist im Darstellungsbeispiel gemäß Fig. 2 in der ersten Gruppe G1 ein zusätzliches Ladegerät LA ohne Anschluss 6 vorgesehen. Dieses zusätzliche Ladegerät LA fungiert vorzugsweise als "Booster", also zur Verfügungsstellung einer ergänzenden Ladeleistung, ohne dass diesem zusätzlichem Ladegerät L ein Anschluss 6, Stellplatz o. dgl. zugeordnet ist. Ein Booster-Ladegerät L ist mangels Anschluss 6 also ein zwingend freies Ladegerät L, das nur zur Weiterleitung von Ladeleistung vorgesehen ist.

Das zusätzliche Ladegerät LA ist hierbei vorzugsweise unmittelbar benachbart zu dem Ladegerät L der Gruppe G1 vorgesehen, das die höchste Priorität 7 hat - im Darstellungsbeispiel das Ladegerät L1. Das Ladegerät L1 hat, wie bereits in Zusammenhang mit Fig. 1 beschrieben, die Priorität 7 mit der Wertigkeit "1", wobei im Beispiel die Wertigkeit mit zunehmenden Zähler abnimmt, sodass die Wertigkeit "1" die höchste Priorität 7 des Systems bedeutet.

Grundsätzlich kann das Booster-Ladegerät LA jedoch auch an einer anderen Stelle in der Kette bzw. der Gruppe G1 vorgesehen sein. Ferner kann das Ausführungsbeispiel, wie in Fig. 2 dargestellt, auch ohne Booster-Ladegerät LA oder mit mehreren Booster-Ladegeräten LA ausgestattet sein. Wenn das Booster-Ladegerät LA entfällt, resultiert vorzugsweise die Gruppe G1 wie sie anhand Fig. 1 erläutert wurde.

Im Darstellungsbeispiel gemäß Fig. 2 weist das System 2 mehrere Gruppen G auf, die jeweils im Aufbau vorzugsweise der ersten Gruppe G1 entsprechen. Im Darstellungsbeispiel sind insgesamt vier derartige Gruppen G1, G2, G3, G4 vorgesehen. Auch für Ladegeräte L unterschiedlicher Gruppen G des Systems 2 gilt vorzugsweise, dass die Prioritäten 7 der Ladegeräte L jeweils in ihrer Höhe unterschiedlich und einmalig sind. Im Darstellungsbeispiel bedeutet dies, dass eine Priorität 7 des Systems 2 niemals doppelt vorkommt.

Weiter ist bevorzugt, dass die höchste Priorität 7 eines Ladegeräts L jeder der Gruppen G des Systems 2 stets höher ist als die zweithöchste Priorität 7 eines Ladegeräts L irgendeiner der Gruppen G des Systems 2. Entsprechendes gilt vorzugsweise auch für die zweithöchste, dritthöchste und weitere Prioritäten der Gruppen. Im Darstellungsbeispiel ist folglich die zweithöchste Priorität 7 mit der Wertigkeit "5" der ersten Gruppe eine niedrigere Priorität 7 bzw. Wertigkeit als die höchste Priorität aller anderen Gruppen G2, G3 und G4, nämlich die Priorität 7 mit der Wertigkeit "2" des Ladegerätes L2 der zweiten Gruppe G2, die Wertigkeit "3" der Priorität 7 des Ladegeräts L3 der dritten Gruppe G3 und die Wertigkeit "4" des Ladegeräts L4 oder vierten Gruppe G4.

Vorzugsweise sind die Ladegeräte L zwischen den Gruppen G untereinander derart koppelbar, dass eine Weitergabe von Ladeleistung von einem zu einem anderen Ladegerät L unterschiedlicher Gruppen G ermöglicht wird. Hierbei ist bevorzugt, dass dies jeweils nur zwischen spezifischen, zueinander korrespondierenden Ladegeräten L der unterschiedlichen Gruppen G vorgesehen und möglich ist. Auf diese Weise wird nur eine verhältnismäßig geringe Anzahl von Kopplungseinrichtungen 8 benötigt, die entsprechend über die Steuerung 9 bevorzugt steuerbar sind und gesteuert werden. Eine solche Konstruktion führt also in vorteilhafterweise zu einer überschaubaren Komplexität und einem gut handhabbaren Steuerungsaufwand.

Jeweils ein Ladegerät L einer der Gruppen G korrespondiert hierbei vorzugsweise zu genau einem anderen Ladegerät L einer, mehrerer oder aller anderen Gruppen G, im Folgenden als Korrespondenzgruppe K oder Korrespondenzmenge bezeichnet. Die Eigenschaften der Korrespondenzgruppe K sind hierbei vorzugsweise gleich oder ähnlich der Eigenschaften einer Gruppe G wie bereits zuvor erläutert. Eine "Korrespondenzgruppe K" ist also insbesondere ebenfalls eine Gruppe von Ladegeräten L, die untereinander mittels Kopplungseinrichtungen 8 koppelbar sind, und zwar ebenfalls bevorzugt kettenförmig oder eine Kette bildend, vorzugsweise wobei innerhalb der Korrespondenzgruppe K eines der Ladegeräte L jeweils nur mit zwei Ladegeräten L anderer Gruppen G unmittelbar koppelbar ist und/oder eine einreihige, geschlossene Kette gebildet ist, im Folgenden auch als Spalte bezeichnet. Analog zu der Möglichkeit der "ringförmigen" Verschaltung bzw. Kopplung innerhalb einer Gruppe G, also insbesondere der Möglichkeit einer Kopplung des Ladegeräts L mit der höchsten Priorität 7 innerhalb der Gruppe G mit dem Ladegerät L mit der niedrigsten Priorität 7 innerhalb der Gruppe G, ist auch innerhalb der Korrespondenzgruppe K eine "ringförmige" Verschaltung bzw. Kopplung möglich, insbesondere also eine Kopplung des Ladegeräts L mit der höchsten Priorität 7 innerhalb der Korrespondenzgruppe K mit dem Ladegerät L mit der niedrigsten Priorität 7 innerhalb der Korrespondenzgruppe K.

Dies bedeutet nicht, dass die Ladegeräte L einer Korrespondenzgruppe K zwingend körperlich in einer Spalte, einem Rack o. dgl. zueinander angeordnet sein müssen. Es ist hingegen bevorzugt, dass die Ladegeräte L einer Korrespondenzgruppe K ungeachtet ihrer körperlichen Anordnung in der beschriebenen Art und Weise koppelbar sind, also schaltungstechnisch mit den Kopplungseinrichtungen 8, entsprechend verbindbar sind.

Vorzugsweise weist eine Korrespondenzgruppe K mindestens zwei, besonders bevorzugt drei oder mehr als drei Ladegeräte L, auf. In den Darstellungsbeispielen weist eine Korrespondenzgruppe K jeweils vier Ladegeräte L auf. Es kann jedoch auch bevorzugt sein, dass eine Korrespondenzgruppe K mindestens fünf Ladegeräte, sieben Ladegeräte L, zehn Ladegeräte L oder noch mehr Ladegeräte L aufweist. Insbesondere bietet das vorschlagsgemäße Verfahren bzw. System 2 größere Vorteile, je höher die Anzahl von Ladegeräten L der Korrespondenzgruppe(n) K ist.

Die Prioritäten 7 der Ladegeräte L innerhalb einer Gruppe G sind vorzugsweise zumindest im Wesentlichen kontinuierlich verteilt bzw. ansteigend. Hierbei haben die zu einem Ladegerät L der Gruppe G benachbarten bzw. unmittelbar koppelbaren weiteren Ladegeräte L vorzugsweise einerseits eine niedrigere Priorität 7 und andererseits eine höhere Priorität 7. Dies gilt für alle Ladegeräte L außer dem ersten und dem letzten Ladegerät L einer Gruppe G, so dass die Priorität 7 innerhalb der Gruppe G vorzugsweise kontinuierlich ansteigt, ausgehend von einem ersten Ladegerät L der Gruppe G. Im Darstellungsbeispiel bedeutet das für die Gruppe G1, dass das Ladegerät L5 benachbart zum Ladegerät L1 einer höheren Priorität 7 und zum Ladegerät L9 einer niedrigeren Priorität 7 vorgesehen ist. Für das Ladegerät L9 gilt entsprechend, dass es benachbart zum Ladegerät L5 der höheren Priorität 7 und dem Ladegerät L13 der niedrigeren Priorität 7 benachbart ist. Schlussendlich, was das Ausführungsbeispiel aus Fig. 2 angeht, ist das Ladegerät L13 benachbart zu dem Ladegerät L9 der höheren Priorität 7 und dem Ladegerät L17 der niedrigeren Priorität 7. Lediglich zum Ladegerät L1 der höchsten Priorität 7 ist kein Ladegerät L einer noch höheren Priorität 7 innerhalb derselben Gruppe G benachbart. Das Ladegerät L17 hat im Darstellungsbeispiel gemäß Fig. 2 ein Booster-Ladegerät LA ohne Priorität 7 als zweiten Nachbarn. Entsprechendes gilt alternativ oder zusätzlich auch für die jeweiligen Korrespondenzgruppen K. Auch hier ist bevorzugt, dass die Priorität 7 innerhalb der jeweiligen Korrespondenzgruppe K kontinuierlich ansteigt von einem Ladegerät L der höchsten Priorität 7 ausgehend zu einem Ladegerät der niedrigsten Priorität 7 der jeweiligen Korrespondenzgruppe K. Insbesondere gilt also für alle Gruppen G und Korrespondenzgruppen K, dass die Priorität 7 vorzugsweise von einem Ladegerät L der höchsten Priorität 7 kontinuierlich zu einem Ladegerät L der niedrigsten Priorität 7 sinkt oder, mit anderen Worten, von einem Ladegerät L der niedrigsten Priorität 7 zu einem Ladegerät L der höchsten Priorität 7 bevorzugt kontinuierlich ansteigt. Die in der jeweiligen Gruppe G oder Korrespondenzgruppe K zwischen dem Ladegerät L der höchsten Priorität 7 und dem Ladegerät L der niedrigsten Priorität 7 (in der Kette) angeordneten Ladegeräte L haben also jeweils ausgehend vom Ladegerät L der höchsten Priorität 7 eine niedrigere Priorität 7 als das Ladegerät L der höchsten Priorität 7 oder sein dem Ladegerät L der höchsten Priorität 7 zugewandter Nachbar.

Im Folgenden werden die unterschiedlichen Gruppen G entsprechend auch als Zeilen und die jeweiligen Korrespondenzgruppen K als Spalten einer sich insgesamt ergebenen Matrix oder matrixartigen Struktur bezeichnet, um die Erläuterung der Funktionsweise zu vereinfachen.

Vorzugsweise weist das System 2 mehrere Korrespondenzgruppen K auf. Hierbei ist also vorgesehen, dass mehrere Ladegeräte L einer Gruppe G jeweils genau ein korrespondierendes Ladegerät L der jeweils anderen Gruppen G aufweisen und jeweils mit diesen Korrespondenzgruppen K bilden.

Im Darstellungsbeispiel gemäß Fig. 2 bilden die Ladegeräte L1, L2, L3 und L4 die erste Korrespondenzgruppe K1. Eine zweite Korrespondenzgruppe K2 wird durch die Ladegeräte L5, L6, L7 und L8 gebildet. In entsprechender Weise werden Korrespondenzgruppen K3, K4 und K5 gebildet.

Die weiteren Ladegeräte LA, LB, LC und LD sind im Darstellungsbeispiel nicht zueinander korrespondierend, können also zwischen den Gruppen G nicht gekoppelt werden bzw. bilden keine Korrespondenzgruppe K.

Die weiteren Ladegeräte L bzw. Booster-Ladegeräte L weisen vorzugsweise keinen Anschluss 6 auf und können daher ausschließlich frei sein, also keine belegten Ladegeräte L bilden. Dementsprechend wird einem weiteren Ladegerät L bzw. Booster-Ladegerät L keine Ladeleistung zur Verfügung gestellt (die nicht weitergeleitet wird) und die Kopplung oder Koppelbarkeit der Booster-Ladegeräte L untereinander ist folglich nicht nötig. Entsprechend ist es ressourcen-schonend, zwischen diesen keine Kopplungseinrichtungen 8 vorzusehen. Hier sind jedoch auch andere Lösungen möglich, beispielsweise um Ladeleistung gleichmäßiger oder auf andere Weise verteilen zu können.

Jedes der Ladegeräte L des Systems 2 ist vorzugsweise (genau) zwei Gruppen zugeordnet, nämlich der jeweiligen Gruppe G und der jeweiligen Korrespondenzgruppe K bei einem System mit mehreren Gruppen G. Dies bedeutet, dass jedes Ladegerät L grundsätzlich Ladeleistung von Ladegeräten L aus derselben Gruppe G und derselben Korrespondenzgruppe K empfangen oder innerhalb der Gruppe G und/oder der Korrespondenzgruppe K weitergeben kann.

Aufgrund der bevorzugten Matrixstruktur, wie sie exemplarisch in Fig. 2 dargestellt ist, weist also jedes Ladegerät L (genau) vier benachbarte Ladegeräte L auf, also Ladegeräte L, mit denen eine unmittelbare Kopplung möglich ist bzw. zwischen denen eine Kopplung mittels der jeweiligen Kopplungseinrichtung 8 ermöglicht wird, von denen jeweils zwei (ausschließlich) derselben Gruppe G und zwei andere (ausschließlich) derselben Korrespondenzgruppe K angehören.

Ein Vorteil des vorschlagsgemäßen Systems 2 liegt darin, dass vermieden wird, jedes Ladegerät L mit jedem weiteren Ladegerät L unmittelbar koppeln zu können. Im vorliegenden Ausführungsbeispiel mit 20 Ladegeräten L mit Anschluss 6 und vier ergänzenden Booster-Ladegeräten L, also insgesamt 24 Ladegeräten L, ergeben sich somit 44 mögliche Kopplungen bzw. Kopplungseinrichtungen 8. Eine Koppelbarkeit aller 24 Ladegeräte untereinander würde jedoch 276 Kopplungseinrichtungen 8 erfordern, was zu einem ganz erheblichen Mehraufwand und einem Steuerungsaufwand führt, der schwer handhabbar und fehleranfällig ist. Entsprechende Nachteile werden durch die vorliegende Erfindung vermieden.

Es ist bevorzugt, dass die Ladeleistung ausschließlich innerhalb der jeweiligen Gruppe G und/oder Korrespondenzgruppe K weitergeleitet werden kann oder wird. Eine Ladeleistung wird also vorzugsweise von einem freien Ladegerät L ausschließlich innerhalb der Zeile oder innerhalb der Spalte der in Fig. 2 gebildeten Matrix weitergeleitet.

Nicht oder nur optional vorgesehen ist hingegen eine Weiterleitung von Ladeleistung zunächst innerhalb der Gruppe G oder Korrespondenzgruppe K und im Anschluss von dem die Ladeleistung empfangenen Ladegerät L innerhalb dessen Gruppe G bzw. Korrespondenzgruppe K. Es ist also nicht vorgesehen, dass Ladeleistung "um die Ecke" innerhalb der Matrix-Struktur geleitet wird, obwohl dies alternativ oder zusätzlich vorgesehen sein kann.

Eine Weiterleitung von Ladeleistung ausschließlich innerhalb der Gruppe G bzw. der Korrespondenzgruppe K, der das freie Ladegerät L angehört, bietet den Vorteil einer überschaubaren Steuerung 9, die besonders robust und fehlerunanfällig ist. Hierbei hat sich herausgestellt, dass eine Kopplung bzw. Koppelbarkeit ausschließlich innerhalb derselben Gruppe G bzw. Korrespondenzgruppe K in der Praxis kaum zu Nachteilen in der Ladegeschwindigkeit und Einsatzfähigkeit von Akkumulatoren 3 bzw. Elektrofahrzeugen 4 führt, die verringerte Komplexität der Steuerung hier also die größeren Vorteile mit sich bringt.

Dabei ist es durchaus möglich, dass mehrere Verkettungen ausgehend von mehreren freien Ladegeräten L am selben belegten Ladegerät L enden. Die Geometrie aller verketteten freien Ladegeräte L kann also insgesamt strahlenförmig sein, wobei das belegte Ladegerät L den Mittelpunkt darstellt und die Verkettungen horizontal (in den Figuren innerhalb einer Gruppe von links und/oder rechts) und/oder vertikal (in den Figuren innerhalb einer Korrespondenzgruppe von oben und/oder unten) ausgeprägt sind.

Grundsätzlich ist es auch denkbar, dass das System 2 unterschiedliche Modi unterstützt; nämlich einen ersten Modus, in dem freie Ladegeräte L ausschließlich in der Gruppe G bzw. Korrespondenzgruppe K Ladeleistung weiterleiten können, denen sie angehören und einen zweiten Modus, in dem ein Ladegerät L auch empfangene Ladeleistung nicht nur innerhalb derselben Gruppe G oder Korrespondenzgruppe K weiterleiten kann, in der das Ladegerät L, von dem die Ladeleistung stammt, vorgesehen ist, sondern dass das Ladegerät L, das die Ladeleistung empfangen hat, wiederum diese empfangene Ladeleistung innerhalb derjenigen Gruppe G bzw. Korrespondenzgruppe K weiterleiten kann, der/den es zugehört. Dieser letztere Modus führt als dazu, dass - jedenfalls bedarfsweise - Ladeleistung auch zwischen nicht zueinander korrespondierenden Ladegeräten L unterschiedlicher Gruppen G - jedenfalls mittelbar - weitergeleitet werden kann.

Im Darstellungsbeispiel gemäß Fig. 2 weisen die Ladegeräte L jeweils eine Bezeichnung auf, die einer beispielhaften Ladeleistung entspricht. Die Ladegeräte L1 bis L20 weisen demnach im Beispiel jeweils eine Ladeleistung von 40 Kilowatt (kW) auf. Dies bedeutet, dass jedes der Ladegeräte L einen Akkumulator 3 mit 40 Kilowatt laden kann. Diese 40 Kilowatt sind auch die Ladeleistung, die ein Ladegerät L, wenn es ein freies Ladegerät L ist, weitergeben kann. Die Booster-Ladegeräte LA bis LD im Darstellungsbeispiel gemäß Fig. 2 weisen eine Ladeleistung von 30 Kilowatt auf.

Die Leistungsangaben sind zwar repräsentativ für Ladeleistungen von Ladegeräten L für Elektroautos oder Elektro-Omnibusse, können in der Praxis jedoch vom angegebenen Wert abweichen und beispielsweise zwischen 10 kW und 200 kW pro Ladegerät L liegen. Die hier angegebenen Werte dienen im Folgenden der weiteren Erläuterung von Vorteilen, Wirkungen und Eigenschaften der vorliegenden Erfindungen. Es versteht sich daher, dass, sofern im Folgenden auf eine spezifische Ladeleistung oder auf eine spezifische Summe von Ladeleistungen Bezug genommen wird, dies lediglich exemplarisch erfolgt und die den Ausführungsbeispielen zugrunde liegende Ladeleistung grundsätzlich auch mit einem anderen Wert versehen oder vorgesehen werden sein kann.

Ferner werden in den folgenden Figuren Leistungswerte nur für solche Ladegeräte L angegeben, die auch belegt sind. Hierbei entspricht die angegebene Ladeleistung der dem belegten Ladegerät L insgesamt zur Verfügung stehenden Ladeleistung. Ferner basieren die folgenden Beispiele auf der Basis eines Systems 2 ohne Booster-Ladegeräte LA bis LD. Die im Folgenden eingetragenen Pfeile repräsentieren aktive Kopplungen, also nur solche Kopplungseinrichtungen 8, die Ladegeräte L zur Weitergabe von Ladeleistung koppeln, also insbesondere durch einen geschlossenen Schalter realisiert sind, sind dargestellt, während Kopplungseinrichtungen 8, die Ladegeräte L nicht koppeln, aus Veranschaulichungsgründen weder dargestellt noch durch ein sonstiges Zeichen repräsentiert sind. Diese sind ungeachtet dessen konstruktiv vorzugsweise vorgesehen, wie zuvor erläutert. Nicht dargestellt sind also insbesondere solche Kopplungseinrichtungen 8, die durch einen offenen Schalter realisiert sind oder auf sonstige Weise nicht zur Weitergabe von Ladeleistung konfiguriert sind. Ferner sind die Kopplungseinrichtungen 8 vorzugsweise durch die Steuerungen 9 derart konfiguriert, dass (ausschließlich) die durch die Pfeile repräsentierten Kopplungen erfolgen, auch wenn die Steuerung 9 in den folgenden Ausführungsbeispielen aus Veranschaulichungsgründen nicht dargestellt ist.

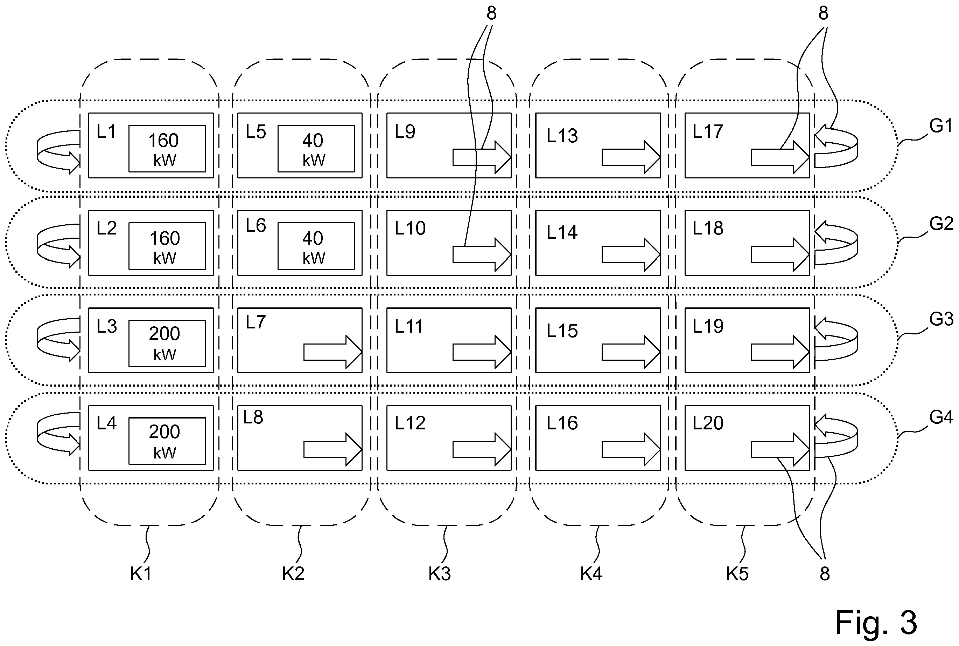

Fig. 3 zeigt beispielhaft ein vorschlagsgemäßes System 2, bei dem insgesamt sechs Ladegeräte L belegte Ladegeräte L sind. Die diesen belegten Ladegeräten L zugeordneten Akkumulatoren 3 sind aus Gründen der Übersichtlichkeit nicht dargestellt. Stattdessen wird bei solchen Ladegeräten L, die belegt bzw. zugeordnet sind und insbesondere Ladeleistung an einen mit dem jeweiligen Ladegerät L verbundenen Akkumulator 3 abgeben oder angeben können, eine gesamte Ladeleistung angegeben.

Bei freien Ladegeräten L, die Ladeleistung weitergeben oder weiterleiten, ist stattdessen lediglich ein Pfeil vorgesehen, der die Richtung andeutet, in die die Ladeleistung des jeweiligen freien Ladegeräts L weitergegeben bzw. weitergeleitet wird.

Demnach ist in Fig. 3 - vorzugsweise chronologisch, also aufeinander folgend - den Ladegeräten L beginnend mit dem freien Ladegerät L der höchsten Priorität L1 Akkumulatoren 3 zugeordnet worden. Dies hat dazu geführt, dass zunächst das Ladegerät L1 und infolgedessen das Ladegerät L2, das Ladegerät L3, das Ladegerät L4, das Ladegerät L5 und das Ladegerät 6 in dieser Reihenfolge zugeordnet worden sind, wodurch diese Ladegeräte L zu belegten Ladegeräten L geworden sind.

Hierbei ist bevorzugt, dass innerhalb der Gruppe G jeweils das noch freie Ladegerät einem Akkumulator 3 zugeordnet wird, das unter den freien Ladegeräten L mit verfügbarem Anschluss 6 die höchste Priorität 7 aufweist. In der ersten Gruppe G1 ist also zunächst das erste Ladegerät L1 mit der Priorität 7 der Wertigkeit "1" einem Akkumulator 3 zugeordnet worden und erst danach ist das Ladegerät L5 der im Vergleich niedrigeren Priorität 7 einem weiteren Akkumulator 3 zugeordnet worden. Entsprechendes gilt auch in der zweiten Gruppe G2 für die Ladegeräte L2 und L6.

Alternativ oder zusätzlich ist vorgesehen, dass in der selben Korrespondenzgruppe K ebenfalls unter den noch freien Ladegeräten L stets das Ladegerät L einem Ackumulator 3 zugeordnet wird, das innerhalb der selben Korrespondenzgruppe K die höchste Priorität 7 hat. Die Ladegeräte L1, L2, L3 und L4 der ersten Spalte werden also dieser Reihenfolge nach zugeordnet oder sind zugeordnet worden, wodurch diese zu belegten Ladegeräten L geworden sind.

Auch systemweit ist vorgesehen, dass bevorzugt das freie Ladegerät L mit freiem Anschluss 6 der höchsten Priorität insgesamt systemweit zugeordnet wird. Wenn ein weiterer Akkumulator 3 zuzuordnen ist, würde im Ausführungsbeispiel gemäß Fig. 3 folglich das Ladegerät L7 zugeordnet und damit zum belegten Ladegerät L.

Für die konkrete Ausführung der Kopplung von belegten Ladegeräten L mit freien Ladegeräten L kann es mehrere Möglichkeiten und/oder Kriterien geben.

Die Kopplung der freien Ladegeräte L mit den belegten Ladegeräten L kann ausgehend von einem belegten Ladegerät L, insbesondere beginnend mit dem belegten Ladegerät L der höchsten Priorität 7, erfolgen. Bei dieser Variante wird also, insbesondere beginnend mit dem belegten Ladegerät L der höchsten Priorität 7, für jedes belegte Ladegerät L bzw. jeweils ausgehend von einem belegten Ladegerät L bestimmt, welche freien Ladegeräte L mit diesem belegten Ladegerät L koppelbar sind und/oder gekoppelt werden.

Es ist aber auch möglich und bevorzugt, dass die Kopplung der freien Ladegeräte L mit den belegten Ladegeräten L ausgehend von einem freien Ladegerät L, insbesondere dem freien Ladegerät L mit der höchsten Priorität 7, erfolgt. Bei dieser Variante wird also, insbesondere beginnend mit dem freien Ladegerät L der höchsten Priorität 7, für jedes freie Ladegerät L bzw. jeweils ausgehend von einem freien Ladegerät L in absteigender Reihenfolge der Prioritäten 7 der freien Ladegeräte L bestimmt, welche belegten Ladegeräte L mit diesem freien Ladegerät L koppelbar sind und/oder gekoppelt werden. Eine Kopplung erfolgt dann jeweils mit dem koppelbaren belegten Ladegerät L der höchsten Priorität. Mit anderen Worten werden also die freien Ladegeräte L in der Reihenfolge ihrer Priorität 7 abgearbeitet und belegten Ladegeräten L zugeordnet bzw. mit diesen gekoppelt. In den nachfolgend erläuterten Beispielen erfolgt die Beschreibung nicht unbedingt anhand der Reihenfolge der Prioritäten 7. Dies bedeutet jedoch nicht, dass eine Verkopplung der Ladegeräte L in der Reihenfolge der jeweiligen Beschreibung erfolgt, sondern bevorzugt erfolgt die Verkopplung der freien Ladegeräte L jeweils dennoch in der Reihenfolge ihrer Prioritäten 7, sofern nichts anderes angegeben ist. Dabei ist es bevorzugt, dass freie Ladegeräte L, die zwischen dem gerade betrachteten freien Ladegerät L und dem zu koppelndem belegten Ladegerät L liegen, automatisch "mitverkoppelt werden", so dass eine Kette zwischen dem gerade betrachteten freien Ladegerät L und dem zu koppelnden belegten Ladegerät L besteht, bei der alle verketteten bzw. gekoppelten Ladegeräte L ihre Ladeleistung an das belegte Ladegerät L weitergeben bzw. weiterleiten.

Bei beiden Varianten ist dabei grundsätzlich bevorzugt, dass ein freies Ladegerät L, das mit mehreren belegten Ladegeräten L koppelbar ist, mit dem koppelbaren belegten Ladegerät L der höchsten Priorität 7 gekoppelt wird.

Trotz der unterschiedlichen Herangehensweise führen die beiden genannten Varianten häufig zum gleichen Ergebnis, also zur gleichen Verteilung der Ladeleistungen auf die Ladegeräte L. Dies liegt daran, dass bei beiden Varianten die Prioritäten 7 der belegten Ladegeräte L das entscheidende Kriterium für die Kopplung sind.

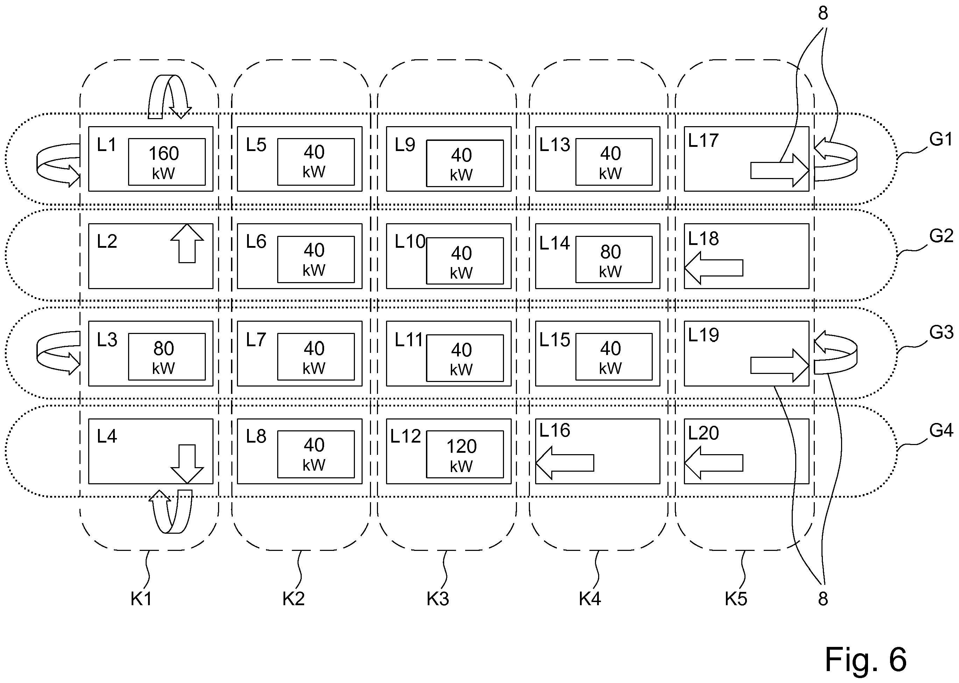

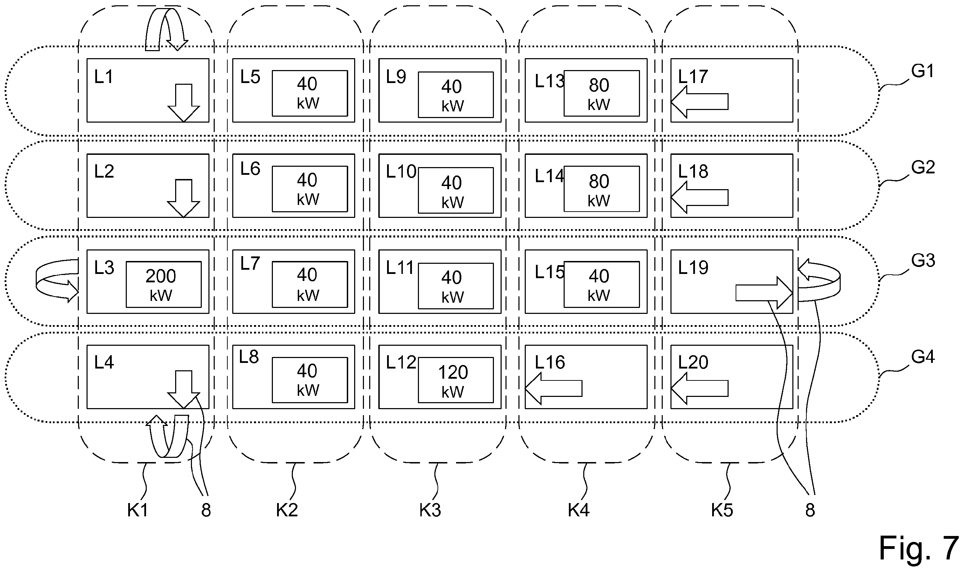

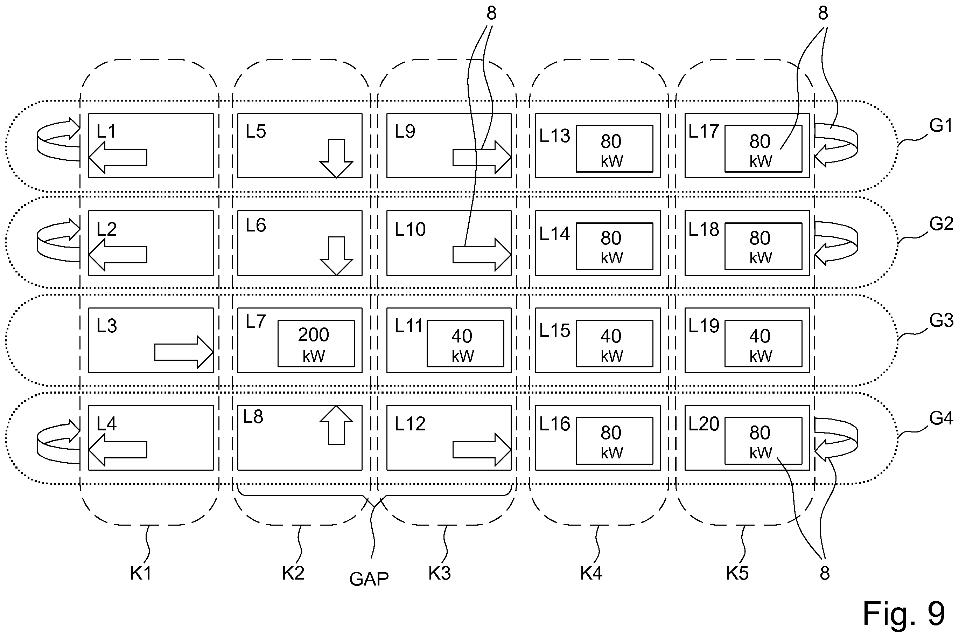

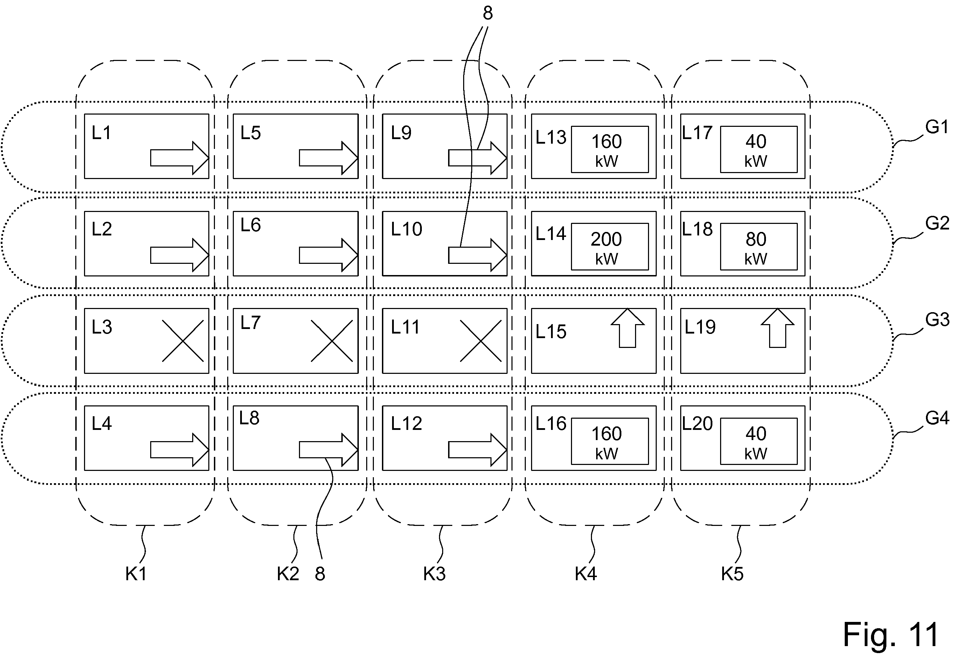

Bei einer von einem belegten Ladegerät L ausgehenden Kopplung kann die Kopplung innerhalb von Korrespondenzgruppen K situationsbedingt eingeschränkt werden, indem diese Kopplung nur in Sondersituationen zugelassen wird. Abhängig davon wie diese Einschränkungen gestaltet werden, kann das identische Systemverhalten wie bei einer Kopplung ausgehend von den freien Ladegeräten L erzeugt werden oder ein abweichendes Verhalten. Um ein identisches Systemverhalten zu erzeugen, kann die Kopplung - bei Betrachtung eines belegten Ladegeräts L - innerhalb der Korrespondenzgruppen K vorzugsweise nur in Sonderfällen zugelassen sein. Diese Sonderfälle treten hier in den Beispielen aus Fig. 6 und 7 bei den Ladegeräten L der Korrespondenzgruppe K1 (Vgl. Anwendungsfall von Fig. 6 & 7), im Beispiel aus Fig. 9, also insbesondere bei einem vorliegendem GAP mit GAP-Weite von 1 oder mehr (vgl. die Erläuterungen im Zusammenhang mit Fig. 9), und bei einer vollständig unbelegten Gruppe, was in den Figuren 11 bis 13 dargestellt ist, auf. Durch die Einschränkungen in Sonderfällen werden die Verbindungen innerhalb der Korrespondenzgruppen K primär genutzt, um die einzelnen Gruppen G untereinander symmetrisch zu halten (kein "Voreilen" oder "Nacheilen" einzelner Gruppen G). Speziell für Anwendungen nach dem FIFO-Prinzip ist dies entscheidend. Es ist aber auch möglich, dass eine primäres Koppeln innerhalb von Korrespondenzgruppen K für alternative Anwendungen Vorteile bietet.

Auch wenn im Folgenden bei der Beschreibung verschiedene Zustände des Systems häufig erläutert wird, welche Kopplungsmöglichkeiten für die freien Ladegeräte L bestehen, ist damit nicht impliziert, dass die Kopplung ausgehend von den freien Ladegeräten L erfolgt, sondern dies dient lediglich einer Beschreibung und Erläuterung des jeweiligen Zustands des Systems 2. Es ist hier insbesondere möglich, dass die Kopplungen (dennoch) ausgehend von einem belegten Ladegerät L bestimmt werden.

Der Anschaulichkeit halber sind in den nachfolgend erläuterten Beispielen die Verknüpfungen häufig pro Gruppe G beschrieben. Praktisch erfolgt die Zuordnung eines jeden freien Ladegeräts L jedoch vorzugsweise nacheinander in Reihenfolge der Priorität. Ladegeräte L, die für eine mittelbare Verbindung benötigt werden, werden als bereits verkettete Ladegeräte L vorzugsweise nicht weiter zugeordnet. Dargestellt ist das Verknüpfungsprinzip bzw. Kopplungsprinzip in nicht zwingend chronologischer Reihenfolge bzw. in nicht zwingend der Reihenfolge, in der eine tatsächliche Kopplung erfolgt.

Es ist grundsätzlich bevorzugt, dass zuerst das belegte Ladegerät L mit der höchsten Priorität 7 mit allen damit unmittelbar oder mittelbar koppelbaren freien Ladegeräten L gekoppelt wird und erst anschließend, in Reihenfolge ihrer Priorität 7, weitere belegte Ladegeräte L mit dann noch koppelbaren freien Ladegeräten L gekoppelt werden. Dieser "Vorrang der höchsten Priorität" kann aber durch die Berücksichtigung weiterer Kriterien oder Bedingungen eingeschränkt oder abgeschwächt werden.

Insbesondere können eine oder mehrere der nachfolgend genannten Kriterien oder Bedingungen bei einer Kopplung von freien Ladegeräten L mit belegten Ladegeräten L berücksichtigt werden.

Eine oder mehrere der nachfolgend genannten Bedingungen können in beliebiger Reihenfolge angewendet werden und bei Bedarf auch situationsabhängig angepasst werden, beispielsweise in Abhängigkeit von der konkreten Belegung des Systems 2 bzw. der Ladegeräte L. Insbesondere ist es möglich, eine zuvor berücksichtigte Bedingung bei einer Änderung des Zustands des Systems 2 nicht mehr zu berücksichtigen oder bei einer Änderung des Zustands des Systems 2 eine weitere Bedingung (zusätzlich) zu berücksichtigen, insbesondere wenn ein belegtes Ladegerät L zu einem freien Ladegerät L wird oder umgekehrt.
Bedingung 1: Die Summe der Ladeleistungen des belegten Ladegeräts L und der damit gekoppelten freien Ladegeräte L soll einen Maximalwert bzw. eine maximale Ladeleistung nicht überschreiten. In den Darstellungsbeispielen beträgt dieser Maximalwert beispielhaft 200 kW, entsprechend der Summe der Ladeleistungen der Ladegeräte L einer Gruppe G.
Bedingung 2: Alternativ oder zusätzlich zur Maximalleistung kann eine Soll-Ladeleistung festgelegt sein oder werden, die insbesondere auch niedriger als die maximale Ladeleistung sein kann. Es ist möglich, dass auf diese Weise eine symmetrischere bzw. gleichmäßigere Verteilung der Ladeleistungen erreicht werden kann.
Bedingung 3: Alternativ oder zusätzlich ist vorzugsweise vorgesehen, dass jedes belegte Ladegerät L bzw. an einem Akkumulator 3 angeschlossene Ladegerät L (mindestens) mit der Ladeleistung des angeschlossenen Ladegeräts L geladen wird. Auf diese Weise ist insbesondere eine minimale Ladeleistung für jeden angeschlossenen Akkumulator garantierbar bzw. realisierbar. Mit anderen Worten wird in diesem Fall jeder an ein Ladegerät L angeschlossene Akkumulator 3 auch tatsächlich geladen. Optional kann jedoch auch vorgesehen sein, dass ein (eigentlich) belegtes Ladegerät L seine Ladeleistung an ein belegtes Ladegerät L höherer Priorität 7 weitergibt. Dies kann beispielsweise durch eine Bedingung realisiert werden, nach der bevorzugt alle belegten Ladegeräte L mit höherer Priorität 7 die Soll-Ladeleistung und/oder maximale Ladeleistung erreichen. Mit anderen Worten kann es also möglich sein, dass ein belegtes Ladegerät L nur dann zum Laden des angeschlossenen Akkumulators 3 verwendet wird, wenn bereits alle anderen belegten Ladegeräte L mit höherer Priorität 7 mit der Soll-Ladeleistung oder maximalen Ladeleistung versorgt sind.
Bedingung 4: Vorzugsweise erfolgt eine Kopplung von freien Ladegeräten L mit belegten Ladegeräten L nur innerhalb derselben Gruppe G.
Bedingung 5: Vorzugsweise erfolgt eine Kopplung von freien Ladegeräten L mit belegten Ladegeräten L nur innerhalb derselben Korrespondenzgruppe K.
Bedingung 6: (Nur) den belegten Ladegeräten L einer oder mehrerer bestimmter Korrespondenzgruppen K, insbesondere der ersten oder höchsten Korrespondenzgruppe K1, ist eine Kopplung mit freien Ladegeräten L innerhalb derselben Korrespondenzgruppe K erlaubt. Alternativ oder zusätzlich kann eine Kopplung innerhalb derselben Korrespondenzgruppe (nur) dann erlaubt sein, wenn eine Gruppe G nur freie Ladegeräte L aufweist bzw. keines der Ladegeräte L innerhalb einer Gruppe G ein belegtes Ladegerät L ist. Weitere Konstellationen, in denen eine Kopplung innerhalb der Korrespondenzgruppe K in Frage kommt, sind beispielsweise die Detektion eines GAPs, wie weiter unten insbesondere in Zusammenhang mit Fig. 9 beschrieben, oder eine "Verkopplung um die Ecke", um eine Weiterleitung der Ladeleistung möglichst aller freien Ladegeräte L zu ermöglichen. Auch dies ist weiter unten genauer erläutert.

Wenn eine weiter oben bereits beschriebene "automatische Mitverkopplung" von freien koppelbaren Ladegeräten L, die zwischen einem freien Ladegerät L und einem damit koppelbaren Ladegerät L liegen, erfolgt und gleichzeitig ein Grenzwert in Form einer maximalen Ladeleistung und/oder einer Soll-Ladeleistung vorgesehen ist (Bedingung 1 und/oder Bedingung 2), ist es möglich, dass bei der automatischen Mitverkopplung dieser Grenzwert überschritten wird. In diesem Fall erfolgt vorzugsweise zunächst keine Kopplung des gerade betrachteten freien Ladegeräts L, die mögliche Verkettung wird also vorzugsweise verworfen. Vorzugsweise wird anschließend geprüft, ob eine Kopplung bzw. Verkettung mit dem erreichbaren belegten Ladegerät L der nächsthöheren Priorität 7 (falls vorhanden), also der zweithöchsten Priorität 7 unter den erreichbaren belegten Ladegeräten L, gebildet werden kann. Sollte auch dies zu einer Überschreitung führen, wird wiederum geprüft, ob eine Kopplung bzw. Verkettung mit dem erreichbaren belegten Ladegerät L dritthöchsten Priorität 7 möglich ist, usw. Sollte keine Kopplung bzw. Verkettung Überschreitung des Grenzwerts möglich sein, bleibt das betrachtete Ladegerät zunächst frei und kann ggf. am Ende bei einer ,Zuordnung noch freier Ladegeräte' noch mit belegten Ladegeräten L gekoppelt werden. Vorzugsweise werden Verkettungen zu belegten Ladegeräten L, die bereits wegen Überschreitung des Grenzwerts verworfen wurden, auch dann nicht gebildet, wenn diese über einen alternativen Weg verkettet werden könnten, der nicht zu einer Leistungsüberschreitung führt. Dies ist jedoch nicht zwingend.

Diese Vorgehensweise führt in einem nicht dargestellten Beispiel, bei dem aber das System 2 eine Struktur wie in den Fig. 3 bis 13 dargestellt aufweist, zu folgenden Verkettungen: In diesem Beispiel wird angenommen, dass die Ladegeräte L13 bis L20 belegte Ladegeräte L sind, dass die Ladegeräte L1 bis L12 freie Ladegeräte L sind, und dass eine maximale Ladeleistung von 120 kW vorgesehen ist, wobei jedes Ladegerät L eine Ladeleistung von 40 kW aufweist. In diesem Fall könnte prinzipiell L1 mit L13 verbunden werden, was aber mit der entsprechenden Mitverkopplung der Ladegeräte L5 und L9 zu einer Ladeleistung von 160 kW und somit zu einer Überschreitung des Grenzwerts führen würde. Daher würde das Ladegerät L1 mit dem Ladegerät L17 gekoppelt. Analog erfolgt eine Kopplung des Ladegeräts L2 mit dem Ladegerät L18, des Ladegeräts L3 mit dem Ladegerät L19 und des Ladegeräts L4 mit dem Ladegerät L20. Anschließend würde das Ladegerät L5 unter Mitverkopplung des Ladegeräts L9 mit L13 gekoppelt, und analog würde eine Kopplung der Ladegeräte L6 und L10 mit dem Ladegerät L14, eine Kopplung der Ladegeräte L7 und L11 mit dem Ladegerät L15 und eine Kopplung der Ladegeräte L8 und L12 mit dem Ladegerät L16 erfolgen.

In einem weiteren nicht dargestellten Beispiel, bei dem aber das System 2 eine Struktur wie in den Fig. 3 bis 13 dargestellt aufweist, wird angenommen, dass die Ladegeräte L17 bis L20 belegte Ladegeräte L sind, dass die Ladegeräte L1 bis L16 freie Ladegeräte L sind, und dass eine maximale Ladeleistung von 160 kW vorgesehen ist, wobei jedes Ladegerät L eine Ladeleistung von 40 kW aufweist. Eine Verkettung des Ladegeräts L1 mit dem Ladegerät L17 über die Ladegeräte L5, L9 und L13 würde aufgrund der Überschreitung des Grenzwerts nicht erfolgen. Da eine Verkettung des Ladegeräts L1 mit dem Ladegerät L17 also bereits verworfen wurde, kann vorgesehen sein, dass auch die ebenfalls mögliche direkte Verkettung des Ladegeräts L1 mit dem Ladegerät L17 ("nach links") nicht erfolgt. Bei einem solchen Vorgehen käme es also zu einer Verkettung der Ladegeräte L5, L9 und L13 mit dem Ladegerät L17, der Ladegeräte L6, L10 und L14 mit dem Ladegerät L18, der Ladegeräte L7, L11 und L15 mit dem Ladegerät L19, und der Ladegeräte L8, L12 und L16 mit dem Ladegerät L20, sodass die Ladegeräte L17 bis L20 jeweils mit maximaler Ladeleistung geladen werden und die Ladegeräte L1 bis L4 ihre Ladeleistung nicht weitergeben. Alternativ kann aber auch eine "alternative Verknüpfung" erlaubt sein: Nach einem Verwerfen der Verkettung der Ladegeräte L1, L5, L9, L13 mit dem Ladegerät L17 käme es in diesem Fall also zu einer direkten Verkettung des Ladegeräts L1 mit dem Ladegerät L17. Letztendlich ergäbe sich bei diesem Verfahren eine Verkettung der Ladegeräte L1, L5 und L9 mit dem Ladegerät L17, eine Verkettung der Ladegeräte L2, L6 und L10 mit dem Ladegerät L18, eine Verkettung der Ladegeräte L3, L7 und L11 mit dem Ladegerät L19 und eine Verkettung der Ladegeräte L4, L8 und L12 mit dem Ladegerät L20, sodass die Ladegeräte L17 bis L20 jeweils mit der vorgesehenen maximalen Ladeleistung von 160 kW versorgt würden und wobei die Ladegeräte L13 bis L16 ihre Ladeleistung nicht weiterleiten würden.

Es kann, wie bereits zuvor erläutert, vorgesehen sein, in der jeweiligen Gruppe G und/oder Korrespondenzgruppe K die Ladeleistung eines oder mehrerer freier Ladegeräte L an oder über benachbarte (unmittelbar mit dem freien Ladegerät L koppelbare) Ladegeräte L derselben Gruppe G bzw. Korrespondenzgruppe K derart zu koppeln, dass die Ladeleistung der freien Ladegeräte L an dasjenige der belegten Ladegeräte L weitergegeben oder weitergeleitet wird, das die höchste Priorität 7 aufweist.

Im Darstellungsbeispiel erfolgt dies in der ersten Gruppe G1 mit dem Ladegerät L9 derart, dass, beispielsweise mit der Steuerung 9, zunächst geprüft wird, in welche Richtung der Zeile bzw. Kette das nächstgelegene belegte Ladegerät L der höchsten Priorität 7 vorliegt. Alternativ oder zusätzlich kann jedoch vorgesehen sein, dass innerhalb einer Gruppe G grundsätzlich zunächst geprüft wird, welche Kopplungsmöglichkeiten (ausgehend von einem belegten Ladegerät L) für ein belegtes Ladegerät "nach links" bestehen und anschließend erst Kopplungsmöglichkeiten "nach rechts" geprüft werden oder umgekehrt.

In der ersten Gruppe G1 sind die Ladegeräte L1 und L5, die zueinander benachbart sind, belegt, wobei das Ladegerät L1 die höhere Priorität aufweist. Das Ladegerät L1 ist auch (mittelbar) benachbart und folglich koppelbar mit dem Ladegerät L9; im Darstellungsbeispiel über die weiteren freien Ladegeräte L13 und L17. Folglich wird das Ladegerät L9 mit dem Ladegerät L1 über die Ladegeräte L13 und L17 derart gekoppelt, dass die Ladeleistung des Ladegeräts L9 an das Ladegerät L1 weitergebbar ist oder weitergegeben wird.

Entsprechendes erfolgt auch für das Ladegerät L13 und das Ladegerät L17, da für diese freien Ladegeräte L ebenfalls das belegte Ladegerät L derselben Gruppe G1 der höchste Priorität 7 das Ladegerät L1 ist. Infolgedessen ist das Ladegerät L1 in der Lage, einen angeschlossenen Akkumulator 3 mit insgesamt 160 kW, also im Beispiel dem vierfachen seiner eigenen Ladeleistung durch Weiterleitung der Ladeleistung von drei weiteren Ladegeräten L9, L13 und L17 zu laden. Das Ladegerät L1 der höchsten Priorität 7 der ersten Gruppe G1 kann also einen Akkumulator 3 mit einem Vielfachen seiner eigenen Ladeleistung laden und folglich den Ladevorgang entsprechend beschleunigen.

Der Akkumulator 3, der dem Ladegerät L5 zugeordnet ist, wird hier lediglich mit der Ladeleistung des Ladegeräts L5 geladen oder ist ladbar mit der Ladeleistung, die das Ladegerät L5 zur Verfügung stellt, mit dem der Akkumulator 3 verbunden ist oder verbindbar ist.

Für die zweite Gruppe G2 ergibt sich eine entsprechende Konfiguration, wobei das Ladegerät L2 die höchste Priorität 7 der Gruppe G genießt und belegt ist, sodass diejenigen freien Ladegeräte L, die direkt oder über weitere freie Ladegeräte L mit dem Ladegerät L2 der höchsten Priorität 7 koppelbar sind, mit diesen gekoppelt werden und die Ladeleistung der freien Ladegeräte L10, L14 und L18 wird entsprechend an das Ladegerät L2 der höchste Priorität 7 weitergeleitet. Auch hier ist vorzugsweise vorgesehen, dass der Akkumulator 3 des Ladegeräts L mit der niedrigeren Priorität 7 lediglich mit der Ladeleistung desjenigen Ladegeräts L6 versorgbar ist bzw. geladen wird, die das Ladegerät L6 selbst zur Verfügung stellt.

In der dritten Gruppe G3 ist lediglich ein Ladegerät L3 belegt, das gleichzeitig die höchste Priorität 7 aufweist. Folglich werden die Ladeleistungen aller weiteren freien Ladegeräte L7, L11, L15, L19 der gleichen Gruppe G3 zum Ladegerät L3 der höchste Priorität 7 weitergegeben, sodass das Ladegerät L3 der höchsten Priorität 7 L3 einen dort angeschlossenen oder anschließbaren Akkumulator 3 mit einer entsprechend der Summe der eigenen und der Ladeleistungen der weiteren freien Ladegeräte L laden kann. Hierzu können die freien Ladegeräte L über nicht dargestellte Kopplungseinrichtungen 8 entsprechend mit dem Ladegerät L3 der höchsten Priorität 7 gekoppelt werden. Hierbei wird das Ladegerät L19 direkt bzw. unmittelbar mit dem Ladegerät L3 gekoppelt und die weiteren freien Ladegeräte L15, L11 und L7 jeweils über zwischenliegende freie Ladegeräte L.

Dieselbe Konfiguration wie in der dritten Gruppe G3 liegt auch in der vierten Gruppe G4 vor, sodass auch hier die Ladeleistung aller weiteren freien Ladegeräte L8, L12, L16 und L20 durch Kopplung weitergeleitet wird zum belegten Ladegerät L4 der höchsten Priorität 7.

Eine Kopplung und Weiterleitung von Ladeleistung zwischen zueinander korrespondierenden Ladegeräten L (Ladegeräten L derselben Korrespondenzgruppe K) erfolgt im Ausführungsbeispiel gemäß Fig. 3 nicht. Bevorzugt wird geprüft, bevor ein Ladegerät L gekoppelt wird, ob in derselben Gruppe G und/oder derselben Korrespondenzgruppe K das belegte Ladegerät L der höchsten Priorität 7 vorgesehen ist. Die Kopplung erfolgt dann unmittelbar oder mittelbar über weitere freie Ladegeräte L vorzugsweise mit denjenigen belegten Ladegerät L der höchsten Priorität 7. Im Darstellungsbeispiel ist stets die Priorität 7 eines belegten Ladegeräts L derselben Gruppe G das mit der höchsten Priorität 7, weshalb in dem Beispiel gemäß Fig. 3 die freien Ladegeräte L ihre Ladeleistung ausschließlich durch Kopplungen innerhalb derselben Gruppe G weiterleiten.

Bei der Kopplung innerhalb einer Korrespondenzgruppe kann vorgesehen sein, dass grundsätzlich zunächst geprüft wird, welche Kopplungsmöglichkeiten für ein belegtes Ladegerät "nach oben" bestehen und anschließend erst Kopplungsmöglichkeiten "nach unten" geprüft werden oder umgekehrt.

Bei dem in Fig. 3 dargestellten Beispiel ist die Kopplung ausgehend von den belegten Ladegeräten L erfolgt. Folglich wurde hier zuerst das Ladegerät L1 mit dem Ladegerät L17 und anschließend (mittelbar) weiter mit den Ladegeräten L13 und L9 gekoppelt. Analog wurde anschließend bei den Ladegeräten L2, L3 und L4 verfahren. Es ergibt sich also jeweils eine Verkettung oder Kopplung "nach rechts", wie in Fig. 3 durch die Pfeile angedeutet.

Bei einer Kopplung ausgehend von den freien Ladegeräten L, insbesondere in der Reihenfolge ihrer Priorität 7, würde beispielsweise mit dem Ladegerät L7 begonnen und dieses mit dem Ladegerät L3 unmittelbar gekoppelt. Anschließend würde das Ladegerät L8 unmittelbar mit dem Ladegerät L4 gekoppelt. Für das Ladegerät L9 bestünde die Möglichkeit der unmittelbaren Kopplung mit dem Ladegerät L5 oder der mittelbaren Kopplung mit dem Ladegerät L1, wobei aber das Ladegerät L1 die höhere Priorität 7 hat. In diesem Fall ist also eine Kopplung mit dem Ladegerät L1 bevorzugt. Vorzugsweise erfolgt dann eine mittelbare Kopplung des Ladegeräts L9 mit dem Ladegerät L1 über die Ladegeräte L13 und L17.

Es ist hierbei besonders bevorzugt, wenn die zwischen dem (gerade betrachteten) zu koppelnden freien Ladegerät L, hier dem Ladegerät L9, und dem damit mittelbar zu koppelndem belegten Ladegerät L, hier dem Ladegerät L1, eine automatische Mitverkopplung der dazwischen liegenden freien Ladegeräte L, hier der Ladegeräte L13 und L17, erfolgt. Dies gilt, sofern Bedingung 1 bzw. Bedingung 2 (maximale Lade-(Soll)-Leistung) nicht erfüllt oder aktiv ist. Wenn der Leistungssollwert des zu koppelnden belegten Ladegeräts L (hier das Ladegerät L1) durch eine solche Verkettung überschritten wird, wird das betrachtete Ladegerät L (hier das Ladegerät L9) nicht an das belegte und erreichbare Ladegerät L mit der höchsten Priorität 7 (hier Ladegerät L1) angebunden. In diesem Fall würde das freie Ladegerät L9 an das erreichbare Ladegerät L mit nächsthöherer Priorität 7 (hier das Ladegerät L5) angebunden.

Entsprechend werden anschließend die Ladegeräte L10, L14 und L18 mit dem Ladegerät L2 gekoppelt. Anschließend werden die Ladegeräte L11, L12, L15, L16, L19 und L20 in dieser Reihenfolge jeweils mittelbar abwechselnd mit den Ladegerät L3 und dem Ladegerät L4 gekoppelt, sodass sich insgesamt die in Fig. 3 dargestellte Leistungsvererbung bzw. Weiterleitung der Ladeleistung ergibt.

Bei der gerade beispielhaft erläuterten Variante der Kopplung der Ladegeräte L ausgehend von den freien Ladegeräten L ergeben sich also ebenfalls die in Fig. 3 dargestellten Ladeleistungen der belegten Ladegeräte L1 bis L6, wobei aber die Kopplung innerhalb der Gruppen G3 und G4 "nach links" statt (wie dargestellt) "nach rechts" erfolgt.

Bei dem in Fig. 3 dargestellten Belegungszustand des Systems 2 wäre es auch möglich, (entsprechend der zuvor erläuterten Bedingung 3) keine Ladeleistung zu garantieren. In diesem Fall würde auch die Ladeleistung der Ladegeräte L5 und L6 an das jeweilige belegte Ladegerät L der Gruppe G1, G2 mit der höchsten Priorität 7, also an das Ladegerät L1 bzw. L2 weitergegeben. Es würden also die Ladegeräte L1 bis L4 mit der maximalen Ladeleistung, hier 200 kW, versorgt und die an die Ladegeräte L5 und L6 angeschlossenen Akkumulatoren 3 würden (temporär) nicht geladen.

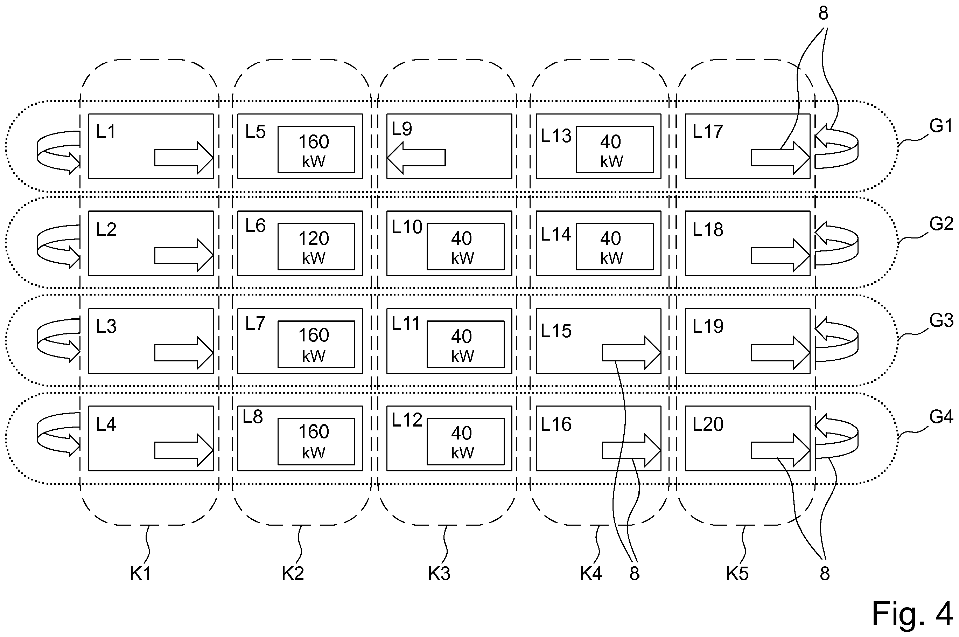

Fig. 4 zeigt eine entsprechende schematische Ansicht eines vorschlagsgemäßen Systems 2 in einem anderen, zweiten Status. Hier ist es so, dass die Ladegeräte L1 bis L4 freie Ladegeräte L sind, beispielsweise aufgrund der Tatsache, dass entsprechende Akkumulatoren 3, die an den Ladegeräten L1 bis L4 angeschlossen sind, bereits vollständig geladen sind. Alternativ können ein oder mehrere der Ladegeräte L1 bis L4 auch dadurch freie Ladegeräte L bilden, dass entsprechende Akkumulatoren 3 voll, nicht mehr zugeordnet sind und/oder beispielsweise vom Anschluss 6 getrennt sind.

In der ersten Gruppe G1 im Ausführungsbeispiel gemäß Fig. 4 gilt entsprechendes auch für das Ladegerät L9 der ersten Gruppe G1. Das Ladegerät L1 der ersten Gruppe G1 könnte nun entweder mit dem Ladegerät L5 oder über das Ladegerät L17 mit dem Ladegerät L13 verbunden werden, da diese Ladegeräte L in derselben Gruppe G belegt sind. Die Kopplung erfolgt daher vom Ladegerät L1 zum Ladegerät L5, da das Ladegerät L5 eine höhere Priorität 7 als das Ladegerät L13 aufweist. Entsprechendes erfolgt auch für das ebenfalls freie Ladegerät L9, das grundsätzlich mit dem belegten Ladegerät L5 und dem belegten Ladegerät L13 koppelbar wäre und folglich mit dem Ladegerät L der höheren Priorität 7, nämlich dem Ladegerät L5 zur Weitergabe von Ladeleistung gekoppelt wird.

Schlussendlich ist in der ersten Gruppe G1 noch das Ladegerät L17 ein freies Ladegerät, das unmittelbar benachbart ist zum Ladegerät L13 und über das Ladegerät L1 mittelbar benachbart bzw. koppelbar ist mit dem Ladegerät L5. Auch hier weist das Ladegerät L5 die höchste Priorität 7 unter denjenigen Ladegeräten L auf, die belegt sind und direkt oder über weitere freie Ladegeräte L koppelbar sind. Folglich wird das Ladegerät L17 - im Darstellungsbeispiel über das Ladegerät L1 - mit dem Ladegerät L5 derart gekoppelt, dass eine Ladeleistung an das Ladegerät L5 weitergegeben wird oder weitergebbar ist.

In der zweiten Gruppe G2 sind zwei zueinander benachbarte Ladegeräte L2, L18 freie Ladegeräte L. Diese grenzen unmittelbar oder mittelbar über ein anderes freies Ladegerät L an die belegten Ladegeräte L6 und L14 an. Von diesen hat das Ladegerät L6 die höhere Priorität 7, sodass beide freie Ladegeräte L mit dem Ladegerät L6 gekoppelt werden, sodass die Ladeleistung an das Ladegerät L6 weitergegeben oder weitergebbar ist. Das Ladegerät L6 hat folglich zu der eigenen Ladeleistung ergänzend die Ladeleistung der Ladegeräte L18 und L2 zur Verfügung, sodass dem Ladegeräte L6 insgesamt 120 kW zur Verfügung stehen, um einen Ackumulator 3 zu laden, also die Summe der eigenen Ladeleistung und der Ladeleistungen der beiden hiermit gekoppelten freien Ladegeräte L.

Bei der dritten Gruppe G3 sind drei freie Ladegeräte L15, L19 und L3 direkt oder mittelbar benachbart bzw. koppelbar mit den belegten Ladegeräten L7 und L11. Aufgrund der höheren Priorität 7 des Ladegeräts L7 werden folglich alle drei freien Ladegeräte L15, L19 und L3 mit dem belegten Ladegerät L7 gekoppelt.

Entsprechendes erfolgt mit der vierten Gruppe G4 im Darstellungsbeispiel gemäß Fig. 4, wo die freien Ladegeräte L16, L20 und L4 grundsätzlich mit den Ladegeräten L8 und L12 koppelbar wären, von denen jedoch das Ladegerät L8 die höhere Priorität 7 aufweist, weshalb die freien Ladegeräte L mit diesen gekoppelt werden und dem belegten Ladegerät L8 folglich die insgesamt vierfache der eigenen Ladeleistung, hier 160 kW, zur Verfügung stehen.

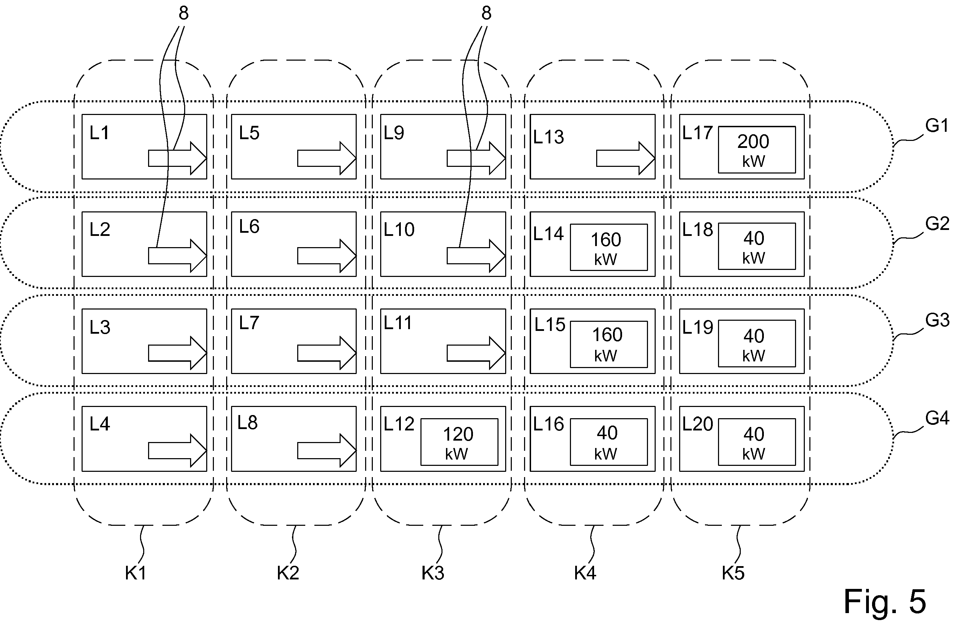

In Fig. 5 ist das vorschlagsgemäße System 2 in einem weiteren Zustand dargestellt. Hier sind zahlreiche Ladegeräte L höherer Prioritäten 7 freie Ladegeräte L. Beispielsweise handelt es sich um ein System 2 für den Betriebshof 1, bei dem die meisten Elektrofahrzeuge 4 bereits vollständig geladen sind, die Akkumulatoren 3 derjenigen Elektrofahrzeuge 4 an den Ladegeräten L1 bis L11 und L13 also bereits vollständig geladen sind. Alternativ oder zusätzlich sind einige der genannten Ladegeräte L bereits dadurch freie Ladegeräte L, dass Akkumulatoren 3 von dem jeweiligen Ladegerät L abgekoppelt worden sind und entsprechende Elektrofahrzeuge 4 bedarfsweise vom Betriebshof 1 gefahren sind. Mit anderen Worten ist es möglich, dass bei zuvor belegten Ladegeräten L durch Entfernen der Zuordnung, was durch Abkoppeln eines Akkumulators 3, durch Identifikation des Freiwerdens eines Stellplatzes 11 o. dgl. erfolgen kann, ein oder mehrere der Ladegeräte L freigeworden sind und nunmehr als freie Ladegeräte L zur Weitergabe von Ladeleistung zur Verfügung stehen (trotz hoher Priorität 7).

In Fig. 5 ist in der Gruppe G1 lediglich ein belegtes Ladegerät L17, das die niedrigste Priorität 7 der Ladegeräte L der ersten Gruppe G1 hat. Die freien Ladegeräte L1, L5, L9 und L13 werden folglich trotz der niedrigen Priorität 7 mit dem einzigen belegten Ladegerät L17 derart gekoppelt, dass deren Ladeleistung an das einzige belegte Ladegerät L17 weitergegeben wird und das Ladegerät L17 mit der Summe der Ladeleistungen - hier dem fünffachen der eigenen Ladeleistung, nämlich 200 kW - ausgestattet ist, um einen zugeordneten, insbesondere angeschlossenen, Akkumulator 3 zu laden.

In der zweiten Gruppe G2 sind drei freie Ladegeräte L2, L6, L10 direkt oder mittelbar benachbart zu den beiden belegten Ladegeräten L14 und L18. Von diesen belegten Ladegeräten L14, L18 weist das Ladegerät L14 die höhere Priorität 7 auf, sodass die drei freien Ladegeräte L2, L6, L10 mit diesem gekoppelt werden und dem Ladegerät L14 folglich die Summe der Ladeleistungen zur Verfügung steht - hier 160 kW.

Entsprechendes wie für die zweite Gruppe G2 gilt auch für die dritte Gruppe G3. In der vierten Gruppe G4 sind nur zwei freie Ladegeräte L4 und L8 vorhanden, die unmittelbar oder mittelbar benachbart sind, also koppelbar sind - direkt oder über freie Ladegeräte L - mit den belegten Ladegeräten L12 und L20. Von diesen weist das Ladegerät L12 die höhere Priorität 7 auf, sodass die Ladeleistung der freien Ladegeräte L4, L8 an das belegte Ladegerät L12 weitergeleitet wird. Das belegte Ladegerät L16 weist kein freies Ladegerät L auf, das in derselben Gruppe G4 benachbart angeordnet ist, sodass an das belegte Ladegerät L16 keine zusätzliche Ladeleistung weitergegeben werden kann. Entsprechendes gilt auch für das belegte Ladegerät L20, das aufgrund seiner niedrigen Priorität 7 trotz benachbarten freien Ladegeräten L derselben Gruppe G4 keine ergänzende Ladeleistung weitergeleitet bekommt. Die belegten Ladegeräte L16 und L20 laden jedoch vorzugsweise mit ihrer eigenen Ladeleistung die ihnen zugeordneten bzw. angeschlossenen Akkumulatoren 3.

Insbesondere ergibt sich die in Fig. 5 dargestellte Verkopplung automatisch, wenn die Kopplung der freien Ladegeräte L mit den belegten Ladegeräten L ausgehend von den freien Ladegeräten L erfolgt, wobei die Kopplung nach Reihenfolge der Priorität 7 der freien Ladegeräte L erfolgt und eine weiter oben bereits erwähnte "automatische Mitverkopplung" von freien dazwischen liegenden Ladegeräten L erfolgt.

Bei dem in Fig. 5 dargestellten Beispiel wäre es auch denkbar, den Ladegeräten L der Korrespondenzgruppe K4 nur eine Kopplung mit Ladegeräten L aus derselben Korrespondenzgruppe K4 zu erlauben. Dann würde abweichend von der dargestellten Kopplung bzw. Verschaltung auch das Ladegerät L13 mit dem Ladegerät L14 gekoppelt, sodass das Ladegerät L14 mit 200 kW Ladeleistung versorgt würde und das Ladegerät L17 mit den Ladegeräten L9, L5 und L1 gekoppelt wäre und dementsprechend mit 160 kW Ladeleistung versorgt würde.

Fig. 6 zeigt einen weiteren beispielhaften Zustand des vorschlagsgemäßen Systems 2. Hier ist das Ladegerät L2 frei, sodass seine Ladeleistung weitergegeben werden kann. Benachbart ist das freie Ladegerät L2 unmittelbar zu den belegten Ladegeräten L1, L3 und L6 sowie mittelbar über das freie Ladegerät L18 mit dem belegten Ladegerät L14. Von diesen belegten Ladegeräten L, die entweder durch unmittelbare Kopplung oder durch Kopplung mittels anderer freier Ladegeräte L derselben Gruppe G oder Korrespondenzgruppe K koppelbar sind, weist das Ladegerät L1 die höchste Priorität 7 auf. Folglich wird die Ladeleistung des freien Ladegeräts L2 an das belegte Ladegerät L1 weitergegeben.

Ferner ist das freie Ladegerät L4 koppelbar mit den belegten Ladegeräten L3, L8, L1 und L12. Auch von diesen Ladegeräten weist das Ladegerät L1 die höchste Priorität auf, sodass das freie Ladegerät L4 vorzugsweise mit dem belegten Ladegerät L1 gekoppelt wird, sodass seine Ladeleistung an das Ladegerät L1 weitergegeben wird.

Das Ladegerät L1 erhält ergänzend die Ladeleistung des freien Ladegeräts L17. Das Ladegerät L17 ist innerhalb der ersten Gruppe G1 mit den Ladegeräten L13 und L1 koppelbar, wovon das Ladegerät L1 die höhere Priorität 7 hat, sodass die Kopplung mit dem Ladegerät L1 erfolgt.

Im Ergebnis erhält also das belegte Ladegerät L1 Ladeleistung von den freien Ladegeräten L2, L4 und L17, sodass das belegte Ladegerät L1 einen Akkumulator 3 mit der Summe der zur Verfügung stehenden Ladeleistungen, hier exemplarisch 160 kW, laden kann.

Die belegten Ladegeräte L5 bis L13 und L15 werden mangels koppelbarer freier Ladegeräte L nicht mit zusätzlicher Ladeleistung versorgt, sodass diese einen zugeordneten Akkumulator 3 lediglich mit der eigenen Ladeleistung versorgen.

Das freie Ladegerät L19 ist unmittelbar koppelbar mit den belegten Ladegeräten L3 und L15, von denen das Ladegerät L3 die höhere Priorität aufweist, sodass die Kopplung des freien Ladegeräts L19 mit dem belegten Ladegerät L3 erfolgt und das Ladegerät L3 folglich einen Akkumulator 3 mit der Summe der eigenen Ladeleistung und der von dem Ladegerät L19 zur Verfügung gestellten Leistung laden kann.

Vorzugsweise wird ein Ladegerät L jeweils nur so gekoppelt oder ist mittels der Kopplungseinrichtung 8 koppelbar, das die Ladeleistung nur an genau ein belegtes Ladegerät L weitergebbar ist. Ferner ist bevorzugt, dass eine Weiterleitung von Ladeleistung an ein Ladegerät L der höchsten Priorität 7 Vorrang hat.

Dies hat im Darstellungsbeispiel gemäß Fig. 6 Einfluss auf die Kopplung des freien Ladegeräts L18. Das freie Ladegerät L18 ist unmittelbar benachbart bzw. koppelbar mit dem belegten Ladegerät L14. Grundsätzlich käme auch eine Kopplung des freien Ladegeräts L18 innerhalb der Korrespondenzgruppe K5 in Betracht. Hier ist jedoch kein belegtes Ladegerät L vorhanden, sodass eine Kopplung innerhalb der Korrespondenzgruppe K5 nicht in Betracht kommt.

Weiter scheidet eine Kopplung des freien Ladegeräts L18 über das freie Ladegerät L2 mit dem belegten Ladegerät L6 dadurch aus, dass das freie Ladegerät L2 mit dem belegten Ladegerät L1 der höheren Priorität 7 gekoppelt wird oder ist. Eine gleichzeitige Kopplung des Ladegeräts L2 mit dem prioritätshöheren Ladegerät L1 und ein Weiterleiten von Ladeleistung an das Ladegerät L6 ist vorzugsweise nicht vorgesehen. Zu diesem Zwecke müsste das Ladegerät L2 nämlich Kopplungen mit zwei unterschiedlichen belegten Ladegeräten L1, L6 zur Weiterleitung von Ladeleistung an beide belegte Ladegeräte L1, L6 herstellen, was vorzugsweise nicht vorgesehen ist.

Insgesamt ist vorzugsweise eine Kopplung von Ladegeräten L und auch eine mittelbare Kopplung über benachbarte Ladegeräte L ausschließlich innerhalb der Gruppe G oder (alternativ) innerhalb der Korrespondenzgruppe K vorgesehen, nicht jedoch eine gleichzeitige Kopplung eines der Ladegeräte L sowohl innerhalb seiner Gruppe G als auch innerhalb seiner Korrespondenzgruppe K.

Dies führt im Ergebnis dazu, dass das freie Ladegerät L18 nicht über das freie Ladegerät L2 mit dem belegten Ladegerät L6 verbindbar ist, sodass das freie Ladegerät L18 nur mit dem Ladegerät L14 koppelbar ist und gekoppelt wird, sodass das Ladegerät L14 einen Akkumulator 3 mit der Summe seiner Ladeleistung und der Ladeleistung des freien Ladegeräts L18 laden kann.

Entsprechendes gilt auch für die vierte Gruppe G4, in der zwei freie Ladegeräte L16, L20 zusätzlich zu den bereits mit dem Ladegerät L1 gekoppelten freien Ladegerät L4 zur Verfügung stehen. Aufgrund der Kopplung des Ladegeräts L4 in der Korrespondenzgruppe K1 ist eine Kopplung der freien Ladegeräte L16, L20 mit dem belegten Ladegerät L8 über das freie Ladegerät L4 nicht möglich. Ausgehend von dem freien Ladegerät L16 kann die Ladeleistung folglich nur an die (hier unmittelbar benachbarten) Ladegeräte L12, L15 und L13 weitergegeben werden. Von diesen hat das Ladegerät L12 die höchste Priorität 7, sodass die Weiterleitung der Ladeleistung des freien Ladegeräts L16 an das belegte Ladegerät L12 erfolgt.

Entsprechendes erfolgt auch für die Weiterleitung der Ladeleistung des freien Ladegeräts L20, dessen Ladeleistung über das Ladegerät L16 an das belegte Ladegerät L12 weitergeleitet wird. Im Ergebnis enthält das belegte Ladegerät L12 daher die Summe der eigenen Ladeleistung und der zweier freier Ladegeräte L16, L20, sodass dem Ladegerät L12 im Beispiel 120 kW zum Laden eines Akkumulators 3 zur Verfügung stehen.

Fig. 7 zeigt eine weitere, vereinfachte schematische Ansicht des vorschlagsgemäßen Systems 2 in einem weiteren Zustand. Dieser Zustand kann als "Folgezustand" des in Fig. 6 dargestellten Zustands aufgefasst werden, bei dem das Ladegerät L1 nun frei ist, da beispielsweise der dem Ladegerät L1 zugeordnete Akkumulator 3 bereits vollständig geladen wurde. Die Verschaltung innerhalb von Korrespondenzgruppe K1 ist wie gehabt zulässig. Hier sind insbesondere die Ladegeräte L1, L2 und L4 freie Ladegeräte L derselben Korrespondenzgruppe K1 (Spalte). Das freie Ladegerät L1 kann hierbei über eines der freien Ladegeräte L2, L4 mit dem belegten Ladegerät L3 oder mit den belegten Ladegeräten L5 oder L13 verbunden werden. Die Ladegeräte L5, L13 der selben Gruppe G1, die direkt oder über ein anderes freies Ladegerät L mit dem Ladegerät L1 gekoppelt werden könnten, weisen jedoch eine geringere Priorität 7 als das belegte Ladegerät L3 derselben Korrespondenzgruppe K des Ladegeräts L1 auf. Folglich wird das Ladegerät L1, im Darstellungsbeispiel über das Ladegerät L2, mit dem Ladegerät L3 gekoppelt, so dass Ladeleistung vom Ladegerät L1 an das Ladegerät L3 weitergegeben werden können.

Entsprechendes gilt auch für das Ladegerät L2, das in derselben Gruppe G2 mit den belegten Ladegeräten L6 und L14 gekoppelt werden könnte, in derselben Korrespondenzgruppe K hingegen mit dem belegten Ladegerät L3 der höheren Priorität 7, so dass auch das Ladegerät L2 mit dem Ladegerät L3 gekoppelt wird, um dem Ladegerät L3 die Ladeleistung des Ladegeräts L2 weiterzugeben.

Entsprechendes erfolgt auch durch das Ladegerät L4, das mit dem Ladegerät L3 gekoppelt wird, da das Ladegerät L3 eine höhere Priorität 7 aufweist als die belegten Ladegeräte L8 und L12 derselben Gruppe G4, mit denen das freie Ladegerät L4 alternativ koppelbar wäre.

Das freie Ladegerät L17 wird mit dem unmittelbar benachbarten belegten Ladegerät L13 gekoppelt, da über das grundsätzlich freie Ladegerät L1 derselben Gruppe Ladeleistung nicht an das Ladegerät L5 weitergeleitet werden kann, da das Ladegerät L1 bereits mit dem Ladegerät L3 innerhalb der Korrespondenzgruppe K1 gekoppelt ist.

Wenn ein freies Ladegerät L also bereits in der Korrespondenzgruppe K mit einem prioritätshöheren anderen Ladegerät L zu koppeln ist oder gekoppelt ist, steht ein solches freies Ladegerät L nicht mehr für die Kopplung innerhalb der Gruppe G zur Verfügung. Entsprechendes gilt vorzugsweise auch umgekehrt, so dass ein freies Ladegerät L, was bereits innerhalb der Gruppe G mit einem prioritätshöheren Ladegerät L gekoppelt oder zu koppeln ist, dies freie Ladegerät L nicht zum Weiterleiten von Ladeleistung innerhalb der Korrespondenzgruppe K verwendet wird oder verwendet werden kann.

Ein entsprechendes Ergebnis ergibt sich auch für das freie Ladegerät L18, das mit dem belegten Ladegerät L14 gekoppelt wird, da das im Grunde prioritätshöhere Ladegerät L6 aufgrund der Kopplung des Ladegeräts L2 mit dem Ladegerät L3 nicht für eine Weiterleitung der Ladeleistung vom dem Ladegerät L18 an das Ladegerät L6 zur Verfügung steht. Folglich ist das prioritätshöchste Ladegerät L, mit dem Ladegerät L18 koppelbar ist, das Ladegerät L14. Mit diesem ist das Ladegerät L18 im Darstellungsbeispiel gemäß Fig. 7 auch gekoppelt, so dass diesen zusätzlich zu der eigenen Ladeleistung die Ladeleistung des Ladegeräts L18 zur Verfügung steht.

Das freie Ladegerät L19 ist innerhalb derselben Gruppe sowohl unmittelbar benachbart zu dem Ladegerät L15 als auch zu dem Ladegerät L3. Folglich wird das Ladegerät L15 mit dem Ladegerät L3 gekoppelt oder ist mit diesem gekoppelt.

Da mit dem Ladegerät L3 sowohl die Ladegeräte L1, L2 und L4 derselben Korrespondenzgruppe K als auch mit dem Ladegerät L19 derselben Gruppe G gekoppelt ist, steht dem Ladegerät L3 die Summe dieser Ladeleistungen, im Darstellungsbeispiel beispielhaft 200 kW, zur Verfügung.

Die freien Ladegeräte L16 und L20 können aufgrund der Kopplung des Ladegeräts L4 innerhalb der Korrespondenzgruppe K nur mit dem belegten Ladegerät L12 gekoppelt werden. Durch diese Kopplung erhält das Ladegerät L12, im Darstellungsbeispiel gemäß Fig. 7, folglich die zusätzliche Ladeleistung der Ladegeräte L16 und L20, was im Ausführungsbeispiel zu einer verfügbaren Ladeleistung am Ladegerät L12 von insgesamt 120 kW führt.

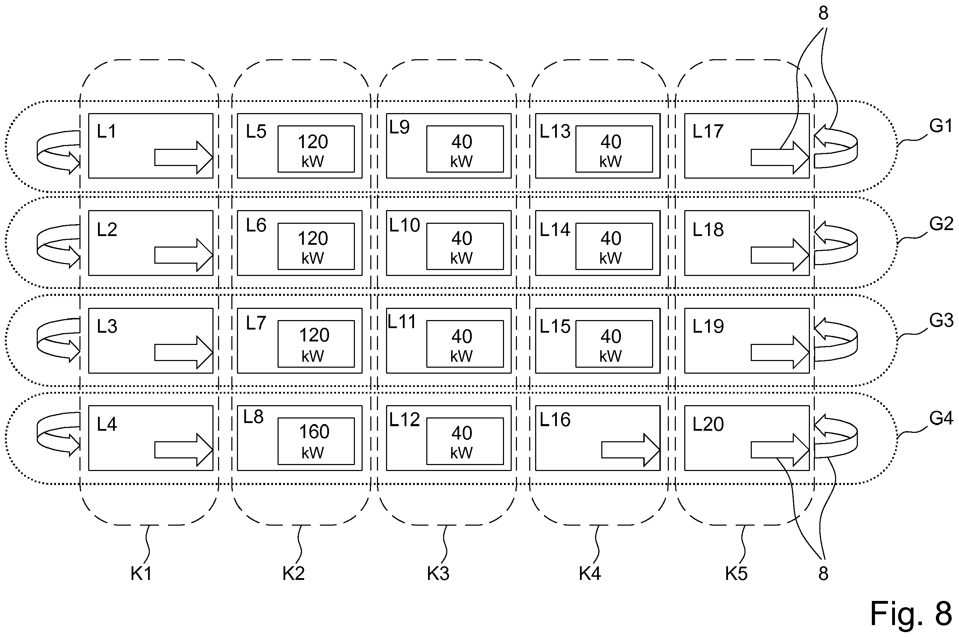

Fig. 8 zeigt das vorschlagsgemäße System 2 in einem Zustand, der charakteristisch ist für ein Depot 1, bei dem 15 Elektrofahrzeuge 4 mit einem jeweils ähnlichen Ladezustand sukzessiv angekommen sind. Den zu den Elektrofahrzeugen 4 zugehörigen Akkumulatoren 3 ist dann bei Ankunft im Depot 1 zeitlich aufeinanderfolgend jeweils das freie Ladegerät L mit freiem Anschluss 6 der höchsten Priorität 7 zugeordnet worden. Auf diese Weise wurden sukzessive die Ladegerät L1 bis L15 zugeordnet, die Akkumulatoren 3 angeschlossen und der Ladeprozess startete. Aufgrund der Tatsache, dass, wie beispielhaft auch anhand des Zustands aus Fig. 4 zu erkennen, die Ladegeräte der höchsten Priorität L1, L2, L3 und L4 die höchste Ladeleistung am Anfang erhalten, sind diese Akkumulatoren 3 frühzeitig wieder geladen und die Ladegeräte L1, L2, L3, L4 werden zu freien Ladegeräten L, können also ihre Ladeleistung an belegte Ladegeräte L weitergeben.

Beispielhaft kann der in Fig. 8 dargestellte Zustand als Folgezustand des im Zusammenhang mit Fig. 7 beschriebenen Zustands aufgefasst werden, bei dem das Ladegerät L3 nun auch als freies Ladegerät L zur Verfügung steht.

So ist im Darstellungsbeispiel gemäß Fig. 8 das Ladegerät L1 ein freies Ladegerät L und benachbart zum Ladegerät L5, was das Ladegerät L der gleichen Gruppe G1 mit der höchsten Priorität 7 darstellt, weshalb das Ladegerät L1 mit dem Ladegerät L5 zur Weitergabe der Ladeleistung an das Ladegerät L5 koppelbar ist oder gekoppelt wird. Eine alternative Weiterleitung der Ladeleistung des Ladegeräts L1 an das belegte Ladegerät L13 kommt aufgrund der niedrigeren Priorität 7 des Ladegeräts L13 nicht in Betracht.

Bezüglich des Ladegeräts L17 ergibt sich Entsprechendes. Auch hier kann die Ladeleistung an das Ladegerät L13 und über das Ladegerät L1 an das Ladegerät L5 weitergereicht oder weitergeleitet werden. Aufgrund der höheren Priorität 7 erfolgt auch hier dann im Ergebnis die Kopplung und Weiterleitung der Ladeleistung des Ladegeräts L17 an das Ladegerät L5. Das Ladegerät L5 lädt den zugeordneten Akkumulator 3 dann folglich mit der Summe der Ladeleistungen der Ladegeräte L1, L5 und L17, was im Darstellungsbeispiel 120 kW Ladeleistung ergibt. Die weiteren belegten Ladegeräte L9 und L13 laden ihre Akkumulatoren 3 jeweils ausschließlich mit der eigenen Ladeleistung.

Entsprechendes ergibt sich für die zweite Gruppe G2 und die dritte Gruppe G3 bzw. die Ladegeräte L18, und L19, weshalb hier von einer wiederholten Erläuterung abgesehen wird.

In der vierten Gruppe G4 wird aufgrund der höchsten Priorität 7 des Ladegeräts L8 in dieser Gruppe die Ladeleistung der freien Ladegeräte L4, L16 und L20 zu dem belegten Ladegerät L8 weitergegeben, so dass das Ladegerät L8 einen Akkumulator 3 mit der Summe der zur Verfügung gestellten Ladeleistungen einschließlich der eigenen Ladeleistung laden kann - im Beispiel 160 kW aus insgesamt 4x40 kW. Das belegte Ladegerät L12 der vierten Gruppe G4 mit der geringeren Priorität 7 mit der Wertigkeit "12" wird nicht mit zusätzlicher Ladeleistung von anderen Ladegeräten versorgt, kann den zugeordneten Akkumulator 3 jedoch mit der eigenen Ladeleistung (im Darstellungsbeispiel 40 kW) laden.

Die Akkumulatoren 3 bzw. Elektrofahrzeuge 4, die mit den Ladegeräten L der höchsten Priorität L1, L2, L3, L4 bereits geladen worden sind, stehen im Darstellungsbeispiel gemäß Fig. 8 bereits wieder zur Nutzung zur Verfügung.

Aufgrund der Konzentration der Ladeleistung entsprechend der Prioritäten 7 der Ladegeräte L, werden die an diese Prioritäten 7 anschließenden Ladegeräte L nunmehr mit einer erhöhten Ladeleistung versorgt, so dass die Akkumulatoren 3 dieser Ladegeräte L5, L6, L7, L8 vorrangig geladen werden und voraussichtlich als nächstes vollständig geladen sind, so dass Akkumulatoren 3 und Elektrofahrzeuge 4 aufgrund der prioritätsabhängigen Zuordnung zumindest im Wesentlichen in der Reihenfolge wieder zur Verfügung stehen, in der die Zuordnung erfolgt ist.

Nachdem die Zuordnungen vorzugsweise zeitlich aufeinander folgen, beispielsweise durch Eintreffen der Elektrofahrzeuge 4 bzw. Akkumulatoren 3 im Depot 1 erfolgt, kann in vorteilhafterweise ein First-In-First-Out-Prinzip mit dem vorschlagsgemäßen System 2 besonders schnell und mit überschaubarer Komplexität und überschaubarem Aufwand ermöglicht werden.

Im Ausführungsbeispiel gemäß Fig. 9 ist ein weiterer Zustand des vorschlagsgemäßen Systems 2 dargestellt. Hierbei handelt es sich vorzugsweise um einen Zustand des Systems 2, bei dem alle 20 Ladegeräte L zugeordnet sind oder jedenfalls waren. Hier ist es also so, dass die Akkumulatoren derjenigen Ladegeräte L mit der höheren Priorität L1-L6, L8-L10 und L12 bereits vollständig geladen worden sind.

Besonderheit dieses Zustands ist, dass aus der zweiten Korrespondenzgruppe K2 nur noch ein Ladegerät L7 belegt ist und auch aus der nächsthöheren Korrespondenzgruppe K3 mit Ladegeräten L der nächstniedrigeren Prioritäten 7 ist nur noch ein Ladegerät L11 belegt. Dies kann der Fall sein, wenn ein Akkumulator 3, hier der dem Ladegerät L7 zugeordnete, eine sehr viel höhere Kapazität aufweist oder sehr viel stärker entladen ist, als die Akkumulatoren 3, die den anderen Ladegeräten L zugeordnet worden sind oder waren.

In dieser Konstellation wird ein sogenanntes "GAP" detektiert, was bedeutet, dass noch einzelne Ladegeräte L einer der Korrespondenzgruppen K mit Ladegeräten L höherer Prioritäten 7 belegt sind, während Korrespondenzgruppen K mit Ladegeräten L niedrigerer Priorität 7 mehrere belegte Ladegeräte L aufweisen oder alle belegt sind.

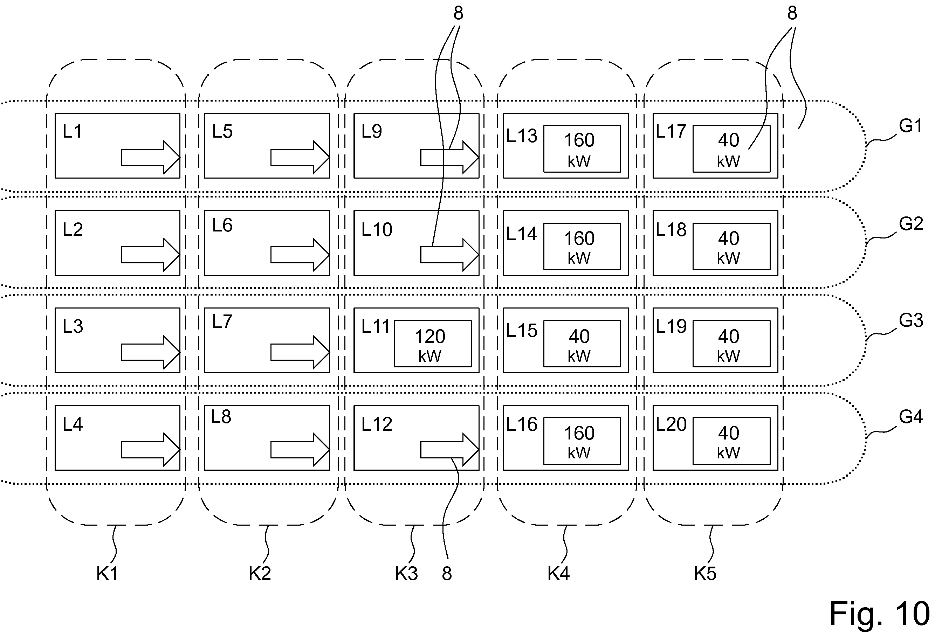

In den Beispiel aus Fig. 9 hat das GAP die Größe "1 ". Die Größe des GAPs ist dabei definiert als die Anzahl der Korrespondenzgruppen K, die zwischen der "höchsten" Korrespondenzgruppe K mit (genau einem) belegten Ladegerät L - im Darstellungsbeispiel die Korrespondenzgruppe K2 - und der nächsthöheren Korrespondenzgruppe K mit mehr als einem belegten Ladegerät L - im Darstellungsbeispiel die Korrespondenzgruppe K4 - liegen. Im Darstellungsbeispiel ist dies genau eine Korrespondenzgruppe K, nämlich die Korrespondenzgruppe K3, sodass die Größe des GAPs hier "1" beträgt. In dem in Fig. 10 dargestellten Systemzustand beträgt die Weite des GAPs "0".

In Fall eines GAPs kann - abweichend vom üblichen Verfahren - vorgesehen sein, vorzugsweise zunächst alle freien Ladegeräte L derselben Korrespondenzgruppe K (hier K2) und/oder derselben Gruppe G (hier G3), soweit sie unmittelbar oder über ein weiteres freies Ladegerät L mit dem belegten Ladegerät L (hier L7) koppelbar sind, mit diesem zu koppeln, so dass der Ladevorgang des Akkumulators 3, der mit dem Ladegerät L7 verbunden ist, beschleunigt wird. Dabei kann auch vorgesehen, nur ab einer bestimmten Größe des GAPs von einem üblichen Verfahren abzuweichen und spezielle Bedingungen oder Kopplungen, insbesondere Kopplungen innerhalb einer Korrespondenzgruppe K, vorzusehen oder erlauben, beispielsweise ab bzw. bei einer Größe des GAPs von 0, 1 , oder 2.

Die freien Ladegeräte L1, L2 und L4 können aufgrund der Kopplung der Ladegeräte L5, L6 und L8 innerhalb der Korrespondenzgruppe K3 mit dem Ladegerät L7 nicht mit den grundsätzlich prioritätshöchsten belegten Ladegeräten L13, L14 und L16 der jeweils selben Gruppe gekoppelt werden, weshalb eine Kopplung hier mit dem einzig koppelbaren belegten Ladegerät L erfolgt, nämlich die Kopplung des Ladegeräts L1 mit dem Ladegerät L17, des Ladegeräts L2 mit dem Ladegerät L18 und des Ladegeräts L4 mit dem Ladegerät L20.

Grundsätzlich ist vorgesehen, dass aufgrund der höheren Priorität 7 des Ladegeräts L11 die Ladegeräte L9, L10 und L12 mit diesem gekoppelt werden. Im Darstellungsbeispiel ist dies - abweichend von der grundsätzlichen Funktionsweise - nicht der Fall. Hier wird abweichend eine Kopplung ausschließlich in den jeweiligen Gruppen G1, G2, G4, nämlich im Beispiel zwischen dem Ladegerät L9 und dem Ladegerät L13 sowie zwischen dem Ladegerät L10 und dem Ladegerät L14 und weiter zwischen dem Ladegerät L12 und dem Ladegerät L16 vorgenommen. Es ist also möglich, bei Detektion eines GAPs, bei dem in mehreren Korrespondenzgruppen K jeweils nur noch ein belegtes Ladegerät L vorhanden ist, ein sogenannter "Forward-Betrieb" bei denjenigen freien Ladegeräten L durchgeführt wird, die nicht mit dem Ladegerät L der höchsten Priorität 7, hier L7, koppelbar ist. Hierbei erfolgt dann eine Kopplung bestimmter freier Ladegeräte L nur innerhalb der jeweiligen Gruppe G, was zu dem in Fig. 9 dargestellten Modus des Systems 2 führt. Anwendungsspezifisch kann im Falle eines GAPs auf diesen "Forward-Betrieb" verzichtet werden. In dem Fall würden, wie erwähnt, die Ladegeräte L9, L10 und L12 mit dem Ladegerät L11 verbunden bzw. gekoppelt.

Auch in dem Zustand gemäß Fig. 10 liegt ein sogenannter "Forward-Betrieb" oder "Linear-Feed-Forward-Betrieb" vor, bei dem, insbesondere in Abhängigkeit von bestimmten Bedingungen oder Kriterien, eine Kopplung eingeschränkt wird oder ist auf die jeweilige Gruppe G. Kopplungen innerhalb der Korrespondenzgruppen K werden hingegen blockiert. Der Forward-Betrieb entspricht der weiter oben genannten Bedingung 4. Bei dem in Fig. 10 dargestellten Beispiel entspricht der Forward-Betrieb auch der Vorgehensweise, bei der die freien Ladegeräte L in der Reihenfolge ihrer Priorität 7 jeweils mit dem erreichbaren belegten Ladegerät L mit der höchsten Priorität 7 gekoppelt werden.

Konkret bedeutet der Forward-Betrieb in Fig. 10, dass mit der Beschränkung auf die Kopplung innerhalb der Gruppen G, dort jeweils mit dem Ladegerät L der höchsten Priorität 7 derselben Gruppe G, die Ladegeräte L1, L5 und L9 also mit dem Ladegerät L13 gekoppelt werden. Die Ladegeräte L2, L6 und L10 werden mit dem Ladegerät L14 gekoppelt.

Die Ladegeräte L3 und L7 werden mit dem Ladegerät L11 gekoppelt. Ferner werden die Ladegeräte L4, L8 und L12 mit dem Ladegerät L16 gekoppelt. Dieser Betrieb hat den Vorteil, dass die Ladegeräte L13, L14 und L16 mit zusätzlicher Energie versorgt werden können.

Bei einer Verkopplung der freien Ladegeräte L mit belegten Ladegeräten L in der Reihenfolge der Prioritäten 7 der freien Ladegeräte L ergibt sich ebenfalls der in Fig. 10 gezeigte Systemzustand: Zunächst wird das Ladegerät L1 gekoppelt, und zwar mit dem Ladegerät L13, wobei die Ladegeräte L5 und L9 mitverkoppelt werden. Analog erfolgt danach eine Kopplung des Ladegeräts L2 mit dem Ladegerät L14 unter Mitverkopplung der Ladegeräte L6 und L10, dann eine Kopplung des Ladegeräts L3 mit dem Ladegerät L11 unter Mitverkopplung des Ladegeräts L7 und schließlich eine Kopplung des Ladegeräts L4 mit dem Ladegerät L16 unter Mitverkopplung der Ladegeräte L8 und L12.

Der Linear-Feed-Forward-Betrieb, bei dem unter bestimmten Kriterien die Kopplung innerhalb der Korrespondenzgruppen K jedenfalls für bestimmte Korrespondenzgruppen K gesperrt wird, dient also insbesondere dem Ziel, die Weiterleitung von Ladeleistung an möglichst viele Ladegeräte L möglichst hoher Priorität 7 zu ermöglichen.

Dies hat beispielsweise Vorteile bei Betriebshöfen 1, bei denen entsprechend der in Fig. 10 dargestellten Matrix-Struktur Elektrofahrzeuge 4 auf hierzu korrespondierenden Stellplätzen 11 hintereinander derart abgestellt sind oder werden, dass ein späteres Ausfahren nach dem First-in-First-Out-Prinzip nur so erfolgen kann, dass die zuerst eingefahrenen Fahrzeuge 4 auch wieder zuerst ausfahren.

Vorstellen kann man sich dies anhand der Fig. 10 dadurch, dass auch die Elektrofahrzeuge 4 der Reihe nach, ähnlich wie in der schematischen Anordnung gemäß Fig. 10 mit Ladegeräten L dargestellt, auf Stellplätzen 11 geparkt werden. Die Einfahrt der Fahrzeuge 4 erfolgt hierbei in der Gruppe G und in Richtung der höchsten Priorität 7, am Stellplatz 11 korrespondierend zu dem Ladegerät L1 wird also ein Elektrofahrzeug 4 zuerst abgestellt, und dann nach Einfahrzeitpunkt sukzessive auf den Stellplätzen 11, die jeweils zum freien Ladegerät L mit freiem Anschluss 6 der höchsten Priorität 7 entsprechen. Folglich kann vorgesehen sein, dass in dem Depot 1 das Fahrzeug, das dem Ladegerät L17 zugeordnet ist, erst dann ausfahren kann, wenn das Ladegerät L13 seinen Akkumulator 3 vollständig geladen hat. Eine Ausnahme hiervon ist gegeben, wenn eine vollständige Ladung der Akkumulatoren 3 aufgrund kürzerer Strecken nicht erforderlich ist.

Grundsätzlich ist es also möglich, dass das System 2 im Verlauf des Zuordnungs- und Ladeprozesses das Kopplungsschema ändert. Hierbei ist bevorzugt, dass zunächst freie Ladegeräte L mit demjenigen belegten Ladegerät L gekoppelt werden, das entweder innerhalb derselben Gruppe G oder innerhalb derselben Korrespondenzgruppe K die höchste Priorität 7 aufweist und entweder direkt an dieses Ladegerät der höchsten Priorität 7 angrenzt oder über weitere freie Ladegeräte L mit dem Ladegerät L der höchsten Priorität 7 koppelbar ist.

In einem weiteren Kopplungsschema, was vorzugsweise auf das erste Kopplungsschema folgt, wird die Kopplung innerhalb jedenfalls bestimmter Korrespondenzgruppen K blockiert, so dass eine Kopplung nur innerhalb der Gruppen G erfolgt. Hier erfolgt die Kopplung vorzugsweise wiederum mit demjenigen der belegten Ladegeräte L, das die höchste Priorität 7 hat und entweder unmittelbar an ein freies Ladegerät L, das es zu koppeln gilt, angrenzt oder über ein oder mehrere freie Ladegeräte L mit dem belegten Ladegerät L der höchsten Priorität 7 koppelbar ist. Dieses Kopplungsschema kann beispielsweise dann aktiviert werden, wenn bereits mehr als 20 %, besonders bevorzugt mehr als 40 % der Ladegeräte L einen Akkumulator 3 geladen haben und im Anschluss wieder zu freien Ladegeräten L geworden sind.

Es ist jedoch möglich, den Kopplungsmodus wieder auf den ursprünglichen Modus zu ändern, insbesondere wenn alle Korrespondenzgruppen K mit mindestens einem belegten Ladegerät L auch weitere belegte Ladegeräte L aufweisen.

Fig. 11 zeigt in einem Beispiel den Fall, dass die Korrespondenzgruppen K4, K5 jeweils mehrere belegte Ladegeräte L aufweisen bzw. alle Ladegeräte L der Gruppe G3 freie Ladegeräte L sind. Im Darstellungsbeispiel gemäß Fig. 11 werden entsprechend des ursprünglichen Kopplungsschemas, also die freien Ladegeräte L1, L5 und L9 mit dem belegten Ladegerät L13, die freien Ladegeräte L2, L6 und L10 mit dem belegten Ladegerät L14 und die freien Ladegeräte L4, L8 und L12 mit dem belegten Ladegerät L16 gekoppelt. Die freien Ladegeräte L15 und L19 werden innerhalb derselben Korrespondenzgruppe K4 und K5 jeweils mit dem Ladegerät L der höchsten Priorität 7 gekoppelt, das Ladegerät L15 also mit dem Ladegerät L14 und das Ladegerät L19 mit dem Ladegerät L18.

Die freien Ladegeräte L3, L7 und L11 werden hingegen mit keinem anderem Ladegerät L gekoppelt. Hier befindet sich kein belegtes Ladegerät L in derselben Gruppe G, mit dem eine Kopplung vorgenommen werden könnte. Ferner befinden sich hier keine belegten Ladegeräte in derselben Korrespondenzgruppe K, mit denen eine Kopplung erfolgen könnte. Folglich wird in diesem Ausführungsbeispiel keine Kopplung der freien Ladegeräte L3 L7 und L11 vorgenommen.

Das Beispiel aus Fig. 11 zeigt, dass ein ungenutztes Brachliegen von freien Ladegeräten L trotz der materialschonenden Konstruktion des Systems 2 selten und eher dann vorkommt, wenn bereits fast Akkumulatoren 3 vollständig geladen sind.

Grundsätzlich ist es jedoch auch denkbar, dass ein freies Ladegerät L ohne belegtes Ladegerät L in derselben Gruppe G3 und Korrespondenzgruppe K3 mit einem freien Ladegerät L, das bereits mit einem belegten Ladegerät L gekoppelt ist, ergänzend gekoppelt wird. Dies erfolgt vorzugsweise derart, dass ergänzende Ladeleistung demjenigen Ladegerät L hinzugefügt wird, das eine maximale Ladeleistung noch nicht erreicht hat und/oder das mit einem Ladegerät L der höchsten Priorität 7 derjenigen belegten Ladegeräte L verbunden ist, die mit dem freien Ladegerät verbindbar ist.

Im Beispiel könnte also das Ladegerät L 11 in einer Alternative (nicht dargestellt) mit dem freien Ladegerät L10, L15, L12 oder über die weiteren Ladegeräte L7 und L3 mit dem Ladegerät L19 zusätzlich verbunden werden. Eine zusätzliche Verbindung mit dem belegten Ladegerät L13 wird durch die angrenzenden freien Ladegeräte L10 und L12, die bereits mit den belegten Ladegeräten L14 und L16 gekoppelt sind, blockiert.

Hier ist zunächst bevorzugt, dass eine ergänzende Kopplung mit dem freien Ladegerät L10 erfolgt, das mit dem belegten Ladegerät L14 der höheren Priorität 7 bzw. höchsten Priorität 7 unter den belegten Ladegeräten L, die erreichbar sind, ausgestattet ist. Das Ladegerät L11 könnte also dem Ladegerät L10 zugeschaltet werden und ergänzend das Ladegerät L14 speisen. Alternativ könnte das Ladegerät L11 dem Ladegerät L15 zugeschaltet werden, um ebenfalls das Ladegerät L14 ergänzend mit Ladeenergie zu versorgen.

Wenn das Ladegerät L14 hingegen eine maximale Ladeleistung von beispielsweise 200 kW hat, eine Zuschaltung also nicht möglich oder nicht wirksam wäre, wird das Ladegerät L11 vorzugsweise dem Ladegerät L12 zugeschaltet, um das Ladegerät L16 mit zusätzlicher Ladeenergie zu versorgen. Entsprechendes erfolgt vorzugsweise auch mit den Ladegeräten L7 und/oder L3, die entweder mit einem benachbarten Ladegerät L derselben Korrespondenzgruppe K1, K2 oder über freie Ladegeräte L derselben Gruppe G3 ergänzend gekoppelt werden können.

Grundsätzlich kann es vorgesehen sein, nach Abschluss der Kopplungen, wie in den Anwendungsbeispielen beschrieben, ungenutzte bzw. noch nicht gekoppelte freie Ladegeräte L zu identifizieren und wie hier beschrieben mit anderen Ladegeräten L zu koppeln. Hierfür wird insbesondere jedes noch freie Ladegerät L an die benachbarte Verkettung angebunden, deren "Zielladegerät" die höchste Priorität 7 aufweist und dessen maximale Ladeleistung nicht erreicht ist.

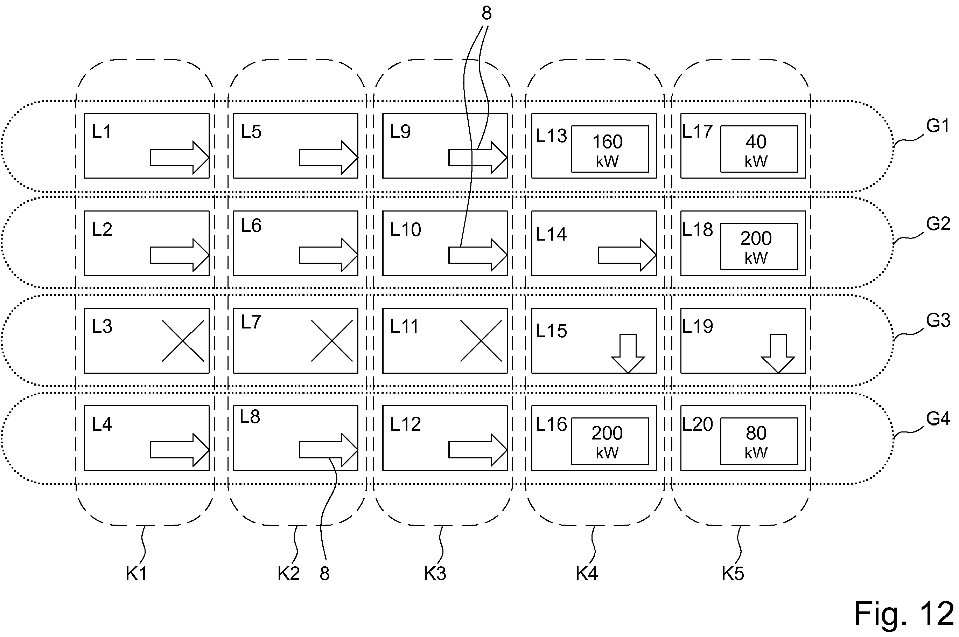

In Fig. 12 ist ein weiterer Zustand des vorschlagsgemäßen Systems 2 dargestellt, bei dem vorgesehen ist, dass eine Kopplung ausschließlich innerhalb derselben Gruppe G erfolgt und ergänzend ist vorgesehen, dass, nur wenn in derselben Gruppe G keine Kopplung möglich ist, eine Kopplung innerhalb derselben Korrespondenzgruppe K4, K5 erfolgt oder geprüft wird. Dieser Betrieb kann beispielsweise erfolgen, wenn die Ladegeräte L des Systems 2 nahezu alle bereits zugeordnet sind oder waren und nur Ladegeräte L einer geringen Priorität oder nur eine geringe Anzahl belegter Ladegeräte L, vorzugsweise weniger als 50 % der Ladegeräte L, insbesondere weniger als 40 % der Ladegeräte L, noch belegt sind.

Dies führt im Beispiel gemäß Fig. 12 dazu, dass die Ladegeräte L der Gruppen G1 und G2 nur gruppenintern gekoppelt werden mit demjenigen Ladegerät L, das innerhalb der Gruppen G1, G2 die höchste Priorität 7 aufweist und unmittelbar mit einem der freien Ladegeräte L der jeweiligen Gruppe G koppelbar ist oder über ein weiteres freies Ladegerät L der Gruppe G1, G2. In der Gruppe G3 befinden sich freie Ladegeräte L, jedoch kein belegtes Ladegerät L. Daher wird in dieser Gruppe G3 die Kopplung innerhalb der Korrespondenzgruppen K ergänzend freigegeben.

Die freien Ladegeräte L3, L7 und L11 der dritten Gruppe G3 werden dennoch nicht mit anderen Ladegeräten L gekoppelt, da auch in der jeweiligen Korrespondenzgruppe K1, K2, K3 kein belegtes Ladegerät L vorhanden ist. Alternative Lösungen können denen entsprechen, die in Verbindung mit dem Beispiel aus Fig. 11 diskutiert worden sind.

Die freien Ladegeräte L15 und L19 der dritten Gruppe G3 können mangels belegtem Ladegerät L in der Gruppe G3 zwar nicht innerhalb der Gruppe G3 mit einem belegten Ladegerät L gekoppelt werden, die Freigabe zur Kopplung innerhalb der jeweiligen Korrespondenzgruppe K3, K4 führt jedoch vorzugsweise zu einer Kopplung innerhalb dieser Korrespondenzgruppen K4, K5. Das freie Ladegerät L15 wird hierbei mit demjenigen belegten Ladegerät L direkt oder über ein weiteres freies Ladegerät L gekoppelt, das die höchste Priorität 7 aufweist.

Im Darstellungsbeispiel ist jedoch das freie Ladegerät L14 derselben Korrespondenzgruppe K4, das benachbart bzw. unmittelbar koppelbar mit dem Ladegerät L15 ist, innerhalb der Gruppe G2 gekoppelt, so dass eine Weiterleitung der Ladeleistung des freien Ladegeräts L15 über das Ladegerät L14 nicht möglich oder nicht vorgesehen ist. Folglich wird das freie Ladegerät L15 mit dem belegten Ladegerät L16 gekoppelt und die Ladeleistung des Ladegeräts L15 dem Ladegerät L16 zur Verfügung gestellt.

Wenn das freie Ladegerät L19 entsprechend innerhalb der Korrespondenzgruppe K5 mit dem Ladegerät L18 der höchsten Priorität 7 gekoppelt würde, könnte das Ladegerät L18 möglicherweise eine maximal zusätzliche Ladeleistung überschreiten bzw. würde das Ladegerät L18 die im Darstellungsbeispiel angenommene maximale Ladeleistung von 200 kW überschreiten. Dies wird vorzugsweise überprüft durch die Steuerung 9.

Eine Kopplung erfolgt vorzugsweise grundsätzlich nur unter der Voraussetzung, dass eine vorgegebene maximale Ladeleistung nicht überschritten wird. Da dies beispielsweise hier der Fall wäre oder andere Kriterien gegen eine Kopplung mit dem Ladegerät L18 vorliegen, erfolgt eine Kopplung des Ladegeräts L19 mit dem Ladegerät L20.

Eine Kopplung eines freien Ladegeräts L mit einem belegten Ladegerät L der höchsten Priorität 7 erfolgt also bevorzugt unter der zusätzlichen Voraussetzung, dass die maximale Ladeleistung nicht erreicht ist oder überschritten wird. Wenn bei dem Ladegerät L der höchsten Priorität 7 die maximale Ladeleistung durch Kopplung überschritten würde, erfolgt die Kopplung vorzugsweise mit einem anderen Ladegerät L, insbesondere dem Ladegerät L der (nächst) niedrigeren Priorität 7, bei dem die maximale Ladeleistung durch Kopplung nicht überschritten wird.

Der in Fig. 12 dargestellte Zustand wird aber auch erreicht, wenn eine Kopplung ausgehend von den freien Ladegeräten L in der Reihenfolge ihrer Priorität 7 mit dem jeweils erreichbaren belegten Ladegerät L der höchsten Priorität 7 bei automatischer Mitverkopplung von dazwischen liegenden freien Ladegeräten L erfolgt. In diesem Fall würde das Ladegerät L1 unter Mitverkopplung der Ladegeräte L5 und L9 mit dem Ladegerät L13 gekoppelt, anschließend würde das Ladegerät L2 unter Mitverkopplung der Ladegeräte L6, L10 und L14 mit dem Ladegerät L18 gekoppelt. Das Ladegerät L3 würde nicht gekoppelt, da kein belegtes Ladegerät erreichbar ist. Dann würde das Ladegerät L4 unter Mitverkopplung der Ladegeräte L8 und L12 mit dem Ladegerät L16 gekoppelt. Als nächstes würde das Ladegerät L7 betrachtet und aufgrund mangelnder erreichbarer belegter Ladegeräte L nicht gekoppelt. Als nächstes würde das Ladegerät L11 betrachtet und aufgrund mangelnder erreichbarer belegter Ladegeräte L nicht gekoppelt. Schließlich würde das Ladegerät L15 mit dem Ladegerät L16 gekoppelt, da eine Weiterleitung an L13 über das Ladegerät L14 nicht mehr möglich ist und das Ladegerät L19 würde mit dem Ladegerät L20 gekoppelt, da beim Ladegerät L18 bereits die maximale Ladeleistung erreicht ist.

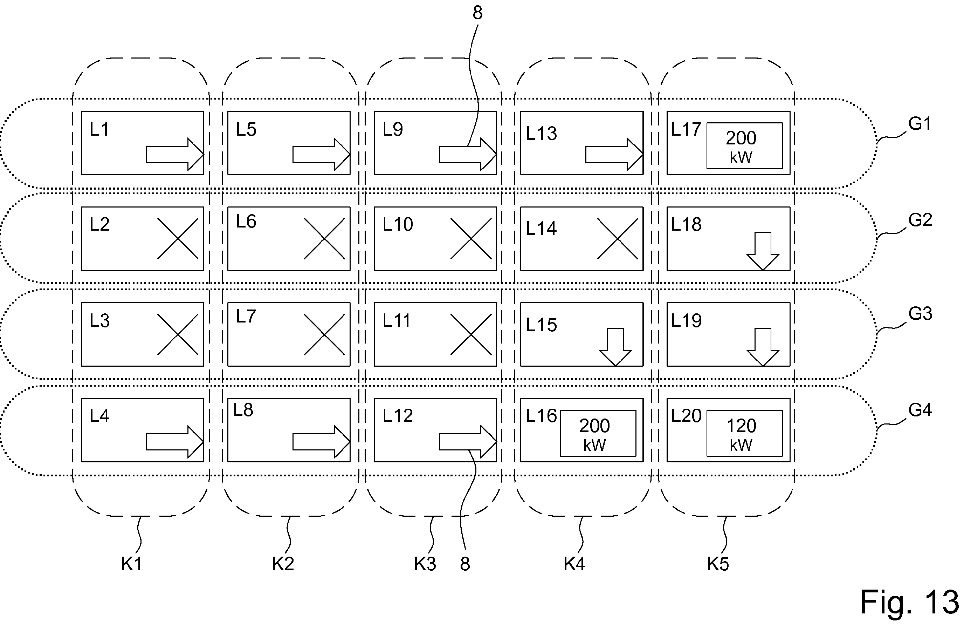

Entsprechend verhält es sich in dem in Fig. 13 dargestellten Zustand. Auch hier erfolgen Kopplungen mit einem belegten Ladegerät L zusätzlich zu Kopplungen innerhalb der Gruppe G nur unter der Voraussetzung, dass eine maximale Ladeleistung - hier 200 kW - nicht überschritten wird.

In der ersten Gruppe G1 ist diese maximale Ladeleistung beim Ladegerät L17 bereits durch die Kopplung der Ladegeräte L1, L5, L9 und L13 mit dem Ladegerät L17 erreicht. Die Ladegeräte L18 und L19 werden daher nicht mit dem Ladegerät L der höchsten Priorität 7 gekoppelt, sondern abweichend davon innerhalb der Korrespondenzgruppe K5 mit dem Ladegerät L20.

Auch beim Ladegerät L16 ist bereits die höchste vorgegebene Ladeleistung - hier 200 kW - dadurch erreicht, dass die freien Ladegeräte L der Gruppe G4, die direkt oder über ein oder mehrere freie Ladegeräte L mit dem Ladegerät L16 koppelbar sind, mit diesem gekoppelt sind und ergänzend innerhalb der Korrespondenzgruppe K4 das Ladegerät L15 mit dem Ladegerät L16 gekoppelt ist. Eine ergänzende Kopplung des Ladegeräts L14 über das freie Ladegerät L15 mit dem belegten Ladegerät L16 erfolgt dann nicht, wenn die Ladeleistung für das Ladegerät L16 infolge dessen eine maximale Ladeleistung - hier 200 kW - überschreiten würde. Insofern wird im Darstellungsbeispiel gemäß Fig. 13 das Ladegerät L14 nicht gekoppelt, obwohl es grundsätzlich über das Ladegerät L15 mit dem Ladegerät L16 koppelbar wäre.

Nicht gekoppelt werden auch die Ladegeräte L2, L3, L6, L7, L10 und L11, da hier weder in derselben Gruppe G noch in derselben Korrespondenzgruppe K ein belegtes Ladegerät L vorhanden ist. Ein abweichendes Schema hierzu ist im Zusammenhang mit Fig. 11 erläutert worden, bei dem Ladeleistung eines freien "Spender"-Ladegeräts L einem anderen freien Ladegerät L weiterleitet wird und das "Empfänger"-Ladegerät L diese Ladeleistung in seiner Gruppe G oder Korrespondenzgruppe K, die von der des "Spender"-Ladegeräts L, abweicht, weiterleitet.

Die freien Ladegeräte L18 und L19 sind hier ausnahmsweise nicht mit dem Ladegerät der höchsten Priorität 7 innerhalb der Korrespondenzgruppe K5 gekoppelt, da das Ladegerät L17 der höchsten Priorität 7 innerhalb dieser Korrespondenzgruppe K5 bereits eine maximale Ladeleistung erreicht hat. Folglich werden die freien Ladegeräte L18 und L19 mit dem belegten Ladegerät L20 gekoppelt.

Abweichend von den bisher erläuterten Möglichkeiten eines belegten Ladegerätes L als Ausgangspunkt für eine Kopplung bzw. Verkettung und eines freien Ladegeräts L als Ausgangspunkt für eine Kopplung bzw. Verkettung kann es auch möglich sein, ein bereits gekoppeltes, freies Ladegerät L aus Ausgangspunkt zu wählen.

Bei dieser Variante und/oder bei der Variante der Kopplung ausgehend von einem freien Ladegerät L ist es, insbesondere wenn eine bereits beschriebene Kopplung "um die Ecke" erfolgt bzw. ermöglicht ist, möglich, alle freien Ladegeräte zu koppeln, sodass es nicht oder nur in geringerem Ausmaß dazu kommt, dass - wie in den Beispielen aus den Fig. 11 bis 13 - die Ladeleistung einiger Ladegeräte L ungenutzt bleibt.

Weiter ist es so möglich, vielfältige Formen der Verkettung bzw. Kopplung zu realisieren. Bei den bisher beschriebenen Beispielen ist jeweils eine lineare oder strahlenartige und/oder eine kreuzartige bzw. kreuzförmige Kopplung (vgl. z. B. das Ladegerät L7 in Fig. 9) realisiert. Prinzipiell können jedoch beliebige andere Kopplungsgeometrien realisierbar sein, beispielsweise T-förmig, H-förmig, treppenförmig, Kombinationen davon o. dgl. Vorzugsweise ist keine X-förmige Kopplungsgeometrie vorgesehen, da bei der dargestellten bevorzugten Ausführungsform nur "horizontale" und "vertikale" Verkopplungen bzw. Verkopplungen innerhalb derselben Gruppe G und/oder Korrespondenzgruppe K vorgesehen sind. In einer alternativen Ausführungsform, insbesondere bei einer Abweichung der matrixartigen Verschaltung bzw. Verkettung der Ladegeräte bzw. wenn auch "diagonale" Verkettungen möglich sind, kann jedoch auch eine X-förmige Kopplungsgeometrie möglich oder vorgesehen sein.

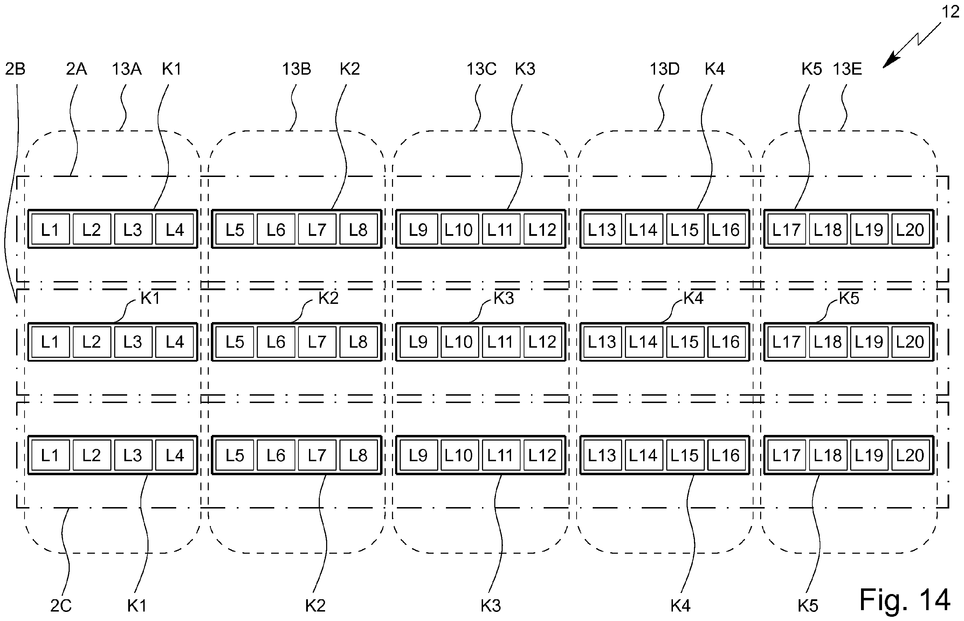

In Fig. 14 ist eine stark vereinfachte schematische Ansicht eines Gesamtsystems 12 dargestellt, beispielsweise zum Betrieb eines größeren Depots 1. Das Gesamtsystem 12 weist vorzugsweise mindestens zwei vorschlagsgemäße Systeme 2, im Darstellungsbeispiel drei vorschlagsgemäße Systeme 2A, 2B, 2C auf.

Die jeweiligen Systeme 2A, 2B, 2C können ihrerseits wieder so aufgebaut sein und entsprechende Eigenschaften haben, wie im Zusammenhang mit den vorhergehenden Figuren beschrieben. Hierzu werden dieselben Bezugszeichen für Ladegeräte L verwendet, wie zuvor. Eine "Spalte" bzw. Korrespondenzgruppe K des jeweiligen Systems 2 bildet hierbei vorzugsweise mit hierzu korrespondierenden Korrespondenzgruppen K der anderen Systeme 2 einen Korrespondenzverbund 13. Ein Korrespondenzverbund 13 ist hierbei die Menge zueinander korrespondierender Korrespondenzgruppen K unterschiedlicher Systeme 2A, 2B, 2C.

Im Darstellungsbeispiel ist vorgesehen, dass jeweils die erste Korrespondenzgruppe K1 der unterschiedlichen Systeme 2A, 2B, 2C zusammengenommen einen Korrespondenzverbund 13A bilden.

Ein Korrespondenzverbund 13 ist hierbei vorzugsweise dadurch gekennzeichnet, dass eine automatische Zuordnung zunächst alle Ladegeräte L1-L4 eines Korrespondenzverbunds 13 mit den Ladegeräten L der höchsten Prioritäten 7 zuordnet, bevor ein Korrespondenzverbund 13 mit Ladegeräten L niedriger Prioritäten 7 berücksichtigt wird. Erst wenn alle Ladegeräte L1-L4 der jeweils ersten Korrespondenzgruppe K1 aller Systeme 2A, 2B, 2C zugeordnet worden sind, also zu belegten Ladegeräten L geworden sind oder, nach vollständiger Ladung eines Akkumulators 3 zwar wieder freie Ladegeräte L sind, jedoch mit belegtem Anschluss 6, erfolgt die Zuordnung von Ladegeräten L des zweiten Korrespondenzverbunds 13B mit Ladegeräten L5-L8 niedriger Prioritäten 7 bzw. mit Ladegeräten L der jeweils zweiten Korrespondenzgruppe K2. Auf diese Weise kann die Ladeleistung der jeweiligen Systeme 2A, 2B, 2C optimal ausgenutzt werden.

Analog zu der Sichtweise, dass die Gruppen G und Korrespondenzgruppen K eine zweidimensionale Matrix bilden, kann das Gesamtsystem 12 als dreidimensionale Matrix angesehen werden, bei der die Korrespondenzverbünde 13 die zweidimensionalen Matrizen bzw. Systeme 2 miteinander verknüpfen. Insbesondere kann vorgesehen sein, dass innerhalb des Gesamtsystems 12 die Prioritäten 7 der Ladegeräte L jeweils einmalig sind und auch die Ladegeräte L innerhalb eines Korrespondenzverbunds 13 jeweils über Kopplungseinrichtungen 8 miteinander koppelbar sind. In diesem Fall wäre jedes Ladegerät L zu (genau) sechs Ladegeräten L benachbart bzw. mit (genau) sechs Ladegeräten L unmittelbar koppelbar.

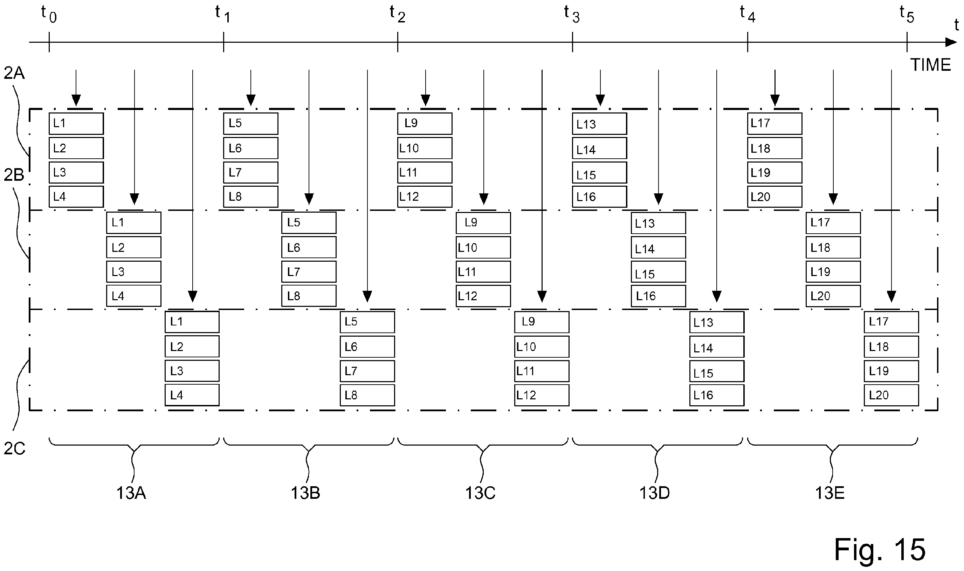

Bevorzugt erfolgt die Zuordnung auch hier zunächst mit den Ladegeräten L der höchsten Priorität 7. In Fig. 15 ist dies exemplarisch anhand eines zeitlichen Verlaufs schematisch dargestellt. Demnach erfolgt vorzugsweise zeitlich aufeinanderfolgend eine Zuordnung zunächst aller Ladegeräte L des ersten Korrespondenzverbunds 13A mit den Ladegeräten L der ersten Korrespondenzgruppen K1, bevor eine Zuordnung von Akkumulatoren 3 zu den Ladegeräten L der zweiten Korrespondenzgruppe K2 des jeweiligen Systems 2A, 2B, 2C bzw. der Ladegeräte L des zweiten Korrespondenzverbunds 13B erfolgt.

Im Darstellungsbeispiel gemäß Fig. 15 erfolgt die Zuordnung innerhalb des Korrespondenzverbunds 13 jeweils so, dass vom ersten System 2A zunächst jeweils das freie Ladegerät L zugeordnet wird, das unter den freien Ladegeräten L mit freiem Anschluss 6 die höchste Priorität 7 innerhalb der ersten Korrespondenzgruppe K aufweist. Erst im Anschluss erfolgt entsprechendes mit der Zuordnung von Akkumulatoren 3 zu den Ladegeräten L der ersten Korrespondenzgruppen K1 des oder der weiteren Systeme 2B, 2C in entsprechender Weise.

Alternativ kann jedoch auch eine Zuordnung innerhalb des Korrespondenzverbunds 13A derart erfolgen, dass von den jeweiligen Systemen 2A, 2B, 2C jeweils das Ladegerät L mit der höchsten Priorität 7 der unterschiedlichen Systeme 2A, 2B, 2C zuerst zugeordnet wird. Dann würde in zeitlicher Folge also zunächst das Ladegerät L1 des ersten Systems 2A, dann das Ladegerät L1 des zweiten Systems 2B und im Anschluss das Ladegerät L1 des dritten Systems 2C zugeordnet, bevor das Schema mit dem Ladegerät L2 des ersten Systems 2A fortsetzt. Es kann jedoch auch weitere, abweichende Schemata geben.

Wenn die ersten Korrespondenzgruppen K1 der Systeme 2A, 2B, 2C des Gesamtsystems 12 (also alle Ladegeräte L dieser Akkumulatoren 3) zugeordnet worden sind, wird die Zuordnung vorzugsweise in den zweiten Korrespondenzgruppen K2 der Systeme 2A, 2B, 2C des Gesamtsystems 12 fortgesetzt. Auch hier kann beispielsweise zunächst jeweils das Ladegerät L der freien Ladegeräte L mit freiem Anschluss 6 der jeweils höchsten Priorität 7 zugeordnet werden.

In einer Alternative werden jedoch zunächst alle Ladegeräte L desselben Systems 2A zugeordnet, bevor die Ladegeräte L eines zweiten oder weiteren Systems 2B, 2C zugeordnet werden. Auch hier besteht die Alternative, dass die Zuordnung von Akkumulatoren 3 abwechselnd in allen Systemen 2A, 2B, 2C des Gesamtsystems 12 erfolgt, so dass jede weitere Zuordnung mit einem Ladegerät L eines anderen Systems 2 erfolgt und in diesen Systemen 2 jeweils wiederum mit dem freien Ladegerät L unter den freien Ladegeräten L mit freiem Anschluss 6 mit der höchsten Priorität 7.

Im Darstellungsbeispiel gemäß Fig. 15 wird in dem jeweiligen Korrespondenzverbund 13 jedoch zunächst jeweils die Korrespondenzgruppe K2 des jeweiligen Systems 2 vollständig zugeordnet, bevor eine weitere Zuordnung innerhalb der zweiten Korrespondenzgruppe K2 eines anderen oder weiteren Systems 2B, 2C erfolgt.

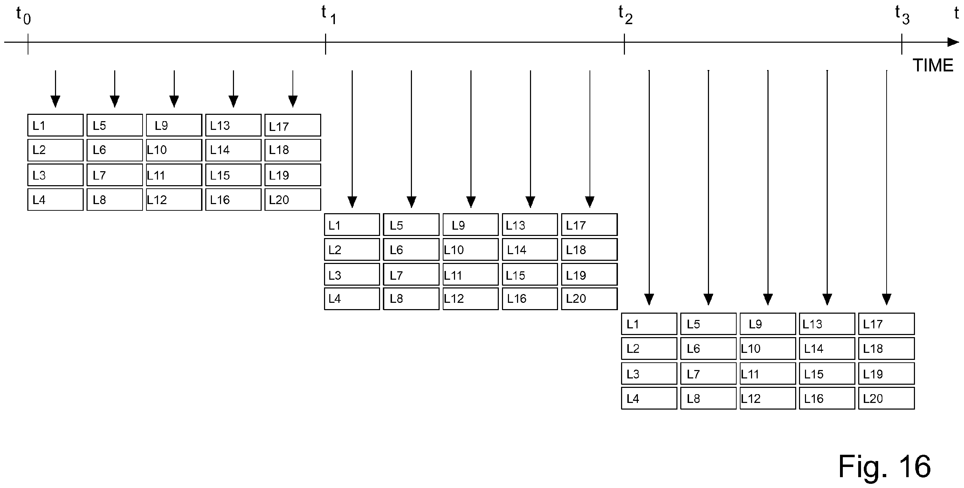

Fig. 16 zeigt hierzu eine Alternative, bei der zunächst alle Ladegeräte L eines Systems 2 zugeordnet werden, bevor die Ladegeräte L eines weiteren Systems 2 zugeordnet werden. Dies ist zwar grundsätzlich möglich, das zuvor im Zusammenhang mit Fig. 15 beschrieben Schema hat hiergegen jedoch den Vorteil, dass die Gesamtladezeit verringert werden kann. So können in dem Schema gemäß Fig. 15 zunächst alle Ladegeräte L des ersten Korrespondenzverbunds 13A mit höchster Ladeleistung geladen werden, da in allen Fällen die weiteren Ladegeräte L mit niedriger Priorität 7 mit dem jeweiligen Ladegerät L der hohen Priorität 7 koppelbar sind oder gekoppelt werden. Im Darstellungsbeispiel können also die ersten zwölf Akkumulatoren 3 verteilt auf jeweils vier Ladegeräte L1-L4 der jeweils ersten Korrespondenzgruppe K1 sehr schnell geladen werden, da die Ladeleistung - im Darstellungsbeispiel von jeweils insgesamt fünf Ladegeräten L - gemeinsam zum Laden genutzt werden kann.

Im Schema gemäß Fig. 16 wird die Ladeleistung der Ladegeräte L der weiteren Systeme 2 zunächst nicht verwendet. Dennoch ist auch dieses Schema vorteilhaft gegenüber den zuvor bekannten Verfahrensweisen zum Betrieb bzw. Steuern einer größeren Anzahl von Ladegeräten L, z. B. zum Betrieb eines Depots 1 für Elektrofahrzeuge 4.

Im Schema gemäß Fig. 16 werden die ersten zwanzig Elektrofahrzeuge 4 vollständig dem ersten System 2A zugeordnet, während diese im Schema gemäß Fig. 15 gleichmäßig auf alle verfügbaren Systeme 2A, 2B, 2C verteilt werden. Entsprechend sind bei der in Fig. 15 dargestellten Verfahrensweise die Zeiträume zwischen der Belegung einer Korrespondenzgruppe K, z. B. der ersten Korrespondenzgruppe K1, und der Belegung der folgenden Korrespondenzgruppe, z. B. der ersten Korrespondenzgruppe K2, pro System 2A, 2B, 2C größer als bei der in Fig. 16 dargestellten Reihenfolge der Belegungen.

Demzufolge kann, entsprechend der zuvor dargestellten Kopplungsmechanismen, bei dem Beispiel nach Fig. 15 den bereits eingelaufenen Elektrofahrzeugen 4 über einen längeren Zeitraum die kombinierte Leistung mehrerer Ladegeräte L zur Verfügung gestellt werden, bevor Anteile der Systemleistung den später einlaufenden Elektrofahrzeugen 4 zur Verfügung gestellt wird. Prinzipiell wird nach Fig. 15 die mögliche Systemleistung aller Systeme (hier 2A bis 2C) allen eingehenden Elektrofahrzeugen 4 direkt zugänglich gemacht, während dies nach Fig. 16 zeitlich versetzt bzw. "blockweise" erfolgt.

Primär für Anwendungen für Flotten von Elektrofahrzeugen 4, die zeitlich versetzt einlaufen, bietet sich ein Vorgehen nach Fig. 15 an, um ein Maximum an Ladeleistung zu ermöglichen. Ein Vorgehen nach Fig. 16 ist beispielsweise geeignet für Flotten mit unkritischen Ladezeiträumen. Über die blockweise Nutzung der Ladesysteme könnte hier beispielsweise die Leistungsaufnahme reduziert werden, indem die Ladevorgänge in Summe verlängert werden. Dies kann beispielsweise hilfreich sein, um Leistungsspitzen zu reduzieren, indem der Gesamtenergiebedarf zeitlich gestreckt wird, wobei die Amplituden reduziert werden.

Die Elektrofahrzeuge 4 bzw. Akkumulatoren 3 werden vorzugsweise nachdem First-In-First-Out-Prinzip neuen Touren bzw. Einsätzen zugeordnet. Dies kann automatisch oder automatisiert, beispielsweise über die Steuerung 9 erfolgen. Für die Zuordnung kann auch die (optionale) Signaleinrichtung 10 derart angesteuert werden, dass eine Tour und/oder ein Einsatz des jeweiligen Elektrofahrzeugs 4 angezeigt wird, insbesondere durch die Steuerung 9 gesteuert.

In Bezug auf die Ausführungsbeispiele bedeutet dies vorzugsweise, dass zunächst das Elektrofahrzeug 4, das oder dessen Akkumulator 3 dem Ladegerät L mit der höchsten Priorität 7 zugeordnet ist, einer Tour zugeordnet wird und weitere Elektrofahrzeuge 4 in der Reihenfolge, wie sie den Ladegeräten L ursprünglich zugeordnet worden sind.

Abweichend hiervon kann vorgesehen sein, dass gezielt Elektrofahrzeuge 4, deren Akkumulatoren 3 noch nicht vollständig geladen sind und/oder deren Akkumulatoren 3 Ladegeräten L niedrigerer Priorität 7 zugeordnet sind, besonderen, insbesondere kurzen, Touren zugeordnet werden.

Beispielsweise kann oder können Elektrofahrzeuge 4, deren Akkumulatoren 3 der Korrespondenzgruppe K5 mit dem Ladegeräten L17-L20 der niedrigsten Priorität 7 zugeordnet ist/sind, gezielt bestimmten, insbesondere kurzen, Touren zugeordnet werden, obwohl auch Elektrofahrzeuge 4 mit vollständig geladenem Akkumulator 3 zugeordnet oder angeschlossen an Ladegeräte L höchster Prioritäten 7 verfügbar wären.

In einem weiteren, unabhängig realisierbaren Aspekt der vorliegenden Erfindung kann - insbesondere von der Uhrzeit abhängig - eine Zuordnung von Akkumulatoren 3 bzw. der hierzu korrespondierenden Elektrofahrzeuge 4 zu Ladegeräten L niedrigerer Priorität 7 erfolgen. Abweichend vom bisher beschriebenen Zuordnungsschema ist es also insbesondere möglich, Akkumulatoren 3 bzw. Elektrofahrzeuge 4 Ladegeräten L der oder den Korrespondenzgruppen K zuzuordnen, wobei die Korrespondenzgruppen K die Ladegeräte L17-L20 der niedrigsten Priorität 7 aufweisen.

Innerhalb der Korrespondenzgruppe K kann die Zuordnung wiederum mit der höchsten Priorität 7 beginnen. Hier sind jedoch auch andere Lösungen möglich.

Insbesondere ist bezugnehmend auf das Ausführungsbeispiel gemäß Fig. 14 möglich, dass in diesem abweichenden Zuordnungsschema Akkumulatoren 3 bzw. Elektrofahrzeuge 4 ausschließlich der letzten, (im Beispiel fünften) fünften Korrespondenzgruppe K5 bzw. des letzten (im Beispiel fünften) Korrespondenzverbunds 13E zugeordnet werden.

Entscheidungskriterium dafür, ob eine abweichende Zuordnung erfolgt, ist vorzugsweise die Uhrzeit der Zuordnung, also des Eintreffens der Elektrofahrzeuge 4 mit dem entsprechenden Akkumulator 3 im Depot 1, oder besondere Bedingungen wie Sonderfahrten die sich aus dem Einsatzszenario ergeben.

Primärer Anwendungsfall hier ist das Zwischenladen von Akkumulatoren 3 von Elektrofahrzeugen 4, die nach einem Einsatzstart am Morgen bereits im Verlauf des Vormittags zum Depot 1 / System 2 zurückkehren und zwischengeladen werden müssen, um im Nachmittagsbereich wiederum eine weitere, kürzere Tour zu fahren.

Die abweichende Zuordnung von Akkumulatoren 3 bzw. Elektrofahrzeugen 4 erfolgt also in diesem Beispiel unter der Voraussetzung, dass Akkumulatoren 3 von bestimmten Elektrofahrzeugen 4 am Vormittag, also beispielsweise zwischen 6.00 Uhr und 10.00 Uhr zugeordnet werden.

Abweichende Zuordnungen können insbesondere notwendig sein, um zu vermeiden, dass Elektrofahrzeuge 4, die am selben Tag noch eine Folgetour bedienen, und Elektrofahrzeuge 4, die bereits eingelaufen sind, aber erst am Folgetag die nächste Tour bedienen, sich gegenseitig blockieren.

Im Allgemeinen sind die Platzverhältnisse in Depots 1 sehr begrenzt und das Rangieren von Fahrzeugen 4 ist nicht immer ohne Weiteres möglich. Über abweichende Zuordnungen kann gewährleistet werden, dass keine Blockade der Fahrzeuge 4 erfolgt oder beispielsweise Korridore zum Rangieren von Fahrzeugen 4 freigehalten werden.

Vorzugsweise gibt es eine Vorgabe für die Anzahl von Akkumulatoren 3 bzw. Elektrofahrzeugen 4, die am selben Tag für eine zweite Tour benötigt werden. Diese Anzahl an Akkumulatoren 3 bzw. Elektrofahrzeugen 4 wird dann - vorzugsweise unter der ergänzenden Voraussetzung der Uhrzeit - den Ladegeräten L niedrigerer Priorität 7 bzw. der Korrespondenzgruppe K oder dem Korrespondenzverbund 13 niedrigerer Priorität 7 (mit Ladegeräten L niedriger Priorität 7 als andere freie Ladegeräte L von Korrespondenzgruppen K höherer Priorität 7) zugeordnet. Weitere Elektrofahrzeuge 4 bzw. Akkumulatoren 3 werden dann nach dem zuvor erläuterten Schema zugeordnet, also jeweils vorzugsweise dem Ladegerät L mit der höchsten Priorität 7.

Die abweichende Zuordnung kann dadurch erfolgen, dass mit der Signaleinrichtung 10 signalisiert wird, dass die Akkumulatoren 3 bestimmter Elektrofahrzeuge 4 mit entsprechenden Ladegeräten L verbunden werden sollen, also mittels einer Leitung 5 über den Anschluss 6 mit dem jeweiligen Ladegerät L derart verbunden werden sollen, dass der Akkumulator 3 mittels des Ladegeräts L geladen werden kann.

Die konkrete Umsetzung einer abweichenden Zuordnung ist abhängig von den Park- bzw. Ladeplätzen im Depot 1 und deren Anbindung an das Ladesystem bzw. den daraus resultierenden Prioritäten 7 an den jeweiligen Parkplätzen.

Beispielsweise kann es sinnvoll sein, "Zwischenlader" mit Folgetour am selben Tag auf Parkflächen zuzuweisen, die (in Bezug auf Fig. 14) den Korrespondenzverbünden 13C bis 13E zugeordnet sind. Fahrzeuge 4, die (anschließend) einlaufen, während die "Zwischenlader" noch geladen werden, könnten auf Parkflächen der Korrespondenzverbünde 13A und 13B zugewiesen werden, wobei die Ladung dieser Fahrzeuge 4 erst beginnt, wenn der Zwischenladungsprozess abgeschlossen ist.

Derartige abweichende Zuordnungen sind hier nur beispielhaft darstellbar, da sie direkt von den lokalen Bedingungen abhängig sind. Gegebenenfalls kann es im Rahmen solcher abweichender Zuordnungen notwendig sein, Fahrzeuge 4 über kurze Zeiträume außerhalb der Ladeplätze zwischenzuparken, um Blockaden zu vermeiden.

Es versteht sich, dass die vorliegenden Aspekte untereinander kombinierbar sind.

### Bezugszeichenliste:

- 1: Depot
- 2: System
- 3: Akkumulator
- 4: Elektrofahrzeug
- 5: Leitung
- 6: Anschluss
- 7: Priorität
- 8: Kopplungseinrichtung
- 9: Steuerung
- 10: Signaleinrichtung
- 11: Stellplatz
- 12: Gesamtsystem
- 13: Korrespondenzverbund

- G: Gruppe
- K: Korrespondenzgruppe
- L: Ladegerät
- t: Zeit

## Patentansprüche

1. Verfahren zum Laden von Akkumulatoren (3) elektrisch antreibbarer Fahrzeuge durch mehrere, innerhalb einer Gruppe (G) untereinander zur Weitergabe von Ladeleistung koppelbare Ladegeräte (L), die jeweils einen Anschluss (6) zum Laden eines der Akkumulatoren (3) aufweisen,
wobei mindestens einem im Folgenden als "belegtes Ladegerät (L)" bezeichneten Ladegerät (L) ein nicht vollständig geladener Akkumulator (3) zum Laden zugeordnet ist,
wobei mindestens einem im Folgenden als "freies Ladegerät (L)" bezeichneten Ladegerät (L) kein Akkumulator (3) zugeordnet ist oder ein zugeordneter Akkumulator (3) entweder vollständig geladen ist oder aus anderen Gründen nicht oder nicht mit der vollen, durch das zugeordnete Ladegerät (L) zur Verfügung gestellten Ladeleistung geladen wird, wobei das freie Ladegerät (L) in der Lage ist, Ladeleistung an andere Ladegeräte (L) abzugeben,
wobei ein freies Ladegerät (L) mit verfügbarem Anschluss (6) ein Ladegerät (L) ist, mit dem ein Akkumulator (3) verbunden werden kann,
wobei den Ladegeräten (L) jeweils eine Priorität (7) zugeordnet ist, wobei die Prioritäten (7) jeweils in ihrer Höhe unterschiedlich und einmalig sind,
wobei den Akkumulatoren (3) in der zeitlichen Folge des Eintreffens jeweils das Ladegerät (L) zugeordnet wird, das unter den freien Ladegeräten (L) mit verfügbarem Anschluss (6) die höchste Priorität (7) aufweist, wodurch das vormals freie Ladegerät (L) zum belegten Ladegerät (L) wird, und
wobei mindestens ein freies Ladegerät (L) automatisch mit demjenigen der belegten Ladegeräte (L) gekoppelt wird, dem unter den belegten Ladegeräten (L) die höchste Priorität (7) zugeordnet ist, sodass die Ladeleistung des mindestens einen freien Ladegeräts (L) dem belegten Ladegerät (L) der höchsten Priorität (7) zur Verfügung gestellt wird und der an das belegte Ladegerät (L) der höchsten Priorität (7) angeschlossene Akkumulator (3) mit der Summe der Ladeleistungen des belegten Ladegeräts (L) der höchsten Priorität (7) und des mindestens einen freien Ladegeräts (L) geladen wird oder ladbar ist.

2. Verfahren nach Anspruch 1, **dadurch gekennzeichnet, dass** die Ladegeräte (L) der Gruppe (G) jeweils genau zwei benachbarte bzw. unmittelbar koppelbare Ladegeräte (L) aufweisen und innerhalb der Gruppe (G) nur mit den benachbarten bzw. unmittelbar koppelbaren Ladegeräten (L) derart gekoppelt werden, dass die Ladeleistung eines freien Ladegeräts (L) einem der benachbarten bzw. unmittelbar koppelbaren Ladegeräte (L) oder über eines der benachbarten Ladegeräte (L) einem belegten Ladegerät (L) der Gruppe (G) zur Verfügung gestellt wird oder werden kann.

3. Verfahren nach Anspruch 1 oder 2, **dadurch gekennzeichnet, dass** in der Gruppe (G), in der mehrere Ladegeräte (L) belegt sind, freie Ladegeräte (L) jeweils derart gekoppelt werden, dass demjenigen der belegten Ladegeräte (L) die Ladeleistung des freien Ladegeräts (L) zur Verfügung gestellt wird, das die höchste Priorität (7) unter den belegten Ladegeräten (L) der Gruppe (G) aufweist und entweder unmittelbar benachbart bzw. koppelbar zu dem freien Ladegerät (L) vorgesehen oder nur durch weitere freie Ladegeräte (L) von dem freien Ladegerät (L) getrennt ist.

4. Verfahren nach Anspruch 3, **dadurch gekennzeichnet, dass** in der Gruppe (G) alle freien Ladegeräte (L) jeweils mit demjenigen belegten Ladegerät (L) gekoppelt werden, das unter denjenigen belegten Ladegeräten (L), die unmittelbar benachbart bzw. koppelbar oder nur durch freie Ladegeräte (L) von den belegten Ladegeräten (L) getrennt ist, die höchste Priorität (7) aufweist.

5. Verfahren nach einem der voranstehenden Ansprüche, **dadurch gekennzeichnet, dass** mindestens zwei der Gruppen (G) von jeweils untereinander zur Weitergabe von Ladeleistung koppelbaren Ladegeräten (L) vorgesehen sind, wobei jeweils - insbesondere genau - ein Ladegerät (L) jeder der Gruppen (G) zueinander korrespondieren und dass Ladegeräte (L) unterschiedlicher Gruppen (G) nur unter der Voraussetzung, dass sie zueinander korrespondieren, miteinander derart gekoppelt werden oder koppelbar sind, dass Ladeleistung von mindestens einem der zueinander korrespondierenden Ladegeräte (L) einem anderen oder über ein anderes der zueinander korrespondierenden Ladegeräte (L) zur Verfügung gestellt wird.

6. Verfahren nach Anspruch 5, **dadurch gekennzeichnet, dass** unter den zueinander korrespondierenden Ladegeräten (L) jedes Ladegerät (L) genau zwei benachbarte bzw. unmittelbar koppelbare Ladegeräte (L) aufweist und nur mit diesen genau zwei benachbarten bzw. unmittelbar koppelbaren Ladegeräten (L) koppelbar ist.

7. Verfahren nach Anspruch 5 oder 6, dadurch gekennzeichent, dass ein, mehrere oder alle unter den zueinander korrespondierenden Ladegeräten (L) befindlichen freie Ladegeräte (L) mit demjenigen der belegten Ladegeräte (L) der zueinander korrespondierenden Ladegeräte (L) gekoppelt wird, das die höchste Priorität (7) aufweist.

8. System (2) zum Laden von Akkumulatoren (3) elektrisch antreibbarer Fahrzeuge durch mehrere, innerhalb einer Gruppe (G) untereinander zur Weitergabe von Ladeleistung koppelbare Ladegeräte (L), die jeweils einen Anschluss (6) zum Laden eines der Akkumulatoren (3) aufweisen,
wobei mindestens einem im Folgenden als "belegtes Ladegerät" bezeichneten Ladegerät (L) ein nicht vollständig geladener Akkumulator (3) zum Laden zugeordnet oder zuordenbar ist,
wobei an mindestens einem im Folgenden als "freies Ladegerät" bezeichneten Ladegerät (L) kein Akkumulator (3) angeschlossen ist oder ein angeschlossener Ackumulator (3) entweder vollständig geladen ist oder aus anderen Gründen nicht geladen wird, wobei das freie Ladegerät (L) in der Lage ist, Ladeleistung an andere Ladegeräte (L) abzugeben,
wobei ein freies Ladegerät (L) mit verfügbarem Anschluss (6) ein Ladegerät (L) ist, mit dem ein Akkumulator (3) verbunden werden kann,
wobei den Ladegeräten (L) jeweils eine Priorität (7) zugeordnet ist, wobei die Prioritäten (7) jeweils in ihrer Höhe unterschiedlich und einmalig sind,
wobei das System (2) dazu ausgebildet ist, den Akkumulatoren (3) in der zeitlichen Folge des Eintreffens jeweils das freie Ladegerät (L) zuzuordnen, das unter den freien Ladegeräten (L), deren Anschluss (6) verfügbar ist, die höchste Priorität (7) aufweist, wodurch das vormals freie Ladegerät (L) zum belegten Ladegerät (L) wird, und
wobei mindestens ein freies Ladegerät (L) automatisch mit demjenigen der belegten Ladegeräte (L) koppelbar ist, dem unter den belegten Ladegeräten (L) die höchste Priorität (7) zugeordnet ist, sodass die Ladeleistung des mindestens einen freien Ladegeräts (L) an das belegte Ladegerät (L) der höchsten Priorität (7) weitergegeben wird und der an das belegte Ladegerät (L) der höchsten Priorität (7) angeschlossene Akkumulator (3) mit der Summe der Ladeleistungen des belegten Ladegeräts (L) der höchsten Priorität (7) und des mindestens einen freien Ladegeräts (L) geladen wird oder ladbar ist.

9. System nach Anspruch 8, **dadurch gekennzeichnet, dass** die Ladegeräte (L) der Gruppe (G) jeweils genau zwei benachbarte bzw. unmittelbar koppelbare Ladegeräte (L) aufweisen und innerhalb der Gruppe (G) nur mit den benachbarten bzw. unmittelbar koppelbaren Ladegeräten (L) derart koppelbar sind, dass die Ladeleistung eines freien Ladegeräts (L) einem der benachbarten bzw. unmittelbar koppelbaren Ladegeräte (L) oder über eines der benachbarten bzw. unmittelbar koppelbaren Ladegeräte (L) zur Verfügung gestellt wird oder zur Verfügung stellbar ist.

10. System nach Anspruch 8 oder 9, **dadurch gekennzeichnet, dass** mindestens zwei der Gruppen (G) von jeweils untereinander zur Weitergabe von Ladeleistung koppelbaren Ladegeräten (L) vorgesehen sind, wobei jeweils - insbesondere genau - ein Ladegerät (L) jeder der Gruppen (G) zueinander korrespondieren und dass Ladegeräte (L) unterschiedlicher Gruppen (G) nur unter der Voraussetzung, dass sie zueinander korrespondieren, miteinander derart koppelbar sind, dass Ladeleistung von mindestens einem der zueinander korrespondierenden Ladegeräte (L) einem anderen oder über ein anderes der zueinander korrespondierenden Ladegeräte (L) zur Verfügung gestellt wird.

11. Verwendung des Systems nach einem der Ansprüche 8 bis 10 zur Durchführung eines Verfahrens nach einem der Ansprüche 1 bis 7 bei einem Depot (1) zum Laden von Akkumulatoren (3) elektrisch antreibbarer Fahrzeuge (4) in Abhängigkeit von der Reihenfolge der Ankunft dieser Fahrzeuge (4) im Depot (1), wobei den Ackumulatoren (3) ankommender Fahrzeuge (4) automatisch jeweils das freie Ladegerät (L) der höchsten Priorität (7) zugeordnet wird, wodurch es zu einem neu belegten Ladegerät (L) wird.

12. Verwendung nach Anspruch 11, **dadurch gekennzeichnet, dass** das System (2) derart gesteuert wird, dass das neu belegte Ladegerät (L) zum Laden des zugeordneten Akkumulators (3) verwendet wird und dass ein oder mehrere freie Ladegeräte (L) derselben Gruppe (G) automatisch mit dem belegten Ladegerät (L) der Gruppe (G) mit der höchsten Priorität (7) gekoppelt wird/werden.

13. Verwendung nach Anspruch 11 oder 12, **dadurch gekennzeichnet, dass** ein oder mehrere freie Ladegeräte (L) von zueinander korrespondierenden Ladegeräten (L) unterschiedlicher Gruppen (G) automatisch mit dem neu belegten Ladegerät (L) der höchsten Priorität (7) unter den untereinander korrespondierenden Ladegeräten (L) gekoppelt wird/werden.

## Claims

1. Method for charging accumulators (3) of electrically drivable vehicles by means of a plurality of chargers (L) which are couplable to one another within a group (G) in order to pass on charging power and which each comprise a connection (6) for charging one of the accumulators (3),
wherein to at least one charger (L), hereinafter referred to as "occupied charger (L)", a not fully charged accumulator (3) is assigned for charging,
wherein to at least one charger (L), hereinafter referred to as "free charger (L)", no accumulator (3) is assigned or an assigned accumulator (3) is either fully charged or, for other reasons, is not charged or is not charged with the full charging power made available by the assigned charger (L), wherein the free charger (L) is capable of delivering charging power to other chargers (L),
wherein a free charger (L) with available connection (6) is a charger (L) to which an accumulator (3) can be connected,
wherein to each of the chargers (L) a priority (7) is assigned, wherein the priorities (7) are each different and unique in their level,
wherein the accumulators (3), in the time sequence of their arrival, are respectively assigned to the charger (L) which among the free chargers (L) with available connection (6) has the highest priority (7), whereby the previously free charger (L) becomes an/the occupied charger (L), and
wherein at least one free charger (L) is automatically coupled to that of the occupied chargers (L) to which the highest priority (7) is assigned to among the occupied chargers (L), so that the charging power of the at least one free charger (L) is made available to the occupied charger (L) of the highest priority (7) and the accumulator (3) connected to the occupied charger (L) of the highest priority (7) is charged or chargable with the sum of the charging powers of the occupied charger (L) of the highest priority (7) and of the at least one free charger (L).

2. Method according to claim 1, **characterized in that** the chargers (L) of the group (G) each comprise exactly two adjacent and/or directly couplable chargers (L) and are coupled within the group (G) only to the adjacent and/or directly couplable chargers (L) in such a way that the charging power of a free charger (L) is or can be made available to one of the adjacent and/or directly couplable chargers (L) or via one of the adjacent chargers (L) to an occupied charger (L) of the group (G).

3. Method according to claim 1 or 2, **characterized in that** in the group (G) in which multiple chargers (L) are occupied, free chargers (L) are respectively coupled in such a way that the charging power of the free charger (L) is made available to that one of the occupied chargers (L) which has the highest priority (7) among the occupied chargers (L) of the group (G) and is either provided directly adjacent and/or couplable to the free charger (L) or is only separated from the free charger (L) by further free chargers (L).

4. Method according to claim 3, **characterized in that**, in the group (G), all free chargers (L) are respectively coupled to that occupied charger (L) which has the highest priority (7) among those occupied chargers (L) which are directly adjacent and/or couplable or are separated from the occupied chargers (L) only by free chargers (L).

5. Method according to one of the preceding claims, **characterized in that** at least two of the groups (G) of chargers (L) are provided, the chargers (L) respectively being couplable to one another in order to pass on charging power, wherein in each case - in particular exactly - one charger (L) of each of the groups (G) corresponds to one another, and **in that** chargers (L) of different groups (G), only under the condition that they correspond to one another, are coupled or are couplable to one another in such a way that charging power from at least one of the chargers (L) corresponding to one another is made available to another or via another of the chargers (L) corresponding to one another.

6. Method according to claim 5, **characterized in that** among the chargers (L) corresponding to one another, each charger (L) comprises exactly two adjacent and/or directly couplable chargers (L) and is couplable only with these exactly two adjacent and/or directly couplable chargers (L).

7. Method according to claim 5 or 6, **characterized in that** one, multiple or all of the free chargers (L) located among the chargers (L) corresponding to one another is coupled to that one of the occupied chargers (L) of the chargers (L) corresponding to one another which has the highest priority (7).

8. System (2) for charging accumulators (3) of electrically drivable vehicles by means of a plurality of chargers (L) which are couplable to one another within a group (G) in order to pass on charging power and which each comprise a connection (6) for charging one of the accumulators (3),
wherein to at least one charger (L), hereinafter referred to as "occupied charger (L)", a not fully charged accumulator (3) is assigned or can be assigned for charging,
wherein to at least one charger (L), hereinafter referred to as "free charger", no accumulator (3) is connected or a connected accumulator (3) is either fully charged or, for other reasons, is not charged, wherein the free charger (L) is capable of delivering charging power to other chargers (L),
wherein a free charger (L) with available connection (6) is a charger (L) to which an accumulator (3) can be connected,
wherein to each of the chargers (L) a priority (7) is assigned, wherein the priorities (7) are each different and unique in their level,
wherein the system (2) is designed to assign to the accumulators (3), in the time sequence of their arrival, in each case the free charger (L) which has the highest priority (7) among the free chargers (L) whose connection (6) is available, whereby the previously free charger (L) becomes an/the occupied charger (L), and
wherein at least one free charger (L) is automatically couplable to that of the occupied chargers (L) to which the highest priority (7) is assigned to among the occupied chargers (L), so that the charging power of the at least one free charger (L) is passed on to the occupied charger (L) of the highest priority (7) and the accumulator (3) connected to the occupied charger (L) of the highest priority (7) is charged or chargable with the sum of the charging powers of the occupied charger (L) of the highest priority (7) and of the at least one free charger (L).

9. System according to claim 8, **characterized in that** the chargers (L) of the group (G) each comprise exactly two adjacent and/or directly couplable chargers (L) and within the group (G) can only be coupled to the adjacent and/or directly couplable chargers (L) in such a way that the charging power of a free charger (L) is made available or can be made available to one of the adjacent and/or directly couplable chargers (L) or via one of the adjacent and/or directly couplable chargers (L).

10. System according to claim 8 or 9, **characterized in that** at least two of the groups (G) of chargers (L) are provided, the chargers (L) respectively being couplable to one another in order to pass on charging power, wherein in each case - in particular exactly - one charger (L) of each of the groups (G) corresponds to one another, and **in that** chargers (L) of different groups (G), only under the condition that they correspond to one another, are couplable to one another in such a way that charging power from at least one of the chargers (L) corresponding to one another is made available to another or via another of the chargers (L) corresponding to one another.

11. Use of the system according to one of claims 8 to 10 for carrying out a method according to one of claims 1 to 7 at a depot (1) for charging accumulators (3) of electrically drivable vehicles (4) as a function of the sequence of arrival of these vehicles (4) at the depot (1), wherein the accumulators (3) of arriving vehicles (4) are, respectively, automatically assigned the free charger (L) of the highest priority (7), whereby it becomes a newly occupied charger (L).

12. Use according to claim 11, **characterized in that** the system (2) is controlled such that the newly occupied charger (L) is used for charging the assigned accumulator (3) and that one or more free chargers (L) of the same group (G) is/are automatically coupled to the occupied charger (L) of the group (G) with the highest priority (7).

13. Use according to claim 11 or 12, **characterized in that** one or more free chargers (L) of mutually corresponding chargers (L) of different groups (G) is/are automatically coupled to the newly occupied charger (L) of the highest priority (7) among the mutually corresponding chargers (L).

## Revendications

1. Procédé pour charger des accumulateurs (3) de véhicules à propulsion électrique au moyen de plusieurs chargeurs (L) qui peuvent être couplés entre eux dans un groupe (G) pour la transmission de la puissance de charge et qui comportent chacun une connexion (6) pour charger l'un des accumulateurs (3),
dans lequel à au moins un chargeur (L) appelé ci-après "chargeur occupé (L)" est attribué à la charge d'un accumulateur (3) qui n'est pas complétement chargé,
dans lequel à au moins un chargeur (L) appelé ci-après "chargeur libre (L)" n'est attribué aucun accumulateur (3) ou un accumulateur (3) attribué est soit complètement chargé soit, pour d'autres raisons, n'est pas chargé ou n'est pas chargé avec la pleine puissance de charge mise à disposition par le chargeur (L) attribué, le chargeur libre (L) étant capable de transférer une puissance de charge à d'autres chargeurs (L),
dans lequel un chargeur libre (L) avec une connexion (6) disponible est un chargeur (L) auquel un accumulateur (3) peut être connecté,
dans lequel une priorité (7) est attribuée à chacun des chargeurs (L), les priorités (7) étant chacune différente en hauteur et unique,
dans lequel les accumulateurs (3), dans l'ordre chronologique de leur arrivée, sont respectivement attribués au chargeur (L) qui a la plus haute priorité (7) parmi les chargeurs libres (L) avec connexion (6) disponible, ce qui fait que le chargeur (L) précédemment libre devient un/le chargeur occupé (L), et
dans lequel au moins un chargeur libre (L) est automatiquement couplé à celui des chargeurs occupés (L) auquel la priorité (7) la plus haute parmi les chargeurs occupés (L) est attribuée, de sorte que la puissance de charge du au moins un chargeur libre (L) soit mise à la disposition du chargeur occupé (L) de la plus haute priorité (7) et que l'accumulateur (3) connecté au chargeur occupé (L) de la plus haute priorité (7) soit chargé ou puisse être chargé avec la somme des puissances de charge du chargeur occupé (L) de la plus haute priorité (7) et du au moins un chargeur libre (L).

2. Procédé selon la revendication 1, **caractérisé en ce que** les chargeurs (L) du groupe (G) comportent chacun exactement deux chargeurs (L) voisins et/ou directement accouplables et sont couplés à l'intérieur du groupe (G) uniquement aux chargeurs (L) voisins et/ou directement accouplables de telle sorte que la puissance de charge d'un chargeur libre (L) est ou peut être mise à la disposition d'un des chargeurs (L) voisins et/ou directement accouplables ou, par l'intermédiaire d'un des chargeurs (L) voisins, à un chargeur occupé (L) du groupe (G).

3. Procédé selon la revendication 1 ou 2, **caractérisé en ce que**, dans le groupe (G) dans lequel plusieurs chargeurs (L) sont occupés, des chargeurs libres (L) sont couplés respectivement de telle sorte que la puissance de charge du chargeur libre (L) est mise à la disposition de celui des chargeurs occupés (L) qui a la priorité (7) la plus haute parmi les chargeurs occupés (L) du groupe (G) et qui est soit directement voisin et/ou accouplable, soit séparé du chargeur libre (L) uniquement par d'autres chargeurs libre (L).

4. Procédé selon la revendication 3, **caractérisé en ce que**, dans le groupe (G), tous les chargeurs libre (L) sont respectivement couplés au chargeur occupé (L) qui a la priorité (7) la plus haute parmi les chargeurs occupés (L) qui sont directement voisins et/ou accouplable ou sont seulement séparés des chargeurs occupés (L) par des chargeurs libre (L).

5. Procédé selon l'une des revendications précédentes, **caractérisé en ce qu'**il est prévu au moins deux des groupes (G) de chargeurs (L), qui peuvent être couplés respectivement les uns aux autres pour la transmission de la puissance de charge, un chargeur (L) de chacun des groupes (G) correspondant respectivement - en particulier précisément - à un autre, et **en ce que** des chargeurs (L) de différents groupes (G) sont ou peuvent être couplés les uns aux autres uniquement à la condition qu'ils se correspondent les uns aux autres, de telle manière que la puissance de charge d'au moins un des chargeurs (L) correspondant les uns aux autres soit mise à la disposition d'un autre ou par l'intermédiaire d'un autre des chargeurs (L) correspondant les uns aux autres.

6. Procédé selon la revendication 5, **caractérisé en ce que** parmi les chargeurs (L) correspondant les uns aux autres, chaque chargeur (L) comporte exactement deux chargeurs (L) voisins et/ou directement accouplables et peut seulement être couplé à ces exactement deux chargeurs (L) voisins et/ou directement accouplables.

7. Procédé selon la revendication 5 ou 6, **caractérisé en ce qu'**un, plusieurs ou tous les chargeurs libres (L) situés parmi les chargeurs (L) correspondant les uns aux autres sont couplés avec celui des chargeurs occupé (L) des chargeurs (L) correspondant les uns aux autres qui a la plus haute priorité (7).

8. Système (2) pour charger des accumulateurs (3) de véhicules à propulsion électrique au moyen de plusieurs chargeurs (L) qui peuvent être couplés entre eux dans un groupe (G) pour la transmission de la puissance de charge et qui comportent chacun une connexion (6) pour charger l'un des accumulateurs (3),
dans lequel à au moins un chargeur (L) appelé ci-après "chargeur occupé (L)" est attribué ou peut être attribué à la charge d'un accumulateur (3) qui n'est pas complétement chargé,
dans lequel à au moins un chargeur (L) appelé ci-après "chargeur libre (L)" n'est connecté aucun accumulateur (3) ou un accumulateur (3) connecté est soit complètement chargé soit, pour d'autres raisons, n'est pas chargé, le chargeur libre (L) étant capable de transférer une puissance de charge à d'autres chargeurs (L),
dans lequel un chargeur libre (L) avec une connexion (6) disponible est un chargeur (L) auquel un accumulateur (3) peut être connecté,
dans lequel une priorité (7) est attribuée à chacun des chargeurs (L), les priorités (7) étant chacune différente en hauteur et unique,
dans lequel le système (2) est conçu pour attribuer aux accumulateurs (3), dans l'ordre chronologique de leur arrivée, respectivement le chargeur (L) qui a la plus haute priorité (7) parmi les chargeurs libres (L) dont la connexion (6) est disponible, ce qui fait que le chargeur (L) précédemment libre devient un/le chargeur occupé (L), et
dans lequel au moins un chargeur libre (L) peut être automatiquement couplé à celui des chargeurs occupés (L) auquel la priorité (7) la plus haute parmi les chargeurs occupés (L) est attribuée, de sorte que la puissance de charge du au moins un chargeur libre (L) soit transmise au chargeur occupé (L) de la plus haute priorité (7) et que l'accumulateur (3) connecté au chargeur occupé (L) de la plus haute priorité (7) soit chargé ou puisse être chargé avec la somme des puissances de charge du chargeur occupé (L) de la plus haute priorité (7) et du au moins un chargeur libre (L).

9. Système selon la revendication 8, **caractérisé en ce que** les chargeurs (L) du groupe (G) comportent chacun exactement deux chargeurs (L) voisins et/ou directement accouplables et peuvent être couplés à l'intérieur du groupe (G) uniquement aux chargeurs (L) voisins et/ou directement accouplables de telle sorte que la puissance de charge d'un chargeur libre (L) est ou peut être mise à la disposition d'un des chargeurs (L) voisins et/ou directement accouplables ou par l'intermédiaire d'un des chargeurs (L) voisins et/ou directement accouplables.

10. Système selon la revendication 8 ou 9, **caractérisé en ce qu'**il est prévu au moins deux des groupes (G) de chargeurs (L), qui peuvent être couplés respectivement les uns aux autres pour la transmission de la puissance de charge, un chargeur (L) de chacun des groupes (G) correspondant respectivement - en particulier précisément - à un autre, et **en ce que** des chargeurs (L) de différents groupes (G) peuvent être couplés les uns aux autres uniquement à la condition qu'ils se correspondent les uns aux autres, de telle manière que la puissance de charge d'au moins un des chargeurs (L) correspondant les uns aux autres soit mise à la disposition d'un autre ou par l'intermédiaire d'un autre des chargeurs (L) correspondant les uns aux autres.

11. Utilisation du système selon l'une des revendications 8 à 10 pour mettre en oeuvre un procédé selon l'une des revendications 1 à 7 dans un dépôt (1) pour charger des accumulateurs (3) de véhicules (4) à propulsion électrique en fonction de la séquence d'arrivée de ces véhicules (4) dans le dépôt (1), les accumulateurs (3) des véhicules (4) arrivant étant automatiquement attribués respectivement au chargeur libre (L) de la plus haute priorité (7), ce qui fait qu'il devient un chargeur nouvellement occupé (L).

12. Utilisation selon la revendication 11, **caractérisée en ce que** le système (2) est commandé de telle manière que le chargeur nouvellement occupé (L) est utilisé pour charger l'accumulateur (3) attribué et qu'un ou plusieurs chargeurs libres (L) du même groupe (G) est/sont automatiquement couplés au chargeur occupé (L) du groupe (G) ayant la priorité (7) la plus haute.

13. Utilisation selon la revendication 11 ou 12, **caractérisée en ce qu'**un ou plusieurs chargeurs libres (L) de chargeurs mutuellement correspondants (L) de différents groupes (G) est/sont automatiquement couplés au chargeur nouvellement occupé (L) de la plus haute priorité (7) parmi les chargeurs mutuellement correspondants (L).
